(19) Europäisches Patentamt
European Patent Office
Office européen des brevets

(11) EP 1 705 226 B1

(12) **EUROPEAN PATENT SPECIFICATION**

(45) Date of publication and mention of the grant of the patent:
**11.03.2015 Bulletin 2015/11**

(21) Application number: **05703551.1**

(22) Date of filing: **13.01.2005**

(51) Int Cl.:
***C08L 101/00*** *(2006.01)* ***C08J 7/00*** *(2006.01)*
***C08K 3/00*** *(2006.01)* ***C08K 5/00*** *(2006.01)*

(86) International application number:
**PCT/JP2005/000312**

(87) International publication number:
**WO 2005/068557 (28.07.2005 Gazette 2005/30)**

(54) **MULTI-COLOR COLORING LASER MARKING-USE CHROMATIC COLOR COLORANT, MULTI-COLOR COLORING LASER MARKING-USE COMPOSITION AND MOLDING CONTAINING IT, MULTI-COLOR MARKING-CARRYING MOLDING AND LASER MARKING METHOD**

FARBMITTEL MIT CHROMATISCHER FARBE ZUR VERWENDUNG BEI DER MEHRFARBIGEN LASERFARBMARKIERUNG, ZUSAMMENSETZUNG ZUR VERWENDUNG BEI DER MEHRFARBIGEN LASERFARBMARKIERUNG UND FORMKÖRPER DAMIT, FORMKÖRPER MIT MEHRFARBIGER LASERMARKIERUNG UND LASERMARKIERUNGSVERFAHREN

COLORANT DE COULEUR CHROMATIQUE POUR UNE UTILISATION DE MARQUAGE LASER DE COLORATION MULTICOLORE, COMPOSITION POUR UNE UTILISATION DE MARQUAGE LASER DE COLORATION MULTICOLORE ET MOULAGE CONTENANT CELLE-CI, MOULAGE PORTANT LE MARQUAGE MULTICOLORE ET METHODE DE MARQUAGE LASER ASSOCIEE

(84) Designated Contracting States:
**DE**

(30) Priority: **16.01.2004 JP 2004009870**
**14.09.2004 JP 2004267600**

(43) Date of publication of application:
**27.09.2006 Bulletin 2006/39**

(73) Proprietor: **Techno Polymer Co., Ltd.**
**Tokyo 104-0041 (JP)**

(72) Inventors:
- **KAWAKAMI, Kazuyoshi, c/o Techno Polymer Co., Ltd. Tokyo 1040041 (JP)**
- **KURIMOTO, Hideyuki, c/o Techno Polymer Co., Ltd. Tokyo 1040041 (JP)**
- **SHIMIZU, Akira, c/o JAPAN COLORING CO., LTD. Yokkaichi-shi Mie 5100883 (JP)**
- **KOSAKAI, Toshiyuki, c/o JAPAN COLORING CO., LTD. Yokkaichi-shi Mie 5100883 (JP)**
- **ISHIDA, Mio, c/o MITSUBISHI CHEMICAL GROUP Aoba-ku, Yokohama-shi, Kanagawa 2270033 (JP)**

(74) Representative: **TBK**
**Bavariaring 4-6**
**80336 München (DE)**

(56) References cited:
**EP-A1- 0 572 178**
**EP-A2- 0 190 997**
**JP-A- 9 071 726**
**JP-A- 11 158 389**
**JP-A- 2002 535 422**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

[Technical Field]

The present invention relates to a chromatic coloring agent for multicolor laser marking, a composition for multicolor laser marking and a molded article comprising the same, a multicolor-marked molded article, and a laser marking method. More particularly, the present invention relates to a chromatic coloring agent for multicolor laser marking capable of forming clear markings having two or more different color tones including the chromatic color derived from the chromatic coloring agent when two or more laser beams having different energy levels are irradiated onto a molded article that comprises the chromatic coloring agent, and also a composition for multicolor laser marking for forming markings having two or more different color tones by irradiation of two or more laser beams having different energy levels, a molded article comprising the composition, a multicolor-marked molded article, and a laser marking method.

[Background Art]

Laser marking methods as techniques for obtaining marks of letters, notations, designs and the like that are in a desired color on a surface of a molded article of a composition comprising a resin and the like conveniently and rapidly has received attention (see Patent Reference 1). Particularly, techniques for varying colors of these markings have been developed in recent years. For example, methods for irradiating laser beam onto a molded article comprising a material which is discolored or decolored by absorption of laser beam and a coloring material which is resistant to the effects of laser beam (see Patent References 2 and 3); a method for irradiating laser beam to a synthetic resin material for molding composed of a thermoplastic organic polymer, a mineral black pigment and a coloring agent (see Patent Reference 4); and other methods have been disclosed.

EP 0190997 (A2) discloses a process for the inscription of organic material of high molecular weight containing at least one radiation-sensitive additive capable of producing a discoloration, characterized in that laser light with a wave length lying in the near UV- and/or visible and/or near IR-region is used as radiation energy and at least one inorganic and/or organic pigment and/or one polymer-soluble dye as additive.

However, since the marked area in all of these methods is a single color, legibility and design of the marking is rather limited.

| | |
|---|---|
| [Patent Reference 1] | JP-A H05-92657 |
| [Patent Reference 2] | JP-A H06-297828 |
| [Patent Reference 3] | JP-A H08-127175 |
| [Patent Reference 4] | JP-A H07-165979 |

[Disclosure of the Invention]

[Problems to be solved by the Invention]

The present invention is intended to solve the problems described above. An objective of the present invention is to provide a chromatic coloring agent for multicolor laser marking for formulating into a molded article in order to form markings having two or more different color tones including the chromatic color derived from the chromatic coloring agent, specifically clear markings having the chromatic color derived from the chromatic coloring agent and white-based color on a surface of a molded article whose base color is black or dark-color based color; a composition for multicolor laser marking and a molded article comprising the same which are capable of forming above markings, a multicolor-marked molded article, and a laser marking method.

[Means for solving problems]

In order to attain the above-mentioned objective, the present inventors studied thermal properties of coloring agents, black substances, a relationship between an energy of laser beam to irradiate and color-formability and the like intensively. As a result, it was found that, when two or more laser beams having different energy levels were irradiated onto a polymer composition for multicolor laser marking, clear two or more markings having different color tones could be obtained, and the present invention has been accomplished.

That is, a summary of the present invention is as follows.

1. A chromatic coloring agent for multicolor laser marking, which is for forming two or more markings having different

color tones by irradiating two or more laser beams having different energy levels onto a molded article comprising the above chromatic coloring agent, a black substance which is itself depleted or discolored by receiving a laser beam, and a polymer, being characterized in that the above chromatic coloring agent has an exothermic peak in the range of 360°C or higher and 590°C or lower, as measured by differential thermal analysis.

2. The chromatic coloring agent for multicolor laser marking according to 1 above, wherein the above chromatic coloring agent comprises at least one type of backbone selected from the group consisting of a phthalocyanine backbone, a diketopyrrolopyrrole backbone, a dioxazine backbone, a quinacridone backbone, a quinophthalone backbone, a perylene backbone and a metal complex backbone.

3. A composition for multicolor laser marking, which is for forming markings having two or more different color tones by irradiation of two or more laser beams having different energy levels,

being characterized in comprising a chromatic coloring agent, a black substance which is itself depleted or discolored by receiving a laser beam, and a polymer;

wherein content of the above chromatic coloring agent is from 0.001 to 3 parts by mass with respect to 100 parts by mass of the above polymer; and

wherein content of the above black substance is from 0.01 to 2 parts by mass with respect to 100 parts by mass of the above polymer.

4. The composition for multicolor laser marking according to 3 above, wherein the above chromatic coloring agent has an exothermic peak in the range of 360°C or higher and 590°C or lower, as measured by differential thermal analysis.

5. The composition for multicolor laser marking according to 4 above, wherein the above chromatic coloring agent comprises at least one type of backbone selected from the group consisting of a phthalocyanine backbone, a diketopyrrolopyrrole backbone, a dioxazine backbone, a quinacridone backbone, a quinophthalone backbone, a perylene backbone and a metal complex backbone.

6. The composition for multicolor laser marking according to 3 above, wherein the above polymer comprises a rubber-reinforced thermoplastic resin composed of a rubber-reinforced copolymerized resin obtained by polymerizing a vinyl-based monomer containing a (meth)acrylic acid ester in the presence of a rubbery polymer; or of a mixture of the above rubber-reinforced copolymerized resin and a (co)polymer of a vinyl-based monomer.

7. The composition for multicolor laser marking according to 3 above, wherein the above polymer comprises a thermoplastic polymer and a thermosetting polymer, and wherein content of the above thermosetting polymer is from 0.01 to 20 parts by mass with respect to 100 parts by mass of the above thermoplastic polymer.

6. The composition for multicolor laser marking according to 3 above, wherein the above black substance is at least one type selected from the group consisting of carbon black, black titanium oxide and black iron oxide.

9. The composition for multicolor laser marking according to 3 above, further comprising at least one type of functionality-imparting agent selected from the group consisting of a flame retardant, an antistatic agent, an antimicrobial agent, a filler and a metallic pigment, and

wherein content of the above flame retardant is from 1 to 30 parts by mass, content of the above antistatic agent is from 0.5 to 10 parts by mass, content of the above antimicrobial agent is from 0.01 to 10 parts by mass, content of the above filler is from 1 to 30 parts by mass and content of the above metallic pigment is from 0.1 to 10 parts by mass, with respect to 100 parts by mass of the above polymer.

10. A molded article being characterized in comprising the above composition for multicolor laser marking according to 3 above.

11. A molded article being characterized in comprising the above composition for multicolor laser marking according to 6 above.

12. A molded article being characterized in comprising the above composition for multicolor laser marking according to 7 above.

13. A molded article being characterized in comprising the above composition for multicolor laser marking according to 9 above.

14. A laser marking method being characterized in comprising, irradiating the molded article according to 10 above with two or more laser beams having different energy levels to form markings having two or more different color tones.

15. The laser marking method according to 14 above, wherein the difference between wavelength of low-energy laser beam and wavelength of high-energy laser beam is 100 nm or more.

16. The laser marking method according to 15 above, wherein the above wavelength of low-energy laser beam is 1,064 nm, and the above wavelength of high-energy laser beam is 532 nm.

17. A multicolor-marked molded article whereby two or more laser beams having different energy levels were irradiated onto the molded article according to 10 above to form markings having two or more different color tones.

18. The multicolor-marked molded article according to 17 above, wherein a plurality of colors that includes white and a chromatic color were developed by laser marking.

19. The multicolor-marked molded article according to 18 above, wherein at least one place of the marked portion

is foamed.

[Effect of the Invention]

According to the present invention, multicolored, multi-tonal, distinct markings can be conveniently and rapidly formed by irradiating two or more laser beams having different energy levels onto a molded article (composition) containing a chromatic coloring agent, a specific black substance and a polymer. Therefore, plastic products such as keyboards for personal computers, game consoles, calculators and the like; buttons in automobiles, household appliances, telephones and the like; and cases can be marked with letters, notations, designs and the like. And adaptation of the present invention to various types of display applications is anticipated. Particularly, according to the laser marking method of the present invention, since it is also possible to form white or whitish colored markings on a surface of a molded article whose base color is black or dark-color based color, expressions that are extremely easy to read and distinguish can be formed. Additionally, compared to an expression obtained by printing or other methods, an expression by laser marking method has markedly superior durability in being less susceptible to deforming, rubbing off or the like of the marked portion, and maintaining a high visibility for a long time.

[Brief Description of the Drawings]

Fig. 1 is a diagram showing the laser marking method of the present invention.
Fig. 2 is a schematic cross-sectional diagram showing an example of the multicolor marked molded article of the present invention.
Fig. 3 is a schematic cross-sectional diagram showing another example of the multicolor marked molded article of the present invention.
Fig. 4 is a diagram showing the color solid of Lab color system.
Fig. 5 is a graph showing results of differential thermal analysis of β-type copper phthalocyanine pigment (1) in (I-1) of Examples.
Fig. 6 is a graph showing results of differential thermal analysis of aluminum phthalocyanine pigment (2) in (I-1) of Examples.
Fig. 7 is a graph showing results of differential thermal analysis of solvent-soluble copper phthalocyanine dye (3) in (I-1) of Examples.
Fig. 8 is a graph showing results of differential thermal analysis of diketopyrrolopyrrole-based pigment (4) in (I-1) of Examples.
Fig. 9 is a graph showing results of differential thermal analysis of dioxazine-based pigment (5) in (I-1) of Examples.
Fig. 10 is a graph showing results of differential thermal analysis of quinacridone-based pigment (6) in (I-1) of Examples.
Fig. 11 is a graph showing results of differential thermal analysis of quinophthalone-based pigment (7) in (I-1) of Examples.
Fig. 12 is a graph showing results of differential thermal analysis of perylene-based pigment (8) in (I-1) of Examples.
Fig. 13 is a graph showing results of differential thermal analysis of metal complex-based pigment (9) in (I-1) of Examples.
Fig. 14 is a graph showing results of differential thermal analysis of anthraquinone-based dye (10) in (I-1) of Examples.
Fig. 15 is a graph showing results of differential thermal analysis of perinone-based dye (11) in (I-1) of Examples.
Fig. 16 is a graph showing results of differential thermal analysis of perylene black (13) in (I-1) of Examples.
Fig. 17 is an image showing a cross-section of the white-marked portion in Example B-1.
Fig. 18 is an image showing a cross-section of the chromatic-marked portion in Example B-1.

[Brief Description of the Drawings]

1 ; molded article
2, 2a and 2b ; multicolor marked molded article
3a ; chromatic-marked portion
3b ; white-marked portion
4 ; protective layer.

[Description of the Preferred Embodiments]

Hereinafter, embodiments of the present invention will be described in detail. The present invention is in no way limited by these embodiments, and may include various modifications within the intended range thereof.

The chromatic coloring agent for multicolor laser marking (hereinafter, referred to as the "chromatic coloring agent") according to the present invention is used for formation of markings having two or more different color tones on a molded article comprising a composition for multicolor laser marking (hereinafter, referred to as the "composition of the present invention") composed of a chromatic coloring agent, a specific black substance and a polymer, by irradiation of two or more laser beams having different energy levels.

The coloration mechanism of multicolor laser marking according to the present invention is not proved, but is generally assumed to be based on the phenomenon described below. However, the coloration mechanism of the multicolor laser marking according to the present invention is not limited to the mechanism described below.

When a laser beam is irradiated onto a molded article comprising the composition of the present invention, depletion, discoloration and the like of the black substance, and decomposition, scattering and the like of the chromatic coloring agent occur according to the energy of the laser beam. The area where depletion (vaporization or the like), discoloration and the like of the black substance occurred has relatively strongly a color of substances other than the black substance, compared to unaffected area. Furthermore, the area where decomposition, scattering and the like of the chromatic coloring agent occurred has relatively a color derived from the chromatic coloring agent at reduced concentration or white, compared to unaffected area. Since the extent to which such change of color occurs varies according to the difference of energies of the laser beam irradiated, it is considered that two or more markings having different color tones can be obtained by irradiation of two or more laser beams having different energy levels. In addition, since the chromatic coloring agent usually undergoes decomposition, scattering and the like at an energy higher than the energy that causes vaporization, discoloration and the like of the black substance, it is possible to obtain a marking having a color in which the effect of the chromatic coloring agent is most evident (hereinafter, referred to simply as "color derived from the chromatic coloring agent") when a low-energy laser beam is irradiated onto a molded article whose base is in black or dark-color based color, and a marking having a color derived from the chromatic coloring agent at reduced concentration or white when a high-energy laser beam is irradiated. It is considered possible to obtain in this manner markings having two or more color tones other than black or dark-color based color that is the color of the non-irradiated area with a laser beam (base color of the molded article).

1. Chromatic coloring agent for multicolor laser marking

The chromatic coloring agent is not particularly limited insofar as it does not hinder the excellent multicolor laser marking performance of the present invention. This coloring agent has an exothermic peak in the range of 360°C or higher and 590°C or lower as measured by differential thermal analysis. The lower limit of the temperature for the range of this exothermic peak is more preferably 380°C and particularly 400°C; and the upper limit of the temperature is more preferably 585°C. In the case the temperature of the exothermic peak is too low, a marking having the color derived from the chromatic coloring agent tends to become blurred when a low-energy laser beam is irradiated. On the other hand, in the case the temperature of the exothermic peak is high, a marking having the color derived from the chromatic coloring agent at reduced concentration tends to become blurred when a high-energy laser beam is irradiated. The measurement conditions of differential thermal analysis are as described in Examples.

The chromatic coloring agent may be a combination of two or more types of chromatic coloring agents insofar as the exothermic peak temperature thereof is in the above-mentioned range. The color of the chromatic coloring agent is not particularly limited insofar as it is not black or white. It may be red-based, yellow-based, blue-based, violet-based, green-based or another color, and may be a pigment or a dye.

Examples of the chromatic coloring agent in which the temperature of the exothermic peak as measured by differential thermal analysis is in the above-mentioned range are described below. Examples of the color of each coloring agent are shown in parentheses. Examples include pigments or dyes having a phthalocyanine backbone (blue to green), pigments or dyes having a diketopyrrolopyrrole backbone (orange to red), pigments or dyes having a dioxazine backbone (violet), pigments or dyes having a quinacridone backbone (orange to violet), pigments or dyes having a quinophthalone backbone (yellow to red), pigments or dyes having an anthraquinone backbone (yellow to blue), pigments or dyes having a perylene backbone (red to violet), pigments or dyes having a perinone backbone (orange to red), pigments or dyes having a metal complex backbone (yellow to violet), indanthrone-based pigments (blue to green), triallylcarbonium-based pigments (blue), monoazo-based pigments (yellow to green), disazo-based pigments (yellow to green), isoindolinone-based pigments (yellow to violet), thioindigo-based pigments (red to violet), anthrapyridone-based dyes (yellow) and the like. When a composition (molded article) comprises a chromatic coloring agent having at least one type of backbone selected from the group consisting of a phthalocyanine backbone, a diketopyrrolopyrrole backbone, a dioxazine backbone, a quinacridone backbone, a quinophthalone backbone, an anthraquinone backbone, a perylene backbone,

a metal complex backbone and the like among those, markings having two or more different color tones including the chromatic color derived from the chromatic coloring agent can be distinctly formed on a surface of a composition (molded article) whose base color is black or dark-color based color, being preferable. Among these, a chromatic coloring agent having at least one type of backbone selected from the group consisting of a phthalocyanine backbone, a diketopyrrolopyrrole backbone, a dioxazine backbone, a quinacridone backbone, a quinophthalone backbone, a perylene backbone and a metal complex backbone is more preferable, and a chromatic coloring agent having at least one type of backbone selected from the group consisting of a phthalocyanine backbone, a diketopyrrolopyrrole backbone, and a dioxazine backbone is particularly preferred.

Specific examples are shown below.

1-1. Chromatic coloring agent having a phthalocyanine backbone

The chromatic coloring agent having a phthalocyanine backbone includes a compound represented by general formula (I) below, and this compound is pigment or dye.

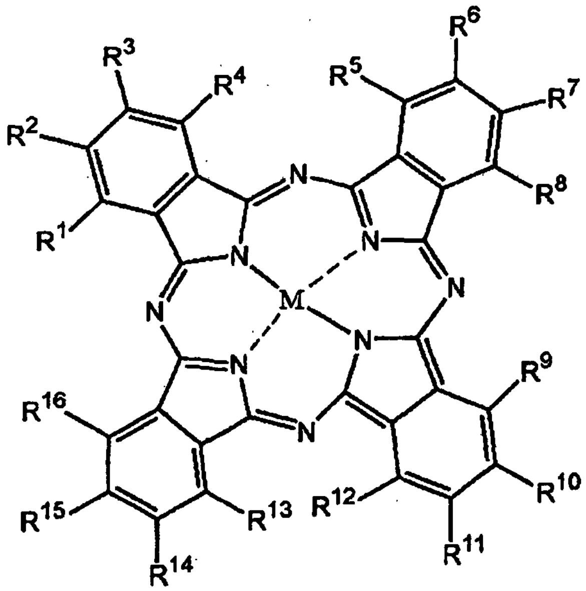

(I)

(In the formula, M is a coordinated metal atom or two hydrogen atoms, and $R^1$ through $R^{16}$ are each independently an arbitrary functional group.)

In the above general formula (I), M is preferably copper (Cu), aluminum (Al), zinc (Zn), tin (Sn), or two hydrogen atoms; copper (Cu), aluminum (A1), or zinc (Zn) is more preferred; and copper (Cu) or aluminum (Al) is particularly preferred. When M is a metal atom, the metal atom may have a ligand such as halogen atom and OH group.

Additionally, in the above general formula (I), $R^1$ through $R^{16}$ are preferably unsubstituted hydrogen atom; halogen atom such as fluorine, chlorine, bromine and iodine; substituent such as sulfonic acid amide groups ($-SO_2NHR$), $-SO_3^- \cdot NH_3R^+$ (wherein R is an alkyl group having carbon atoms of 1-20). A group in which a plurality of adjacent Rs in $R^1$ through $R^{16}$ bond together to form an aromatic ring is also preferable. An unsubstituted hydrogen atom or sulfonic acid amide group is particularly preferred.

Examples of preferable structure of the chromatic coloring agent having a phthalocyanine backbone are shown in (1) through (6) below. Among these, structures (1), (3) and (4) are particularly preferred.

(1) A copper phthalocyanine pigment (formula (II) below) where M in the above general formula (I) is Cu, and $R^1$ through $R^{16}$ are unsubstituted hydrogen atoms.

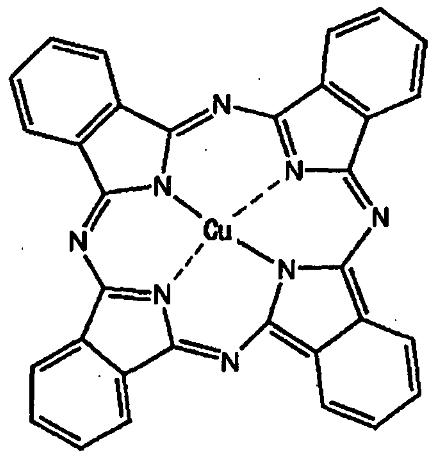

(II)

The crystal structure of the copper phthalocyanine pigment may be α-type or β-type. The average secondary particle diameter of the β-type copper phthalocyanine pigment is generally larger than 20 μm and 30 μm or less, but in the present invention, the upper limit of the diameter is preferably 20 μm and more preferably 10 μm. The lower limit of the diameter is 1 μm. The average secondary particle diameter may be measured by a laser scattering method using a particle size analyzer or the like.

(2) A halogen-containing copper phthalocyanine pigment where M in the above general formula (I) is Cu, and $R^1$ through $R^{16}$ are each independently an unsubstituted hydrogen atom or a halogen atom.

It is preferable that halogen atoms are chlorine and bromine.

(3) A solvent-soluble copper phthalocyanine dye where M in the above general formula (I) is Cu, and four to eight, preferably four, of $R^1$ through $R^{16}$ are the above sulfonic acid amide group or $-SO3^{-}\cdot NH_3R^+$, preferably a sulfonic acid amide.

The particularly preferred structure of the solvent-soluble copper phthalocyanine dye is shown in general formula (III) below.

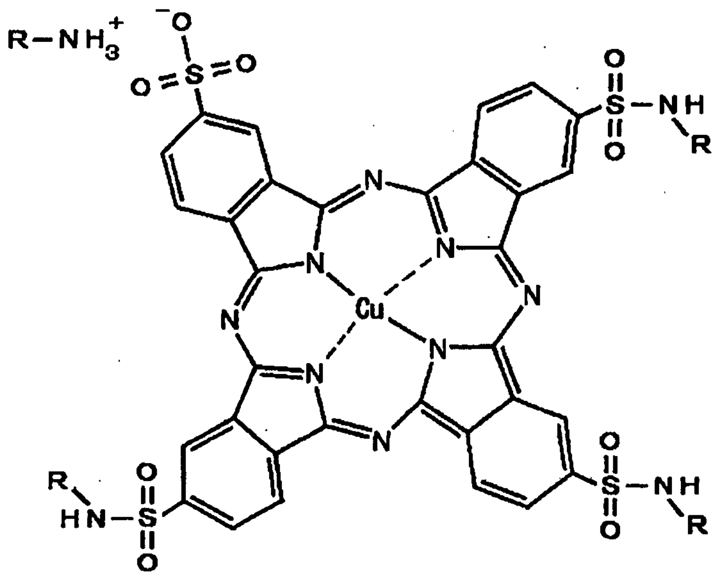

(III)

(In the formula, each R is independently an alkyl group having carbon atoms of 1-20.)

In the above general formula (III), it is particularly preferred that each R be independently an alkyl group having carbon atoms of 4-8.

(4) An aluminum phthalocyanine pigment where M in the above general formula (I) is Al, and $R^1$ through $R^{16}$ are unsubstituted hydrogen atoms.

The Al preferably has -OH or -Cl as a ligand, more preferably -OH. The particularly preferred structure of the aluminum phthalocyanine pigment is shown in formula (IV) below.

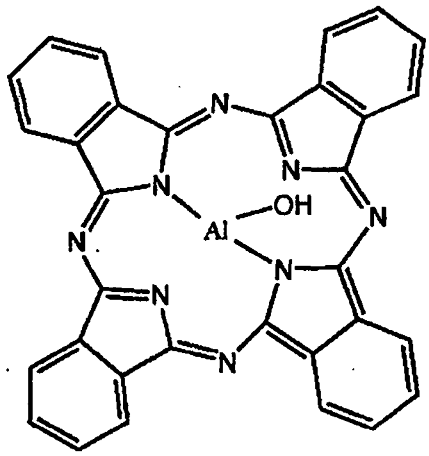

(IV)

(5) A tin phthalocyanine pigment where M in the above general formula (I) is Sn, and $R^1$ through $R^{16}$ are each independently an unsubstituted hydrogen atom or a halogen atom.

(6) A zinc phthalocyanine pigment where M in the above general formula (I) is Zn, and $R^1$ through $R^{16}$ are each independently an unsubstituted hydrogen atom or a halogen atom.

The structure of the zinc phthalocyanine pigment is shown in general formula (V) below.

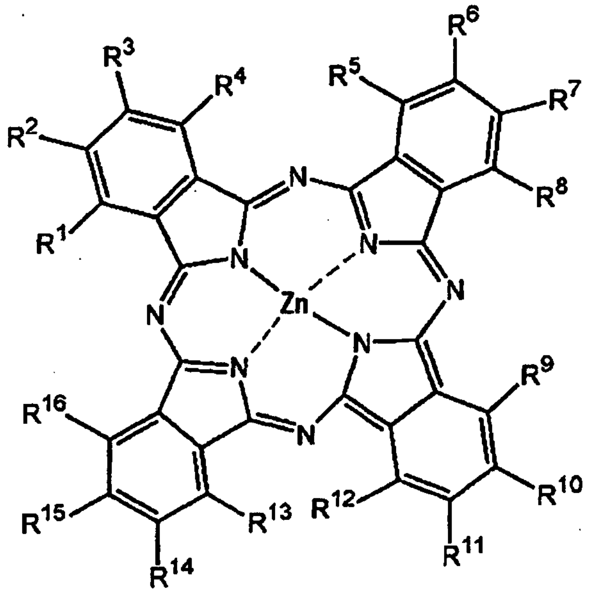

(V)

(In the formula, $R^1$ through $R^{16}$ are each independently an unsubstituted hydrogen atom or a halogen atom.)

A zinc phthalocyanine pigment where all of $R^1$ through $R^{16}$ in the above general formula (V) are hydrogen atoms is particularly preferred as the zinc phthalocyanine pigment.

1-2. Chromatic coloring agent having a diketopyrrolopyrrole backbone

The chromatic coloring agent having a diketopyrrolopyrrole backbone includes a compound represented by general formula (VI) below, and this compound is usually pigment.

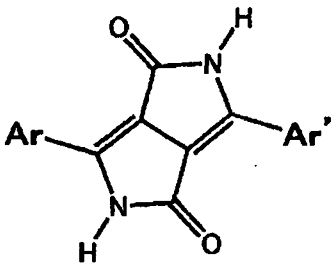

(VI)

(In the formula, Ar and Ar' are each independently an aromatic ring which may have a substituent.)

The aromatic rings constituting Ar and Ar' are not particularly limited insofar as they have aromatic properties. These rings are usually 5- or 6-membered aromatic rings composed of a single ring or 2 to 6 condensed rings, and may comprise a hetero atom such as O, S and N. Specific examples thereof include benzene ring, naphthalene ring, anthracene ring, phenanthrene ring, fluorine ring, pyridine ring, thiophene ring, pyrrole ring, furan ring, benzothiophene ring, benzofuran ring, benzopyrrole ring, imidazole ring, quinoline ring, isoquinoline ring, carbazole ring, thiazole ring, dibenzothiophene ring and the like. Among these, 6-membered ring is preferred, single 6-membered ring is more preferred, and benzene ring is particularly preferred.

The above-mentioned aromatic ring preferably has a substituent. And a preferred substituent includes a halogen atom, an alkyl group having carbon atoms of 1-12, an alkoxyl group having carbon atoms of 1-12, an amino group, -NHCOR', -COR', and -COOR' (wherein R' is an alkyl group having carbon atoms of 1-12 or a (hetero) aryl group having carbon atoms of 12 or less). Among these, halogen atom, particularly chlorine is preferred.

1-3. Chromatic coloring agent having a dioxazine backbone

The chromatic coloring agent having a dioxazine backbone includes a compound having the backbone represented by general formula (VII) below, and this compound is usually pigment.

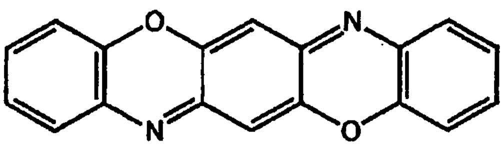

(VII)

The coloring agent comprising this backbone may be a compound having a substituent or a compound having no substituents, but is preferably a compound having a substituent. The structure of the compound having a substituent is represented by general formula (VIII) below, for example.

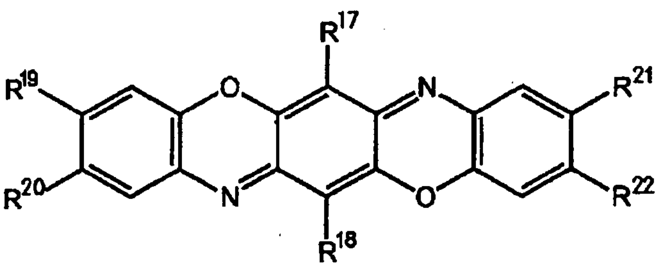

(VIII)

(In the formula, $R^{17}$ through $R^{22}$ are each independently a halogen atom, -NHCOR' (wherein R' is an alkyl group having carbon atoms of 1-12 or a (hetero) aryl group having carbon atoms of 12 or less), an alkyl group having carbon atoms of 1-12, or an alkoxyl group having carbon atoms of 1-12.)

The chromatic coloring agent having a dioxazine backbone particularly preferably has substituents $R^{17}$ and $R^{18}$ in the above general formula (VIII). Each of $R^{17}$ and $R^{18}$ is preferably a halogen atom or -NHCOR', and more preferably -NHCOR'. Each of $R^{19}$ through $R^{22}$ is preferably a halogen atom, -NHCOR', an alkyl group having carbon atoms of 1-12, an alkoxyl group having carbon atoms of 1-12 and the like, and an alkoxyl group having carbon atoms of 1-12 or -NHCOR' is more preferred.

1-4. Chromatic coloring agent having a quinacridone backbone

The chromatic coloring agent having a quinacridone backbone includes a compound having the backbone represented by general formula (IX) below, and this compound is usually pigment.

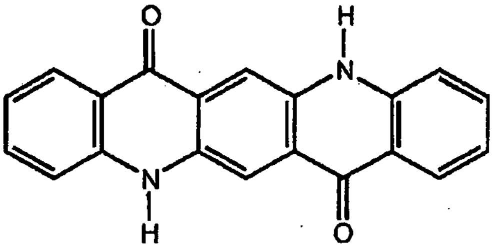

(IX)

The coloring agent comprising this backbone may be a compound having a substituent or a compound having no substituents. The structure of the compound having a substituent is represented by general formula (X) below, for example.

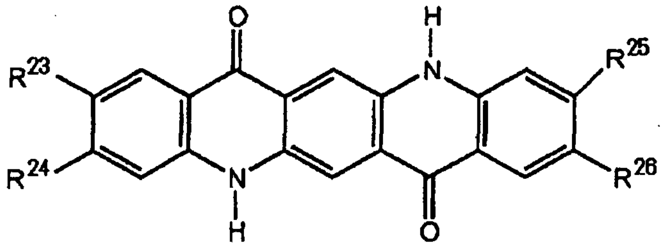

(X)

In the above general formula (X), the substituent is preferably bonded in the positions of $R^{23}$ through $R^{26}$. A preferred substituent includes a halogen atom and an alkyl group having carbon atoms of 1-12.

1-5. Chromatic coloring agent having a quinophthalone backbone

The chromatic coloring agent having a quinophthalone backbone includes a compound having the backbone represented by general formula (XI) below, and this compound is pigment or dye.

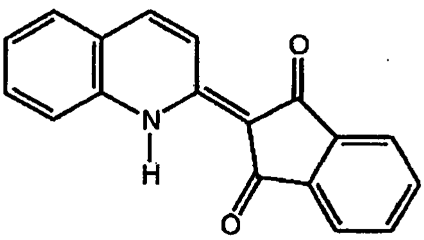

(XI)

The coloring agent comprising this backbone may be a compound having a substituent or a compound having no substituents. The structure of the compound having a substituent is represented by general formula (XII) below, for example.

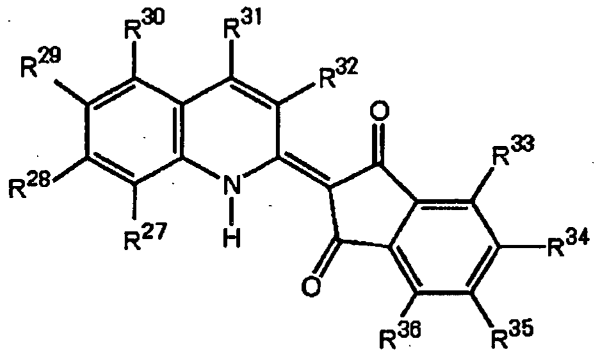

(XII)

(In the formula, $R^{27}$ through $R^{30}$ are each independently an unsubstituted hydrogen atom, a halogen atom, an alkyl group having carbon atoms of 1-12, an alkoxyl group having carbon atoms of 1-12 or a group comprising a cyclic structure; $R^{31}$ is an unsubstituted hydrogen atom, a halogen atom, an alkoxyl group having carbon atoms of 1-12, an aryloxy group having carbon atoms of 5-12, a heteroaryloxy group having carbon atoms of 1-12, an alkylthio group having carbon atoms of 1-12, an arylthio group having carbon atoms of 5-12 or a heteroarylthio group having carbon atoms of 1-12; $R^{32}$ is an unsubstituted hydrogen atom or a hydroxyl group; and $R^{33}$ through $R^{36}$ are each independently an unsubstituted hydrogen atom, a halogen atom, a carboxyl group, an alkyl group having carbon atoms of 1-12, an alkoxyl group having carbon atoms of 1-12, -COOR' or -CONR'$_2$ (wherein R' is an alkyl group having carbon atoms of 1-12 or a (hetero) aryl group having carbon atoms of 12 or less.). $R^{28}$ and $R^{29}$, $R^{31}$ and $R^{32}$, $R^{33}$ and $R^{34}$, $R^{34}$ and $R^{35}$, and $R^{35}$ and $R^{36}$ may each be bonded to each other to form a ring.)

In the above general formula (XII), when each of $R^{27}$ through $R^{30}$ is a group having a cyclic structure, the group may include a substituent represented by general formula (XIII) below.

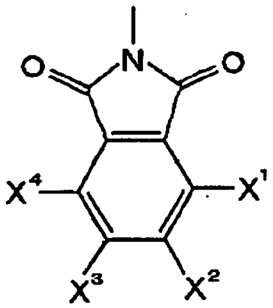

(XIII)

(In the formula, $X^1$ through $X^4$ are each independently an unsubstituted hydrogen atom or a halogen atom.)

The structure of the coloring agent when $R^{27}$ in the above general formula (XII) is a substituent represented by the above general formula (XIII) is shown in general formula (XIV) below.

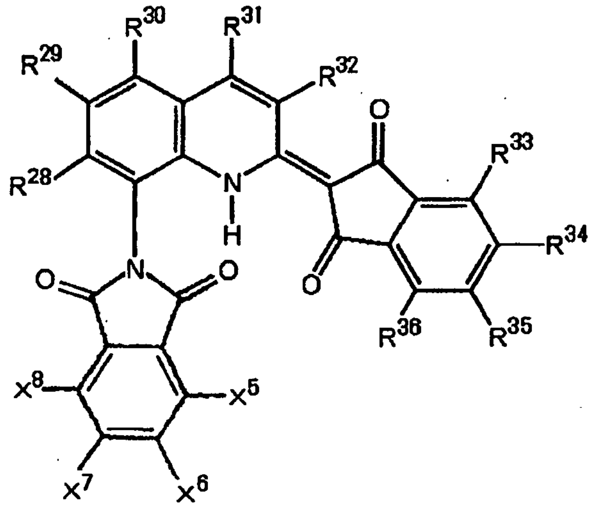

(XIV)

(In the formula, $R^{28}$ through $R^{36}$ are the same as previously described, and $X^5$ through $X^8$ are each independently an unsubstituted hydrogen atom or a halogen atom.)

The chromatic coloring agent having a quinophthalone backbone, represented by the above general formula (XIV) is preferably a compound in which each of $R^{28}$ through $R^{30}$ is an unsubstituted hydrogen atom, a halogen atom, an alkyl group having carbon atoms of 1-12, or an alkoxyl group having carbon atoms of 1-12; each of $R^{31}$ and $R^{32}$ is an unsubstituted hydrogen atom; and each of $R^{33}$ through $R^{36}$ is a halogen atom.

A more preferable coloring agent is a compound in which each of $R^{28}$ and $R^{29}$ is an unsubstituted hydrogen atom or a halogen atom; $R^{30}$ through $R^{32}$ are unsubstituted hydrogen atoms; $R^{33}$ through $R^{36}$ are halogen atoms; and $X^5$ through $X^8$ are halogen atoms. This coloring agent is usually a pigment.

A particularly preferable coloring agent is a compound in which $R^{28}$ and $R^{29}$ are unsubstituted hydrogen atoms; $R^{30}$ through $R^{32}$ are unsubstituted hydrogen atoms; $R^{33}$ through $R^{36}$ are halogen atoms ($X^9$ through $X^{12}$); and $X^5$ through $X^8$ are halogen atoms (represented by general formula (XV) below).

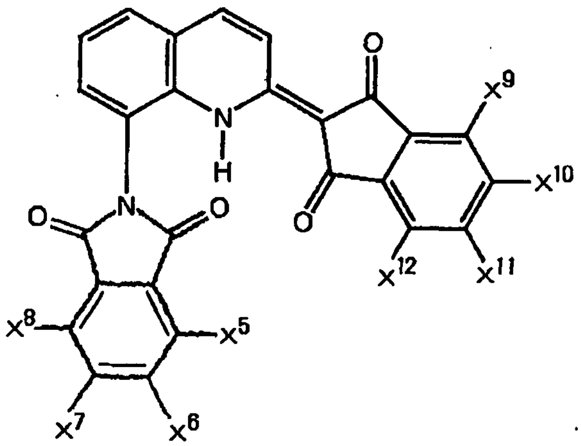

(XV)

(In the formula, $X^5$ through $X^{12}$ are each independently a halogen atom.)

A compound in which $R^{27}$ and $R^{30}$ in the above general formula (XII) are unsubstituted hydrogen atoms; and each of $R^{28}$ and $R^{29}$ is a halogen atom, an alkyl group having carbon atoms of 1-12 or an alkoxyl group having carbon atoms of 1-12 (represented by general formula (XVI) below) is usually a dye.

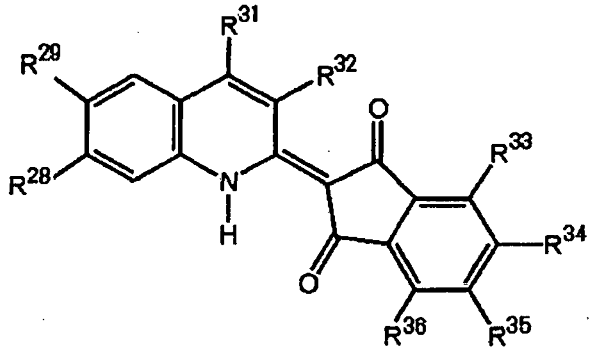

(XVI)

(In the formula, $R^{28}$ and $R^{29}$ are each independently a halogen atom, an alkyl group having carbon atoms of 1-12 or an alkoxyl group having carbon atoms of 1-12; $R^{31}$ is an unsubstituted hydrogen atom, a halogen atom, an alkoxyl group having carbon atoms of 1-12, an aryloxy group having carbon atoms of 5-12, a heteroaryloxy group having carbon atoms of 1-12, an alkylthio group having carbon atoms of 1-12, an arylthio group having carbon atoms of 5-12 or a heteroarylthio group having carbon atoms of 1-12; $R^{32}$ is an unsubstituted hydrogen atom or a hydroxyl group; $R^{33}$ through $R^{36}$ are each independently an unsubstituted hydrogen atom, a halogen atom, a carboxyl group, an alkyl group having carbon atoms of 1-12, an alkoxyl group having carbon atoms of 1-12, -COOR' or -CONR'$_2$ (wherein R' is an alkyl group having carbon atoms of 1-12 or a (hetero) aryl group having carbon atoms of 12 or less.). $R^{28}$ and $R^{29}$, $R^{31}$ and $R^{32}$, $R^{33}$ and $R^{34}$, $R^{34}$ and $R^{35}$, and $R^{35}$ and $R^{36}$ may each be bonded to each other to form a ring.)

1-6. Chromatic coloring agent having an anthraquinone backbone

The chromatic coloring agent having an anthraquinone backbone includes a compound having the backbone represented by general formula (XVII) below. The coloring agent may be a compound comprising only one of the backbone structure shown below, or may be a compound comprising two or more of these backbones.

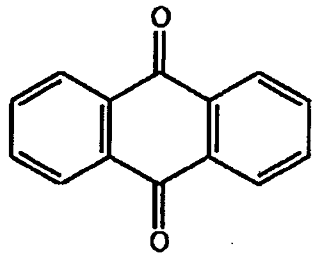

(XVII)

The chromatic coloring agent having an anthraquinone backbone is preferably a compound represented by general formula (XVIII) below, a compound comprising a plurality of the above-mentioned backbones and a compound having an amino group. Particularly a compound having two anthraquinone backbones and two amino groups is preferred.

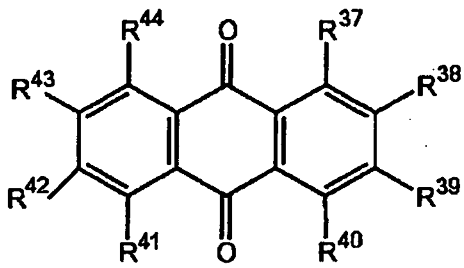

(XVIII)

(In the formula, $R^{37}$ through $R^{44}$ are each independently an unsubstituted hydrogen atom, a halogen atom, an amino group, a hydroxyl group, an alkyl group having carbon atoms of 1-12, an alkoxyl group having carbon atoms of 1-12, an aryl group having carbon atoms of 5-12, a heteroaryl group having carbon atoms of 1-12, -NHR', -NR'$_2$, -OR', -SR', -COOR' or -NHCOR' (wherein R' is an alkyl group having carbon atoms of 1-12 or a (hetero) aryl group having carbon atoms of 12 or less.).)

A compound represented by the above general formula (XVIII) is usually a yellow-to-blue dye.

A compound having two anthraquinone backbones and two amino groups includes a compound represented by general formula (XIX) below and structural formula (XX) below. These compounds are usually blue pigments.

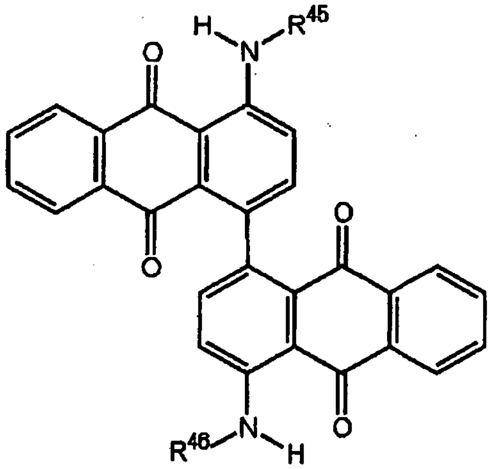

(XIX)

(In the formula, $R^{45}$ and $R^{46}$ are each independently an unsubstituted hydrogen atom, an alkyl group having carbon atoms of 1-12, an aryl group having carbon atoms of 5-12, a heteroaryl group having carbon atoms of 1-12, an alkylcarbonyl group having carbon atoms of 2-13, an arylcarbonyl group having carbon atoms of 6-13 or a heteroarylcarbonyl group

having carbon atoms of 2-13.)

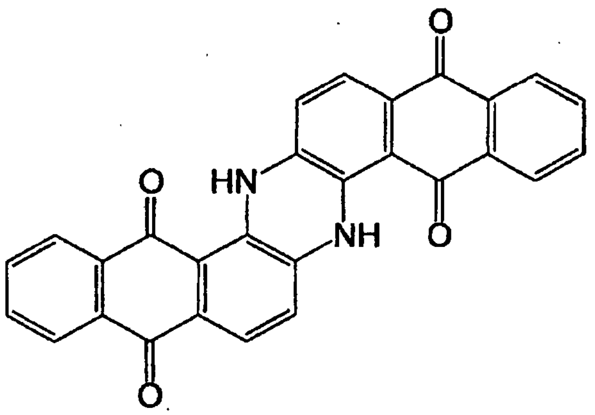

(XX)

In the compound represented by the structural formula (XX), a hydrogen atom bonded to an aromatic ring may be substituted with a halogen atom or the like.

1-7. Chromatic coloring agent having a perylene backbone

The chromatic coloring agent having a perylene backbone includes a compound represented by general formula (XXI) below, and this compound is usually a pigment.

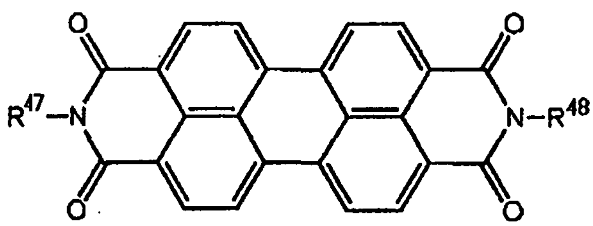

(XXI)

(In the formula, $R^{47}$ and $R^{48}$ are each independently a hydrogen atom, an alkyl group having carbon atoms of 1-12, an aryl group having carbon atoms of 5-12, a heteroaryl group having carbon atoms of 1-12, -COR' or -COOR' (wherein R' is an alkyl group having carbon atoms of 1-12 or a (hetero) aryl group having carbon atoms of 12 or less.).)

The chromatic coloring agent having a perylene backbone, represented by general formula (XXI) is preferably a coloring agent in which $R^{47}$ and $R^{48}$ are alkyl groups having carbon atoms of 1-12, and a coloring agent in which $R^{47}$ and $R^{48}$ are an alkyl groups having carbon atoms of 1-3 is more preferable.

1-8. Chromatic coloring agent having a metal complex backbone

Example of the chromatic coloring agent having a metal complex backbone includes a compound in which a metal ion is coordinated with an organic pigment backbone, and the like. This organic pigment backbone includes a backbone having an azo group, a backbone having an azomethine group, and the like. And the backbone may have a hydroxyl group, an amino group, an imino group and the like in the ortho position or the peri position of the azo group or azomethine group. The metal ion includes an ion of copper, nickel, cobalt, zinc and the like.

2. Black substance

The black substance according to the present invention is not particularly limited insofar as it is depleted or discolored by receiving a laser beam. Specifically, the black substance may be one where color of a laser beam-received area on the present composition and the present molded article comprising thereof by depleting, discoloring and the like itself according to an energy of the laser beam will be color in which the effect of components other than the black substance is most evident. The "depletion" with reference to the black substance means disappearance of the black substance due to vaporization, volatilization or decomposition, and the "discoloration" means that color of at least a portion or all of the substance becomes a color (preferably white) other than the color before reception due to decomposition and the like (for example, black changes to light blue or white). Additionally, the "black color" of the black substance is a dark-color based color including black, and an example thereof includes black-based color such as reddish black (brownish black), greenish black, bluish black, purplish black and grayish black.

A preferable black substance is one where the irradiated area turns white or color other than black when a black specimen comprising 100 parts by mass of poly methyl methacrylate and 0.1 part by mass of the black substance is irradiated with a laser beam having a wavelength of 1,064 nm under conditions of an output of 31 A and a frequency of 5.5 kHz.

The black substance may be inorganic or organic, and may be a pigment or a dye. Further, it may include a compound, a mineral and the like not included in the above examples insofar as the excellent effects of the present invention are not compromised. The black substance may be used singly or in combination of two or more types thereof. The black substance includes an inorganic pigment such as carbon black, titanium black and black iron oxide, graphite, activated carbon and the like. Among these, it is preferable that a substance in which foaming due to a laser beam irradiation described below is easily occurs, such as carbon black, titanium black and black iron oxide is mainly composed, and particularly preferred is one mainly composed carbon black.

Carbon black includes acetylene black, channel black, furnace black and the like. These can be used singly or in combination of two or more types thereof. The lower limit of the average particle diameter of the carbon black is preferably 0.1 nm, more preferably 1 nm, particularly preferably 5 nm and most preferably 10 nm. And the upper limit of the average particle diameter of the carbon black is preferably 1,000 nm, more preferably 500 nm, particularly preferably 100 nm and most preferably 80 nm. In addition, the lower limit of specific surface area by nitrogen absorption of the carbon black is preferably 1 $m^2/g$, more preferably 5 $m^2/g$, particularly preferably 10 $m^2/g$ and most preferably 20 $m^2/g$; and the upper limit thereof is preferably 10,000 $m^2/g$, more preferably 5,000 $m^2/g$, particularly preferably 2,000 $m^2/g$ and most preferably 1,500 $m^2/g$.

In the case the composition (molded article) of the present invention comprises carbon black, it is known that when a laser beam is irradiated, the carbon black absorbs the laser beam and vaporization occurs. When the carbon black vaporizes and is no longer present, color of the laser beam-irradiated area is mostly or entirely unaffected by the color (black or dark color) originating from the carbon black, and the effect of the color derived from components (mixture) other than carbon black contained in the composition (molded article) of the present invention is evident. That is, the color derived from the chromatic coloring agent is to be developed.

Titanium black is generally obtained by reduction of titanium dioxide. The lower limit of the average particle diameter of the titanium black is preferably 0.01 $\mu$m, more preferably 0.05 $\mu$m and particularly preferably 0.1 $\mu$m, and the upper limit of the average particle diameter thereof is preferably 2 $\mu$m, more preferably 1.5 $\mu$m, particularly preferably 1.0 $\mu$m and most preferably 0.8 $\mu$m.

It is known that the titanium black changes to white titanium oxide when irradiated with a laser beam. Therefore, in the case the composition (molded article) of the present invention comprises titanium black, concentration of black is reduced or entirely lost to color derived from the chromatic coloring agent at the laser beam-irradiated area, as the same case when a composition (molded article) comprising carbon black is irradiated with a laser beam.

Black iron oxide is generally an oxide of iron represented by the formula $Fe_3O_4$ or $FeO \cdot Fe_2O_3$. The lower limit of the average particle diameter of the black iron oxide is preferably 0.01 $\mu$m, more preferably 0.05 $\mu$m, particularly preferably 0.1 $\mu$m and most preferably 0.3 $\mu$m; and the upper limit of the average particle diameter thereof is preferably 2 $\mu$m, more preferably 1.5 $\mu$m, particularly preferably 1.0 $\mu$m and most preferably 0.8 $\mu$m.

It is known that the black iron oxide turns reddish white when irradiated with a laser beam. Therefore, in the case the composition (molded article) of the present invention comprises black iron oxide, concentration of black is reduced or entirely lost to color derived from the chromatic coloring agent at the laser beam-irradiated area, as the same case when a composition (molded article) comprising carbon black or titanium black is irradiated with a laser beam.

3. Polymer

The polymer (hereinafter, referred to as "polymer for laser marking ") according to the present invention is not particularly limited so far as it does not inhibit multicolor coloration by irradiating laser beam. Therefore, it is preferable that the polymer comprises a thermoplastic, a thermosetting, a photo-curable (including visible light to ultraviolet light, as well as electron beam and the like), a room-temperature-curable, and other polymers. These polymers may be any resin, elastomer, polymer alloy, rubber or the like. Further, one type of these polymers may be used, or two or more types thereof may be combined and be used jointly with another polymer not included in the above-mentioned examples. The above-mentioned "curable" polymer includes an oligomer and the like that become a polymer after hardening.

In addition, the time at which the curable polymer and the like is hardened is not particularly limited, and may be the time when the molded article has just manufactured using the composition of the present invention, the time when laser beam is irradiated onto a molded article, and the like. The curable polymer and the like may also not be cured when it is kneaded with a chromatic coloring agent, a black substance and the like, when the composition of the present

invention has just manufactured, and when the molded article of the present invention has just manufactured. In cases above, the curable polymer is included in the above-mentioned polymer for laser marking in the state of an unhardened polymer, oligomer and the like.

The thermoplastic resin includes, styrene-based resin such as polystyrene, styrene-acrylonitrile copolymer, styrene-maleic anhydride copolymer, (meth)acrylic acid ester-styrene copolymer and ABS resin; rubber-reinforced thermoplastic resin; olefin-based resin such as polyethylene, polypropylene, ionomer, ethylene-vinyl acetate copolymer, ethylene-vinyl alcohol copolymer, cyclic olefin copolymer and chlorinated polyethylene; vinyl chloride-based resin such as polyvinyl chloride, ethylene-vinyl chloride polymer and polyvinylidene chloride; acrylic resin including (co)polymer in which one or more types of (meth)acrylic acid esters are used, such as poly methyl methacrylate (PMMA); polyamide-based resin (PA) such as polyamide-6, polyamide-6,6 and polyamide-6,12; polyester-based resin such as polyethylene terephthalate (PET), polybutylene terephthalate (PBT) and polyethylene naphthalate; polyacetal resin (POM); polycarbonate resin (PC); polyallylate resin; polyphenylene ether; polyphenylene sulfide; fluorinated resin such as polytetrafluoroethylene and polyvinylidene fluoride; liquid crystal polymer; imide-based resin such as polyimide, polyamide imide and polyether imide; ketone-based resin such as polyether ketone and polyether ether ketone; sulfone-based resin such as polysulfone and polyether sulfone; urethane-based resin; polyvinyl acetate; polyethylene oxide; polyvinyl alcohol; polyvinyl ether; polyvinyl butyral; phenoxy resin; photosensitive resin; biodegradable plastic and the like. These may be used singly or in combination of two or more types thereof. Among these, rubber-reinforced thermoplastic resin, acrylic resin, polyamide-based resin (PA), polyacetal resin (POM) and urethane-based resin are preferred. The above-mentioned "rubber-reinforced thermoplastic resin" is a rubber-reinforced copolymerized resin obtained by polymerizing a vinyl-based monomer in the presence of a rubbery polymer, or a mixture of this rubber-reinforced copolymerized resin and a (co)polymer of the vinyl-based monomer, or the like.

The thermoplastic elastomer includes olefin-based elastomer, diene-based elastomer, styrene-based elastomer such as styrene-butadiene-styrene block copolymer, polyester-based elastomer, urethane-based elastomer, vinyl chloride-based elastomer, polyamide-based elastomer, fluorinated rubber-based elastomer and the like. These may be used singly or in combination of two or more types thereof.

The polymer alloy includes PA/rubber-reinforced thermoplastic resin, PC/rubber-reinforced thermoplastic resin, PBT/rubber-reinforced thermoplastic resin, PC/PMMA and the like. These may be used singly or in combination of two or more types thereof.

The rubber includes natural rubber, isoprene rubber, butadiene rubber, styrene-butadiene rubber, acrylonitrile-butadiene rubber, chloroprene rubber, butyl rubber, ethylene-propylene rubber, acrylic rubber, urethane rubber, chlorinated polyethylene, silicone rubber, epichlorohydrin rubber, fluorinated rubber, polysulfide rubber and the like. These may be used singly or in combination of two or more types thereof.

The curable polymer such as thermosetting, photo-curable and room-temperature-curable polymers include acrylic resin (including acrylic polymer having an epoxy group), epoxy resin, phenol-based resin, unsaturated polyester-based resin, alkyd resin, melamine resin, urethane-based resin, urea resin, silicone resin, polyimide resin, bismaleimide•triazine resin, furan resin, xylene resin, guanamine resin, dicyclopentadiene resin and the like. These may be used singly or in combination of two or more types thereof. These resins may comprise a curing agent and the like, or may be composed solely of a self-crosslinkable polymer. Among these, an acrylic polymer having an epoxy group is preferred.

In the case the polymer for laser marking according to the present invention comprises a polymer that is prone to foaming upon by reception of a laser beam, a development of multicolor by irradiation of a laser beam becomes clearer. Therefore, the polymer for laser marking according to the present invention is preferably a polymer in which a foaming state in a cross-section of the irradiated area is observed with an electron microscope when a specimen consisted of this polymer is irradiated with a laser beam having a wavelength of 1,064 nm under conditions of an output of 31 A and a frequency of 5.5 kHz.

When the composition (molded article) of the present invention is irradiated with a laser beam to form a foamed part at the irradiated area, a difference of refraction between the laser beam-irradiated area (foamed portion) and the surrounding non-irradiated area increases according to the behavior of the chromatic coloring agent during irradiation with a laser beam, and the marking becomes more distinct. For example, when white or a color derived from the chromatic coloring agent at reduced concentration is obtained due to decomposition, scattering and the like of the chromatic coloring agent by a high-energy laser beam, a difference of refraction between the laser beam-irradiated area (foamed portion) and the surrounding non-irradiated area increases and a clearer marking is formed.

The polymer for laser marking according to the present invention is preferably a thermoplastic resin such as (1) rubber-reinforced thermoplastic resin using methyl methacrylate as a monomer component; (2) acrylic resin including poly methyl methacrylate (PMMA), copolymer comprising methyl methacrylate monomer unit in an amount of 30 % by mass or more, and the like; (3) polyacetal resin; and (4) polyamide-based resin due to being prone to foaming.

The preferable rubber-reinforced thermoplastic resin in the present invention is a rubber-reinforced copolymerized resin (A1) obtained by polymerizing a vinyl-based monomer (b1) in the presence of a rubbery polymer (a), or a mixture of the rubber-reinforced copolymerized resin (A1) and a (co)polymer (A2) of a vinyl-based monomer (b2), wherein

content of (meth)acrylic acid ester monomer unit in the rubber-reinforced copolymerized resin (A1) or in the mixture is preferably 30 % by mass or more, more preferably 40 % by mass or more and particularly preferably 50 % by mass or more based on total monomer units constituting polymer components other than the rubbery polymer (a). If the content is out of this range, a distinct marking may be difficult to obtain.

As described above, using a (meth)acrylic acid ester is preferable to form the rubber-reinforced copolymerized resin (A1) and the (co)polymer (A2) of the vinyl-based monomer (b2), therefore it is particularly preferable to use a rubber-reinforced copolymerized resin consisted of a rubber-reinforced copolymerized resin (A1) obtained by polymerizing a vinyl-based monomer (b1) comprising a (meth)acrylic acid ester in the presence of the rubbery polymer (a), or of a mixture of a rubber-reinforced copolymerized resin (A1) and a (co)polymer (A2) of the vinyl-based monomer (b2). It is noted that when the vinyl-based monomer (b1) is polymerized in the presence of the rubbery polymer (a), a mixture of a graft polymer component in which the vinyl-based monomer (b1) is graft-polymerized with the rubbery polymer and a non-grafted (co)polymer component of the vinyl-based monomer (b1), is usually obtained.

The (meth)acrylic acid ester includes acrylic acid ester such as methyl acrylate, ethyl acrylate, n-propyl acrylate, isopropyl acrylate, n-butyl acrylate, sec-butyl acrylate, tert-butyl acrylate, isobutyl acrylate, amyl acrylate, hexyl acrylate, n-octyl acrylate, 2-ethylhexyl acrylate, cyclohexyl acrylate, dodecyl acrylate, octadecyl acrylate, phenyl acrylate and benzyl acrylate, methacrylic acid ester such as methyl methacrylate, ethyl methacrylate, n-propyl methacrylate, isopropyl methacrylate, n-butyl methacrylate, sec-butyl methacrylate, tert-butyl methacrylate, isobutyl methacrylate, amyl methacrylate, hexyl methacrylate, n-octyl methacrylate, 2-ethylhexyl methacrylate, cyclohexyl methacrylate, dodecyl methacrylate, octadecyl methacrylate, phenyl methacrylate and benzyl methacrylate, and the like. These compounds may be used singly or in combination of two or more types thereof. Among these compounds, methyl methacrylate is particularly preferred.

The rubbery polymer (a) includes polymer such as polybutadiene, butadiene-styrene copolymer, butadiene-acrylonitrile copolymer, styrene-butadiene-styrene block copolymer, styrene-isoprene-styrene block copolymer and isobutylene-isoprene copolymer; hydrogenated polymer of the above-mentioned polymer; butyl rubber; ethylene-α-olefin copolymer; ethylene-α-olefin-nonconjugated diene copolymer; silicone-based rubber; acrylic rubber and the like. These polymers may be used singly or in combination of two or more types thereof.

The vinyl-based monomer (b1) used for forming the rubber-reinforced copolymerized resin (A1) may include, besides (meth)acrylic acid esters, an aromatic vinyl compound, a cyanidated vinyl compound, a maleimide-based compound and the like. In addition, a vinyl-based compound having a functional group such as epoxy group, hydroxyl group, carboxyl group, amino group and oxazoline group may be used as needed. These compounds may be used singly or in combination of two or more.

In addition, the vinyl-based monomer (b2) used for forming the (co)polymer (A2) includes the above (meth)acrylic acid ester; an aromatic vinyl compound; a cyanidated vinyl compound; a maleimide-based compound; a vinyl-based compound having a functional group such as epoxy group, hydroxyl group, carboxyl group, amino group and oxazoline group; or the like. These compounds may be used singly or in combination of two or more. With regard to the vinyl-based monomer (b1) and the vinyl-based monomer (b2), same monomers may be used in the same or different amounts, or different types of monomers may be used.

The aromatic vinyl compound includes styrene, α-methyl styrene, o-methyl styrene, p-methyl styrene, ethyl styrene, vinyl toluene, vinyl xylene, methyl-α-methyl styrene, tert-butyl styrene, divinyl benzene, 1,1-diphenyl styrene, vinyl naphthalene, vinyl pyridine, chlorinated styrene such as monochlorostyrene and dichlorostyrene; brominated styrene such as monobromostyrene and dibromostyrene; monofluorostyrene and the like. These compounds may be used singly or in combination of two or more types thereof. Among these compounds, styrene, α-methyl styrene, and p-methyl styrene are preferred.

The cyanidated vinyl compound includes acrylonitrile, methacrylonitrile, ethacrylonitrile and the like. These compounds may be used singly or in combination of two or more types thereof. Among these compounds, acrylonitrile and methacrylonitrile are preferred.

The maleimide-based compound includes maleimide, N-methyl maleimide, N-butyl maleimide, N-phenyl maleimide, N-(2-methylphenyl)maleimide, N-(4-hydroxyphenyl)maleimide, N-cyclohexyl maleimide, imide compounds of α,β-unsaturated dicarboxylic acid, and the like. These compounds may be used singly or in combination of two or more types thereof. Introduction of the monomer unit of a maleimide-based compound into the above-mentioned polymer can be applied to an imidization after copolymerization with maleic anhydride, or the like.

The vinyl-based compound having a functional group includes glycidyl methacrylate, glycidyl acrylate, 2-hydroxyethyl methacrylate, 2-hydroxyethyl acrylate, acrylic acid, methacrylic acid, N,N-dimethylaminomethyl acrylate, N,N-dimethylaminomethyl methacrylate, N,N-dimethylaminoethyl acrylate, N,N-dimethylaminoethyl methacrylate, N,N-diethyl-p-aminomethyl styrene, N,N-diethyl-p-aminoethyl styrene, acrylamide, vinyl oxazoline and the like. These compounds may be used singly or in combination of two or more types thereof.

The amount of the vinyl-based monomer (b1) used for producing the rubber-reinforced copolymerized resin (A1), and the amount of the vinyl-based monomer (b2) used for producing the (co)polymer (A2) are as follows.

(1) In the case an aromatic vinyl compound is used, the lower limit of the amount to be used is preferably 5 % by mass, more preferably 10 % by mass and particularly preferably 20 % by mass with respect to the total amount of the vinyl-based monomers; and the upper limit thereof is preferably 100 % by mass and more preferably 80 % by mass.
(2) In the case a cyanidated vinyl compound is used, the lower limit of the amount to be used is preferably 1 % by mass, more preferably 3 % by mass and particularly preferably 5 % by mass with respect to the total amount of the vinyl-based monomer; and the upper limit thereof is preferably 50 % by mass, more preferably 40 % by mass and particularly preferably 35 % by mass.
(3) In the case a (meth)acrylic acid ester is used, the lower limit of the amount to be used is 1 % by mass and more preferably 5 % by mass with respect to the total amount of the vinyl-based monomers; and the upper limit thereof is preferably 100 % by mass, more preferably 95 % by mass and particularly preferably 90 % by mass.
(4) In the case a maleimide-based compound is used, the lower limit of the amount to be used is preferably 1 % by mass and more preferably 5 % by mass with respect to the total amount of the vinyl-based monomer; and the upper limit thereof is preferably 70 % by mass, more preferably 60 % by mass and particularly preferably 55 % by mass.
(5) In the case a vinyl-based compound having a functional group is used, the lower limit of the amount to be used is preferably 0.1 % by mass, more preferably 0.5 % by mass and particularly preferably 1 % by mass with respect to the total amount of the vinyl-based monomer; and the upper limit thereof is preferably 30 % by mass and more preferably 25 % by mass.

If the amounts of the vinyl-based monomers to be used are within the above-mentioned ranges, the effects of each monomer used are then adequately demonstrated, being preferable.

The rubber-reinforced copolymerized resin (A1) can be produced by a method such as emulsion polymerization, solution polymerization and bulk polymerization of the vinyl-based monomer (b1) in the presence of the rubbery polymer (a). Among these, emulsion polymerization is preferred.

In the case of emulsion polymerization to produce, a polymerization initiator, a chain-transfer agent (molecular weight adjuster), an emulsifier, water and the like are used.

The polymerization initiator includes a redox-type initiator by combining an organic hydroperoxide such as cumene hydroperoxide, diisopropylbenzene hydroperoxide and p-menthane hydroperoxide, and a reducing agent such as sugar-containing pyrophosphoric acid formulation and sulfoxylate formulation; a persulfate such as potassium persulfate; a peroxide such as benzoyl peroxide (BPO), lauroyl peroxide, tert-butyl peroxylaurate and tert-butylperoxy monocarbonate, and the like. These may be used singly or in combination of two or more. Moreover, an addition of the polymerization initiator to the reaction system may be all at once or continuous. The polymerization initiator is used usually in an amount from 0.1 to 1.5 % by mass and preferably from 0.2 to 0.7 % by mass with respect to the total amount of the vinyl-based monomer (b1).

The chain-transfer agent includes mercaptans such as octyl mercaptan, n-dodecyl mercaptan, tert-dodecyl mercaptan, n-hexyl mercaptan, n-hexadecyl mercaptan, n-tetradecyl mercaptan and tert-tetradecyl mercaptan, terpinolenes, $\alpha$-methylstyrene dimer and the like. These may be used singly or in combination of two or more types thereof. The chain-transfer agent is used usually in an amount from 0.05 to 2.0 % by mass with respect to the total amount of the vinyl-based monomer (b1).

The emulsifier includes sulfuric acid ester of a higher alcohol; alkyl benzene sulfonate such as sodium dodecylbenzene sulfonate; aliphatic sulfonate such as sodium lauryl sulfonate; higher aliphatic carboxylate; anionic surfactant such as rosinate; nonionic surfactant such as alkyl ester or alkyl etherof polyethylene glycol; and the like. These may be used singly or in combination of two or more types thereof. The emulsifier is used usually in an amount from 0.3 to 5.0 % by mass with respect to the total amount of the vinyl-based monomer (b1).

When emulsion polymerization is performed, all of the vinyl-based monomer (b1) may be added at once, divisionally or continuously in the presence of the total amount of the rubbery polymer (a). And all or a part of the rubbery polymer (a) may also be added during polymerization.

A latex obtained by emulsion polymerization is usually subjected to solidification by a coagulant, the polymer component is pulverized, and then the product is purified by rinsing and drying. The coagulant may be used an inorganic salt such as calcium chloride, magnesium sulfate, magnesium chloride and sodium chloride; an inorganic acid such as sulfuric acid and hydrochloric acid; an organic acid such as acetic acid and lactic acid; and the like.

Producing methods of solution polymerization and bulk polymerization can be known methods.

The graft ratio (mass ratio of the vinyl-based monomer (b1) grafted onto the rubbery polymer (a)) of a graft polymer contained in the rubber-reinforced copolymerized resin (A1) is preferably from 10 to 200 %, more preferably from 15 to 150 % and particularly preferably from 20 to 100 %. When the graft ratio of the graft polymer is too low, the molded article obtained using the composition of the present invention tends to suffer from an appearance defect and reduce impact strength. On the other hand, if the graft ratio is too high, processability is inferior.

Here, the graft ratio refers to a value obtained by the following equation:

$$\text{Graft ratio (\%)} = \{(y - x)/x\} \times 100,$$

where x (g) is the amount of the rubbery polymer (a) in 1 g of the rubber-reinforced copolymerized resin (A1), and y (g) is the amount of the insoluble component when 1 g of the rubber-reinforced copolymerized resin (A1) is dissolved in acetone (acetonitrile is used in the case an acrylic rubber is used as the rubbery polymer (a)).

The graft ratio (%) can easily be controlled by varying types or amounts of the polymerization initiator, the chain-transfer agent, the emulsifier, the solvent and the like, and by varying polymerization time, polymerization temperature and other conditions in producing the rubber-reinforced copolymerized resin (A1).

The (co)polymer (A2) can be obtained by bulk polymerization, solution polymerization, emulsion polymerization, suspension polymerization or the like.

The limiting viscosity [η] (measured in methyl ethyl ketone at a temperature of 30°C) of the acetone-soluble component contained in the (co)polymer (A2) is preferably from 0.1 to 1.0 dl/g and more preferably from 0.15 to 0.7 dl/g, according to a perspective of a physical property balance between moldability and impact resistance. This limiting viscosity [η] can be controlled by adjusting the producing method in the same manner as in production of the rubber-reinforced copolymerized resin (A1). The limiting viscosity [η] (measured in methyl ethyl ketone at a temperature of 30°C) of the acetone-soluble component contained in the rubber-reinforced thermoplastic resin is preferably from 0.1 to 0.8 dl/g and more preferably from 0.15 to 0.7 dl/g, according to a perspective of a physical property balance between moldability and impact resistance.

The rubber-reinforced thermoplastic resins may be used singly or in combination of two or more.

Preferable examples of the rubber-reinforced thermoplastic resin are shown in (1) through (4) below.

(1) A rubber-reinforced copolymerized resin obtained by polymerization of monomers containing methyl methacrylate in the presence of a rubbery polymer.
(2) A rubber-reinforced thermoplastic resin in which (1) above is combined with a (co)polymer obtained by polymerization of monomers containing methyl methacrylate.
(3) A rubber-reinforced thermoplastic resin in which (1) above is combined with a (co)polymer obtained by polymerization of monomers containing an aromatic vinyl compound and a cyanidated vinyl compound.
(4) A rubber-reinforced thermoplastic resin in which a rubber-reinforced copolymerized resin obtained by polymerization of monomers containing an aromatic vinyl compound and a cyanidated vinyl compound, and not containing methyl methacrylate in the presence of a rubbery polymer is combined with a (co)polymer obtained by polymerization of a monomer containing methyl methacrylate.

When the polymer for laser marking of the present invention contains mainly the rubber-reinforced thermoplastic resin, a composition can be obtained that gives a molded article having excellent impact resistance. When the polymer for laser marking of the present invention contains a rubber-reinforced thermoplastic resin, the lower limit of the content of the rubbery polymer (a) is preferably 0.5 % by mass, more preferably 1 % by mass, particularly preferably 3 % by mass and most preferably 5 % by mass with respect to the polymer for laser marking. The upper limit of the content thereof is preferably 60 % by mass, more preferably 40 % by mass and particularly preferably 35 % by mass. If the content of rubbery polymer (a) is too small, the molded article tends to have inferior impact resistance. On the other hand, if this content is too large, hardness and rigidity tend to decline.

The rubber-reinforced thermoplastic resin may be used singly as the polymer for laser marking, or may be used combining with other polymers. Other polymers include thermoplastic resin such as polycarbonate resin, polyester-based resin and polyamide-based resin; heat-curable resin such as acrylic resin (including acrylic polymer having an epoxy group), epoxy resin, phenol-based resin, unsaturated polyester-based resin, alkyd resin, melamine resin, urethane resin and urea resin; and the like. These other polymers may be used singly or in combination of two or more types thereof.

In addition, the acrylic resin which is preferable as the polymer for laser marking according to the present invention is a (co)polymer formed from monomers containing a (meth)acrylic acid ester, however, this (meth)acrylic acid ester preferably comprises the (meth)acrylic acid ester used for forming the rubber-reinforced thermoplastic resin described above. Other monomers include an aromatic vinyl compound; a cyanidated vinyl compound; a maleimide-based compound; a vinyl-based compound having a functional group such as epoxy group, hydroxyl group, carboxyl group, amino group and oxazoline group; and the like.

Therefore, a resin obtained using monomers containing methyl methacrylate is particularly preferred as the acrylic resin, and a (co)polymer comprising 30 % by mass or more of methyl methacrylate monomer unit, poly methyl methacrylate (PMMA) and the like are preferable.

The polystyrene-equivalent weight-average molecular weight of the acrylic resin as measured by gel permeation chromatography (GPC) is not particularly limited, but it is preferably in the range from 50,000 to 500,000, more preferably

from 70,000 to 400,000 and particularly preferably from 80,000 to 300,000.

In addition, the polyacetal resin which is preferable as the polymer for laser marking according to the present invention is a polymer compound having an oxymethylene group ($-CH_2O-$) as a primary constituent unit. This polyacetal resin may be any of a polyoxymethylene homopolymer, a copolymer (including block copolymers) comprising other constituent units besides the oxymethylene group, and a terpolymer. And the molecular structure thereof may be linear, branched, or cross-linked. Moreover, this polyacetal resin may also have a functional group such as carboxyl group and hydroxyl group. Further, this polyacetal resin may be used singly or in a combination of two or more.

In addition, the polyamide resin which is preferable as the polymer for laser marking according to the present invention is a polymer compound having an acid amide bond (-CO-NH-) in its principal chain. This polyamide resin is usually produced by polymerization of a cyclic lactam or an amino acid, or by polycondensation of a dicarboxylic acid and a diamine. Therefore, this polyamide resin may be used as a homopolyamide, a copolyamide or the like. A monomer that can be polymerized singly includes ε-caprolactam, aminocaproic acid, enantholactam, 7-aminoheptanoic acid, 11-aminoundecanoic acid, 9-aminononanoic acid, piperidone and the like.

Further, the dicarboxylic acid that is used in polycondensation of a dicarboxylic acid and a diamine includes adipic acid, sebacic acid, dodecane dicarboxylic acid, glutaric acid, terephthalic acid, 2-methyl terephthalate, isophthalic acid, naphthalene dicarboxylic acid and the like. The diamine includes tetramethylene diamine, hexamethylene diamine, nonamethylene diamine, decamethylene diamine, undecamethylene diamine, dodecamethylene diamine, paraphenylene diamine, metaphenylene diamine and the like.

The polyamide resin includes Nylon-4, 6, 7, 8, 11, 12, 6.6, 6.9, 6.10, 6.11, 6.12, 6T, 6/6.6, 6/12, 6/6T, 6T/6I and the like.

The terminal end of the polyamide resin may also be terminated by a carboxylic acid, an amine or the like. The carboxylic acid includes aliphatic monocarboxylic acid such as caproic acid, caprylic acid, capric acid, lauric acid, myristic acid, palmitic acid, stearic acid and behenic acid. The amine includes aliphatic primary amine such as hexyl amine, octyl amine, dodecyl amine, lauryl amine, myristyl amine, palmityl amine, stearyl amine and behenyl amine.

The above-mentioned polyamide resin may be used singly or in combination of two or more types thereof.

In addition, the preferable polyurethane resin which is preferable as the polymer for laser marking according to the present invention is a polymer compound having a urethane bond (-NH-COO-) in its principal chain. This polyurethane resin is usually obtained by reacting a diol and a diisocyanate, or by another method.

The diol includes polyester polyol, polyether polyol, polycarbonate polyol, polyester polycarbonate polyol and the like. These may be used singly or in combination of two or more types thereof.

The diisocyanate includes aromatic diisocyanate such as 4,4'-diphenylmethane diisocyanate, tolylene diisocyanate, phenylene diisocyanate, xylylene diisocyanate, 1,5-naphthylene diisocyanate, 3,3'-dichloro-4,4'-diphenylmethane diisocyanate and tolylene diisocyanate; aliphatic or alicyclic diisocyanate such as hexamethylene diisocyanate, isophorone diisocyanate, 4,4'-dicyclohexylmethane diisocyanate and hydrogenated xylylene diisocyanate. These may be used singly or in combination of two or more types thereof.

A chain extender may be used when the diol and the diisocyanate are reacted.

As described above, a thermoplastic polymer and a heat-curable polymer may be jointly used as the polymer for laser marking according to the present invention. In this case, the lower limit of the amount of the heat-curable polymer is preferably 0.01 part by mass, more preferably 0.05 part by mass and particularly preferably 0.1 part by mass with respect to 100 parts by mass of the thermoplastic polymer, and the upper limit of the amount thereof is preferably 20 parts by mass, more preferably 10 parts by mass and particularly preferably 5 parts by mass. When the content of the heat-curable polymer is in the above-mentioned range, discoloration (including fading) is prevented and distinct coloration is maintained over a long period of time in the marked portion, and the shape of the marked portion is more easily stabilized. When the thermoplastic polymer and the heat-curable polymer are used in combination, this heat-curable polymer may be included in consolidated form in the composition of the present invention, or may be dispersed in the form of a small fragment such as particle. This behavior of the heat-curable polymer may be included in the same manner in the molded article obtained using the composition of the present invention.

4. Composition for multicolor laser marking and molded article

The composition of the present invention comprises a chromatic coloring agent, a black substance which is itself depleted or discolored by receiving a laser beam, and a polymer; it is characterized in that the content of the chromatic coloring agent is from 0.001 to 3 parts by mass with respect to 100 parts by mass of the polymer and the content of the black substance is from 0.01 to 2 parts by mass with respect to 100 parts by mass of the polymer.

In addition, it is characterized in that the molded article of the present invention comprises the composition of the present invention described above.

The composition of the present invention comprises chromatic coloring agent, black substance and polymer that are described above in prescribed amounts. And when a molded article comprising this composition is irradiated

with two or more laser beams having different energy levels, markings having two or more different color tones can be obtained.

For the purpose of obtaining a clear marking, a composition of the above-mentioned components in the composition of the present invention is adjusted as described below. Specifically, the content of the chromatic coloring agent is from 0.001 to 3 parts by mass and the content of the black substance is from 0.01 to 2 parts by mass with respect to 100 parts by mass of the polymer for laser marking. The lower limit of the content of the chromatic coloring agent is preferably 0.002 part by mass and particularly preferably 0.005 part by mass; and the upper limit thereof is preferably 1 part by mass and particularly preferably 0.8 part by mass. When the content of the chromatic coloring agent is too much, a white marking becomes difficult to obtain, for example, and it can be difficult to distinguish an area irradiated with a low-energy laser beam from an area irradiated with a high-energy laser beam. On the other hand, when the content is too small, it becomes difficult to obtain a marking in the color derived from the chromatic coloring agent, for example, and it can be difficult to distinguish a non-irradiated area with a laser beam from an area irradiated with a low-energy laser beam.

Moreover, the lower limit of the content of the black substance is preferably 0.03 part by mass and particularly preferably 0.05 part by mass; and the upper limit thereof is preferably 1 part by mass and particularly preferably 0.8 part by mass. When the content of the black substance is too much, the laser beam-irradiated area is too black, and a marking formed by irradiation of a laser beam can be difficult to discern.

When the polymer for laser marking to be used comprises a curable polymer alone, the starting components comprising the polymer are adjusted to give 100 parts by mass of a polymer after curing.

The chromatic coloring agent, black substance and other components are dispersed in the polymer for laser marking, and the base of the composition of the present invention and the molded article obtained using the same are in black or a dark-color based color. In the present invention, further formulating a white-based substance such as a white substance leads to a base in which the brightness of the base color is adjusted and a marking in which the whiteness of the color that appears during laser marking can be enhanced. In the latter case, the whiteness of the white color or the color derived from the present chromatic coloring agent at reduced concentration that appears upon irradiation with a laser beam can be enhanced.

The white-based substance is not particularly limited insofar as it does not significantly hinder the excellent performance of the present invention such as that it makes the multicolor laser marking according to the present invention extremely difficult to distinguish. And examples thereof include titanium dioxide, zinc oxide, zinc sulfide, barium sulfate and the like. These may be used singly or in combinations of two or more types thereof.

The average particle diameter of the white-based substance is not particularly limited, and is usually in the range from 0.1 to 3.0 $\mu$m, preferably from 0.1 to 2.0 $\mu$m, and more preferably from 0.1 to 1.0 $\mu$m.

When the white-based substance is used, the content thereof is preferably from 0.001 to 1 part by mass, more preferably from 0.001 to 0.5 part by mass and particularly preferably from 0.001 to 0.1 part by mass with respect to 100 parts by mass of the polymer for laser marking. When this content is too much, a marking having good contrast may not be obtained, and when this content is too small, the latitude of the base color after molding may be limited.

The composition of the present invention may also comprise an additive such as a flame retardant, an antistatic agent, an antimicrobial agent, a filler, a decorative agent, an ultra violet absorber, an antioxidant, an anti-aging agent, a weathering stabilizer, a lubricant, a plasticizer, a hydrophilizer and a light-colored coloring agent depending on purpose or application. In particular, when one or more types of functionality-imparting agents selected from the flame retardant, antistatic agent, antimicrobial agent, filler and metallic pigment as the decorative agent are added in a prescribed amount each, not only is a distinctly colored marking obtained, but a molded article can be obtained in which a high level of the desired performance is demonstrated and maintained.

The flame retardant includes an organic-based flame retardant, an inorganic-based flame retardant, a reactive flame retardant and the like.

The organic-based flame retardant may be used a halogen-based flame retardant such as a brominated bisphenol-based epoxy resin, a brominated bisphenol-based phenoxy resin, a brominated bisphenol-based polycarbonate resin, a brominated polystyrene resin, a brominated cross-linked polystyrene resin, a brominated bisphenol cyanurate resin, a brominated polyphenylene ether, a decabromodiphenyl oxide, tetrabromobisphenol A and an oligomer thereof, and a brominated alkyl triazine compound; a phosphorus-based flame retardant including a phosphoric acid ester such as trimethyl phosphate, triethyl phosphate, tripropyl phosphate, tributyl phosphate, tripentyl phosphate, trihexyl phosphate, tricyclohexyl phosphate, triphenyl phosphate, tricresyl phosphate, trixylenyl phosphate, cresyl diphenyl phosphate, dicresyl phenyl phosphate, dimethyl ethyl phosphate, methyl dibutyl phosphate, ethyl dipropyl phosphate and hydroxyphenyl diphenyl phosphate, as well as compounds obtained by modifying these compounds with various substituents, various condensed phosphoric acid ester compounds, a phosphazene derivative comprising elemental phosphorus and nitrogen, and the like; polytetrafluoroethylene; and the like. These may be used singly or in combination of two or more types thereof.

The inorganic flame retardant includes aluminum hydroxide, antimony oxide, magnesium hydroxide, zinc borate,

zinc stannate, guanidine salts, zirconium-based compounds, molybdenum-based compounds, silicone-based compounds, phosphazene-based compounds and the like. These may be used singly or in combination of two or more types thereof.

The reactive flame retardant includes tetrabromobisphenol A, dibromophenol glycidyl ether, brominated aromatic triazine, tribromo phenol, tetrabromophthalate, tetrabromophthalic anhydride, dibromoneopentyl glycol, poly(pentabromobenzyl polyacrylate), chlorendic acid (HET acid), chlorendic anhydride (HET anhydride), brominated phenol glycidyl ether, dibromocresyl glycidyl ether and the like. These may be used singly or in combination of two or more types thereof.

The content of the flame retardant is preferably from 1 to 30 parts by mass and more preferably from 3 to 20 parts by mass with respect to 100 parts by mass of the polymer for laser marking.

When the flame retardant is formulated, it is preferable that a flame retardant auxiliary is used together. The flame retardant auxiliary includes an antimony compound such as diantimony trioxide, diantimony tetraoxide, diantimony pentoxide, sodium antimonite and antimony tartrate, zinc borate, barium metaborate, alumina hydrate, zirconium oxide, ammonium polyphosphate, tin oxide and the like. These may be used singly or in combination of two or more types thereof.

The antistatic agent includes a low-molecular-weight antistatic agent, a polymer-type antistatic agent and the like, and these may be used singly or in combination of two or more types thereof. These antistatic agents may be ion-conducting or electron-conducting.

The low-molecular-weight antistatic agent includes an anionic antistatic agent; a cationic antistatic agent; a nonionic antistatic agent; an amphoteric antistatic agent; a complex compound; a metal alkoxide such as alkoxysilane, alkoxy titanium and alkoxy zirconium, and derivatives thereof; coated silica; a phosphate; a phosphoric acid ester; and the like. These may be used singly or in combination of two or more types thereof.

In addition, the polymer-type antistatic agent includes a vinyl copolymer having a metal salt of sulfonic acid in its molecule, a metal salt of an alkyl sulfonic acid, a metal salt of an alkylbenzene sulfonic acid, betaines and the like. Further, polyamide elastomers, polyester elastomers and the like may also be used. These may be used singly or in combination of two or more types thereof.

The content of the antistatic agent is preferably from 0.5 to 30 parts by mass and more preferably from 0.5 to 20 parts by mass with respect to 100 parts by mass of the polymer for laser marking.

The antimicrobial agent includes an inorganic antimicrobial agent, an organic antimicrobial agent, an inorganic-organic hybrid antimicrobial agent, a natural antimicrobial agent and the like. These may be used singly or in combination of two or more types thereof.

The inorganic antimicrobial agent includes a zeolite-based antimicrobial agent such as silver-based zeolites, and silver-zinc-based zeolites; a silica gel-based antimicrobial agent such as complexed silver-silica gel; a glass-based antimicrobial agent; a calcium phosphate-based antimicrobial agent; a zirconium phosphate-based antimicrobial agent; a silicate-based antimicrobial agent such as silver-magnesium aluminate silicate; a titanium-containing antimicrobial agent; a ceramic-based antimicrobial agent; a whisker-based antimicrobial agent; and the like.

Additionally, the organic antimicrobial agent includes a formaldehyde emitter, a halogenated aromatic compound, a rhodopropargyl derivative, a thiocyanate compound, an isothiazolinone derivative, a trihalomethylthio compound, a quaternary ammonium salt, a biguanide compound, an aldehyde, a phenol, a benzimidazole derivative, a pyridine oxide, a carbanilide, a diphenyl ether, a carboxylic acid, an organic metal compound and the like.

The content of the antimicrobial agent is preferably from 0.01 to 10 parts by mass and more preferably from 0.1 to 5 parts by mass with respect to 100 parts by mass of the polymer for laser marking.

The filler includes a fiber such as glass fibers, carbon fibers, silica fibers, silica-alumina fibers, zirconia fibers, boron nitride fibers, silicon nitride fibers, boron fibers and potassium titanate whiskers; an inorganic fiber-like filler from a metal of stainless steel, aluminum, titanium, copper and brass, and wollastonite; an organic fiber-like filler; a particulate filler of metal oxide such as silicate including silica, quartz powder, glass beads, glass powder, calcium silicate, aluminum silicate, kaolin, clay and diatomaceous earth, and alumina; a carbonate such as calcium carbonate, magnesium carbonate, a sulfate such as calcium sulfate, silicon carbide, silicon nitride, boron nitride and the like; a tabular filler of talc, mica, glass flakes, metal foil and the like; and the like. These may be used singly or in combinations of two or more types thereof. These fillers may also be used as a reinforcing agent.

The content of the filler is preferably from 1 to 30 parts by mass, more preferably from 1 to 25 parts by mass and further preferably from 1 to 20 parts by mass with respect to 100 parts by mass of the polymer for laser marking.

As the decorative agent, one creates a metallic design such as metallic tone and metallic luster on the surface of the molded article after producing a molded article may be used.

A metallic pigment or the like may be used to form a metallic design. As the metallic pigment, a particle having a metallic luster and an average particle diameter in a prescribed range is preferably used. The shape of this particle is not particularly limited, and spherical, semi-spherical, polygonal (cubic, cuboid, polyhedral and the like), squamous, radial, rod-shaped and the like are exemplified. Among these, a polyhedral shape is preferable for excellent metallic luster. The preferable average particle diameter of the metallic pigment is from 1 to 500 $\mu$m, and more preferably from

2 to 300 μm. The metallic pigment having the average particle diameter in this range leads to a distinct design easily formed on the surface of the molded article. It is noted that when the metallic pigment is not spherical shape, the term "average particle diameter" refers to the maximum length.

The material of the particle having metallic luster includes one containing a metal such as nickel, aluminum, silver, copper, tin, chrome, zinc, cobalt, iron, molybdenum, manganese, tungsten, gold, titanium, antimony, silicon, platinum and magnesium; one containing an alloy of the above metals; one containing a metal compound (oxides, nitrides, sulfides and the like) having metallic luster; one containing calcium carbonate glass; a mineral such as mica; and the like. In addition, a metallic pigment obtained by forming a membrane containing the above-mentioned metal, alloy, metal compound and the like or a membrane of a glass or the like on the surface of a particulate material having no metallic luster by plating, vapor deposition or the like may be used. Each of these particles may be used singly or in combinations of two or more types thereof.

The content of the decorative agent varies according to the purpose, application and the like, but is preferably from 0.1 to 10 parts by mass, more preferably from 0.5 to 10 parts by mass and further more preferably from 0.5 to 5 parts by mass with respect to 100 parts by mass of the polymer for laser marking.

The ultra violet absorber includes benzophenones, benzotriazoles, salicylic acid esters, metal complex salts and the like. These may be used singly or in combination of two or more types thereof.

The content of the ultra violet absorber is preferably from 0.05 to 5 parts by mass with respect to 100 parts by mass of the polymer for laser marking.

The antioxidant includes hindered amines, hydroquinones, hindered phenols, sulfur-containing compounds and the like. These may be used singly or in combination of two or more types thereof.

The content of the antioxidant is preferably from 0.1 to 5 parts by mass with respect to 100 parts by mass of the polymer for laser marking.

The antioxidant includes naphthyl amine, diphenyl amine, p-phenylene diamine, quinoline, hydroquinone derivative, monophenol, bisphenol, trisphenol, polyphenol, thiobisphenol, hindered phenol, phosphorous acid ester-based compound and the like. These may be used singly or in combination of two or more types thereof.

The content of the antioxidant is preferably from 0.1 to 5 parts by mass with respect to 100 parts by mass of the polymer for laser marking.

The weathering stabilizer includes an organic phosphorus-based compound, an organic sulfur-based compound, an organic compound having a hydroxyl group and the like. These may be used singly or in combination of two or more types thereof.

The content of the weathering stabilizer is preferably from 0.1 to 5 parts by mass with respect to 100 parts by mass of the polymer for laser marking.

The lubricant includes a fatty acid ester, a hydrocarbon resin, paraffin, a higher fatty acid, an oxy fatty acid, a fatty acid amide, an alkylene bis-fatty acid amide, an aliphatic ketone, a lower alcohol ester of a fatty acid, a polyhydric alcohol ester of a fatty acid, a polyglycol ester of a fatty acid, an aliphatic alcohol, a polyhydric alcohol, a polyglycol, a polyglycerol, a metal soap, a silicone, a modified silicone and the like. These may be used singly or in combination of two or more types thereof.

The content of the lubricant is preferably from 0.1 to 5 parts by mass with respect to 100 parts by mass of the polymer for laser marking.

As the light-colored coloring agent, coloring agents in pale red, pale yellow, pale blue, pale green and other colors may be used. In addition, a fluorescent brightening agent and the like may also be used. When a light-colored coloring agent in a color similar to the color derived from the chromatic coloring agent is used, the marking in the color derived from the chromatic coloring agent at the laser beam-irradiated area becomes clearer when low-energy laser beam is irradiated, for example.

In the case of using a thermoplastic polymer mainly as the polymer for laser marking, the composition of the present invention can be obtained, for example, by charging the starting components described above into an extruder, Banbury mixer, a kneader, a roller or the like, kneading them, or by another method. When kneading is performed, each of the components may be added all at once or in stages. The composition obtained in this manner leads to a molded article (the molded article of the present invention) having a prescribed shape by mixing itself or with another polymer and molding such as injection molding, extrusion molding, hollow molding, compression molding, sheet extrusion, vacuum molding, foam molding and blow molding, or other method.

Further, in the case of using a curable polymer mainly as the polymer for laser marking, the composition (molded article) of the present invention can be obtained, for example, by injecting the above-mentioned starting components together with a curing agent or the like as needed into a mold in a prescribed shape, and performing heat treatment, light irradiation or the like by a known method.

The molded article of the present invention comprises at least a polymer, a chromatic coloring agent and a black substance, and the base color thereof is usually black or dark-color based color. The polymer may be composed, for example, of (1) only a thermoplastic polymer, (2) both a thermoplastic polymer and a (heat)-curable polymer, (3) both

a thermoplastic polymer and a cured polymer, (4) only a cured polymer and the like. In all of these cases, the molded article can be formed from the "polymer for laser marking" contained in the composition of the present invention.

The shape of the molded article of the present invention may be selected from various shapes according to the purpose, application and the like. A part to be marked may be flat, curved, angled and irregular, or have another shape insofar as it can be irradiated with a laser beam.

5. Multicolor laser marking method

The laser marking method of the present invention is irradiating two or more laser beams having different energy levels onto a molded article comprising the present composition to form markings having two or more different color tones.

The "energy" of the laser beam generally depends on the irradiation conditions of the laser beam. Therefore, laser beams "having different energy levels" in irradiating two or more laser beams can be obtained by varying the type, wavelength, pulse width, frequency and output of the laser beam to be irradiated, as well as the irradiation time, the surface area to be irradiated, the distance and angle from the light source to the molded article, the irradiation method and other conditions. Specifically, different energy levels can be obtained not only when laser beams having different wavelengths are used, but also when the irradiation time and other irradiation conditions are varied using laser beam of the same wavelength. Energies imparted to an article to be irradiated between the case of a single irradiation cycle and the case of two or more irradiation cycles vary when the same irradiation conditions are given. Therefore, the "high-energy" case is obtained in the latter case where the irradiation time is longer.

In addition, the term "two or more laser beams having different energy levels" according to the present invention refers to two or more laser beams capable of differing degrees of damage to the article to be irradiated. When the same irradiation conditions are given, damages to the article to be irradiated between the case of a single irradiation cycle and the case of multiple irradiation cycles vary, however, this case is also included in the term "two or more laser beams having different energy levels" according to the present invention. That is, even when the total energy due to irradiation is the same, if the case of a single irradiation cycle imparts greater damage to the article to be irradiated than that of two irradiation cycles, the former is considered to be "high-energy".

The irradiation conditions of the laser beam onto a composition and a molded article in the present laser marking method are not particularly limited insofar they do not significantly hinder the excellent multicolor laser marking performance in the present invention. Referring to the laser marking method, scanning method, masking method or the like can be applied and two or more laser beams having different energy levels may be radiated simultaneously or in order. Additionally, a commonly apparatus for laser marking or the like may be used as the laser beam irradiation apparatus. This apparatus is usually provided with a laser oscillator, a laser modulator, a handling unit, a controller and the like. Markings are formed by pulse-modulating a laser beam emitted from the laser oscillator using the laser modulator, and irradiating onto the surface of the molded article. When laser marking is performed, two or more laser beams having different energy levels may be radiated using one apparatus, or a plurality of apparatuses may be used. "RSM50D" or "RSM30D" laser marking system manufactured by Rofin Baasel Corp. may for example be used as an apparatus capable of laser marking by two wavelengths.

The laser beam used for the multicolor laser marking of the present invention may be any one from a gas laser, a solid-state laser, a semiconductor laser, a dye laser, an excimer laser and a free-electron laser.

The gas laser includes helium-neon laser, noble gas ion laser, helium-cadmium laser, metal vapor laser, carbon dioxide gas laser and the like. The solid-state laser includes ruby laser, neodymium laser, variable-wavelength solid-state laser and the like. The semiconductor laser may be inorganic-type or organic-type, and inorganic semiconductor laser includes GaAs-GaAlAs-based laser, InGaAs-based laser, InP-based laser and the like. Additionally, a semiconductor-laser-excited solid-state laser using Nd:YAG, Nd:$YVO_4$, Nd:YLF, or the like also can be used. The laser beam described above may be used singly or in combinations of two or more types thereof.

It is preferable that laser beam having a wavelength in the range from 100 to 2,000 nm is used in the present invention. Numbers such as 1,064 nm and 532 nm that indicate "wavelength" of the laser beam are all central wavelengths, and usually include a variation of $\pm$ 3% in the present invention.

According to the laser marking method of the present invention, when the molded article of the present invention is irradiated with laser beams, the area where the black substance underwent a change (depletion, discoloration or the like) becomes strongly a color of the substance other than the black substance, and the area where the chromatic coloring agent underwent a change (decomposition, scattering or the like) becomes a color derived from the chromatic coloring agent at reduced concentration or white. If the energy of the laser beam is low, a depletion of the black substance by vaporization, volatilization or complete decomposition or a discoloration to a color differing from the original black by remaining at least a part or all of the black substance and decomposing, occurs to be color derived from the chromatic coloring agent at the laser beam-irradiated area. And if the energy of the laser beam becomes higher, a change of the chromatic coloring agent contained in the molded article of the present invention occurs usually at a higher energy than the energy by which the black substance changes as described above, and the area irradiated with the high-energy

laser beam is colored to white or a color derived from the chromatic coloring agent at reduced concentration.

Examples of the coloring method by laser beam irradiation will be briefly described according to some drawings, but the laser marking method of the present invention is in no way limited to these.

Two laser beams having two different energy levels are radiated in different positions on the molded article 1 of the present invention ((I) in Fig. 1). This time, the irradiation of laser beams may be performed simultaneously or separately. The area irradiated with low-energy laser beam is marked (3a in Fig. 1) in the color derived from the chromatic coloring agent, and the area irradiated with high-energy laser beam is marked (3b in Fig. 1) in white or a color derived from the chromatic coloring agent at reduced concentration ((II) in Fig. 1). Applying operations described above, a molded article marked in two different color tones (multicolor-marked molded article) 2 can be obtained.

Additionally, when a low-energy laser beam is radiated onto a molded article 1 of the present invention to form a marked portion in the color derived from the chromatic coloring agent by a broad surface area, and after that a laser beam is further radiated inside the marked portion, the irradiated area can be marked in white or a color derived from the chromatic coloring agent at reduced concentration (see Fig. 2). That is, Fig. 2 shows a molded article marked in two different color tones (multicolor-marked molded article) 2 having marked portion 3b which is colored in white or a color derived from the chromatic coloring agent at reduced concentration formed by further laser beam irradiation inside marked portion 3a in the color derived from the chromatic coloring agent, formed by first low-energy laser beam irradiation. According to this method, laser marking is realized in which marked portion 3a in the color derived from the chromatic coloring agent is adjacent to marked portion 3b in white or a color derived from the chromatic coloring agent at reduced concentration. The energy of the laser beam of the second irradiation may be the same or different from the energy of the first irradiation, and is not particularly limited.

For the purpose of obtaining a distinct marking in two colors by the laser marking method of the present invention, it is better that depletion of a color derived from the black substance is significantly conducted by low-energy laser beam, whereby a clear color derived from the chromatic coloring agent can be easily obtained. On the other hand, high-energy laser beam is preferred for significantly reducing the concentration of the color derived from the chromatic coloring agent.

In order to obtain a distinct marking having three or more colors by the laser marking method of the present invention, laser beam may be radiated to a molded article comprising only one type of chromatic coloring agent, or a molded article comprising two or more types of chromatic coloring agents, but the latter molded article is preferred for the ease of forming a more distinct marking.

In the case of obtaining a development of multicolor on a molded article comprising only one type of chromatic coloring agent, a method where three of more laser beams having different energy levels are irradiated to obtain markings in three or more colors and the like may be employed by using an ability to change the color of the marking depending on the energy of the laser beam to be irradiated as described above. Specific methods include a method where a total of three laser beams having two energy levels that induce different degrees of change in the black substance and one energy level that reduces the concentration of the color derived from the chromatic coloring agent are radiated; a method where a total of three laser beams having one energy level that leads to change of the black substance and two energy levels that induce different degrees of change in the chromatic coloring agent, and the like. One example using a red coloring agent is described. When a low-energy laser beam is irradiated, a part of the black substance is depleted or discolored to obtain a "dark red" where the color derived from the black substance is weakened, when a laser beam having a higher energy is irradiated to a "red" and when a laser beam having an even higher energy is irradiated to a "white", "pale red" or the like. Namely, different shades of red can be formed.

Further, one example using a red coloring agent and a blue coloring agent for the purpose of obtaining a development of three colors on a molded article comprising two types of chromatic coloring agents is described. When a low-energy laser beam is irradiated, the black substance is depleted or discolored to obtain a "violet that is a mixed color of red and blue" where the color derived from the black substance is weakened, when a laser beam having a higher energy is irradiated to a "blue" where the concentration of the color derived from the red coloring agent is reduced and when a laser beam having an even higher energy is irradiated to a "white", "pale blue" or the like where the concentration of the color derived from the blue coloring agent is reduced.

As described above, when irradiation conditions of the laser beam, the chromatic coloring agent and the like are appropriately selected, laser markings in desired colors can be obtained.

A simple method for obtaining laser beams having different energy levels is to use laser beams having different wavelengths. For example, when laser beams that differ only in wavelength are used to perform a distinct multicolor laser marking according to the present invention, a difference between wavelengths of the different laser beams is preferably 100 nm or greater, more preferably 200 nm or greater and particularly preferably 500 nm or greater. The maximum difference is usually 1,500 nm. In the case of irradiation with two beams having different wavelengths to form markings in the color derived from the chromatic coloring agent, and white or a color derived from the chromatic coloring agent at reduced concentration clearly by use of a chromatic coloring agent having an exothermic peak in the range of 360°C or higher and 590°C or lower, as measured by differential thermal analysis as the chromatic coloring agent, it is preferable that a laser beam having a wavelength of 1,064 nm and a laser beam having a wavelength of 532 nm are

used. That is to say, the use of these is suitable for forming a marking in the color derived from the chromatic coloring agent at a wavelength of 1,064 nm and a marking in white or a color derived from the chromatic coloring agent at a reduced concentration at a wavelength of 532 nm distinctly.

The "color derived from the chromatic coloring agent" obtained by the laser marking method of the present invention primarily refers to the color obtained as a result of depletion, discoloration and the like of the black substance due to laser beam irradiation. In detail, this color is one developed by the reduction in the effect of the color of the black substance due to depletion, discoloration or the like of the black substance and includes (a) color of the chromatic coloring agent itself (hereinafter, referred to simply as the "color of the chromatic coloring agent"), (b) blackish color of the chromatic coloring agent (the color of the chromatic coloring agent + the color of the black substance, or the color of the chromatic coloring agent + the color of the discolored black substance), (c) color having a different color tone resulting from discoloration of the chromatic coloring agent, (d) blackish color of the color (c) above, and the like.

Additionally, the "color derived from the chromatic coloring agent at reduced concentration" obtained by the laser marking method of the present invention refers to a color where the concentration of the above-mentioned "color derived from the chromatic coloring agent" is reduced. This color is primarily the color due to discoloration of the chromatic coloring agent by laser beam irradiation, and specifically includes a color that appears as the effect of the color of the chromatic coloring agent is diminished by decomposition, scattering, and other effects in the chromatic coloring agent, as well as colors having a different color tone in which the chromatic coloring agent is discolored, and the like. Referring to the "color derived from the chromatic coloring agent at reduced concentration" in the present invention, the more closely this color approaches white, the easier it is to distinguish from the "color derived from the chromatic coloring agent", being preferable.

The above-mentioned "white" obtained by the laser marking method of the present invention is primarily an inherent color of the polymer contained in the molded article of the present invention. It is not limited to pure-white, and usually includes a white-based color mingled with another color. Additionally, in the case of comprising titanium black as the black substance in the molded article, the above-mentioned "white" includes a color derived from titanium dioxide after titanium dioxide is formed by laser beam irradiation, or a mixed color of the color of the color derived from this titanium dioxide and the color of the above-mentioned polymer, further,; a color derived from a white-based substance or the like that are admixed as needed, or a mixed color of the color of this white-based substance or the like and the color of the above-mentioned polymer, and the like, besides this color. When the molded article of the present invention comprises a polymer that is prone to foaming by reception of a laser beam, the degree of whiteness of the area irradiated with high-energy laser beam increases.

The degree of whiteness of the above-mentioned "white" can be evaluated according to JIS K7105 or the like. This whiteness refers to a degree of whiteness of a color, and is evaluated by the reflectance when a certain quantity of light is radiated to an object. The reflectance can be measured by a Hunter brightness tester or the like. The reflectance varies according to the type (wavelength and the like) of the reflected light, and when the Hunter brightness tester is used, measurement is performed using a primary-color blue light. The degree of whiteness (%) of white markings obtained in the composition and the molded article comprising this of the present invention can be indicated by a ratio of the intensity with respect to a light reflected by magnesium oxide. Although, whiteness as observed by human vision does not necessarily agree with the degree of whiteness measured by a whiteness tester, white markings obtained in the composition and the molded article comprising this of the present invention are adequate insofar as it appears white to the human eye regardless of having a low degree of whiteness. However, the approximate degree of whiteness is preferably in the range from 55 to 100%, more preferably from 60 to 100%, even more preferably from 70 to 100% and particularly preferably from 80 to 100%.

$\Delta$E1 which is calculated by the below equation using a Lab value ($L_1$: brightness, $a_1$: redness, $b_1$: yellowness) at an area of a molded article comprising the composition for multicolor laser marking (S1) of the present invention irradiated with a high-energy laser beam, such as laser beam having a wavelength of 532 nm and a Lab value ($L_2$: brightness, $a_2$: redness, $b_2$: yellowness) at an area of a molded article comprising a composition (S2) identical to the composition (S1) except that it does not comprise the chromatic coloring agent irradiated with a low-energy laser beam, such as laser beam having a wavelength of 1,064 nm, has an upper limit of preferably 3, more preferably 2.5 and particularly preferably 2, and a lower limit of generally 0 for the sake capable of forming a marking having a high degree of whiteness on a base color of black or dark-color based color. However the smaller $\Delta$E1 indicates a higher degree of whiteness.

$$\Delta E1 = \sqrt{\{(L_1 - L_2)^2 + (a_1 - a_2)^2 + (b_1 - b_2)^2\}}$$

Moreover, $\Delta$E2 which is calculated by the below equation using a Lab value ($L_1$: brightness, $a_1$: redness, $b_1$: yellowness) at an area of a molded article comprising the composition for multicolor laser marking (S1) of the present

invention irradiated with a high-energy laser beam, such as laser beam having a wavelength of 532 nm and a Lab value ($L_3$: brightness, $a_3$: redness, $b_3$: yellowness) at an area of the same molded article irradiated with a low-energy laser beam, such as laser beam having a wavelength of 1,064 nm, has a lower limit of preferably 3, more preferably 3.5 and particularly preferably 4, and an upper limit of generally 50 for the sake capable of forming a multicolor marking having distinct differences between color tones in each of markings. The ΔE2 can be found by the method described in Examples. And the larger ΔE2 indicates a more distinct difference between color tones.

$$\Delta E2 = \sqrt{\{(L_1 - L_3)^2 + (a_1 - a_3)^2 + (b_1 - b_3)^2\}}$$

However the Lab value is a value in the "L. a. b." color system of Richard S. Hunter known as a system for expressing color numerically. More specifically, differences in visual sense are eliminated in this system by measuring the target color tones using a color-difference meter, digitizing the color at the laser beam-irradiated area to a brightness (L) and a hue (a, b), and plotting these values on a graph such as the one shown in Fig. 4. The color-difference meter is an instrument for measuring the quantities that explain a color, and the one which measures the spectral distribution of light or the spectral reflectance (transmittance) of an object. In the graph showing the color solid of Fig. 4, the brightness (L) is defined by values ranging from 0 to 100 on the longitudinal axis on the left side. Higher L values indicate greater brightness. The a value is the horizontal scale in the graph, the degree of redness is stronger on the (+) side, and the degree of greenness is stronger on the (-) side. On the other hand, the b value is the vertical scale in the graph, the degree of yellowness is stronger on the (+) side, and the degree of blueness is stronger on the (-) side. The L value, a value and b value measured when laser beam at each wavelength was radiated onto each molded article are plotted in Fig. 4 and digitized as Lab values. The ΔE1 and ΔE2 described above are obtained by the equation shown above, and the preferred ranges described above are set for each.

6. Multicolor marked molded article

The multicolor marked molded article of the present invention is a molded article marked in two or more different color tones, and is obtained by irradiating two or more laser beams having different energy levels onto a molded article comprising the composition of the present invention.

An unmarked portion (portion which is not irradiated with laser beam) on the molded article having a multicolor marking of the present invention is composed of a polymer, a chromatic coloring agent, a black substance and the like. In addition, the portion by a low-energy laser beam irradiation (for example, laser beam at a wavelength of 1,064 nm) is in the color derived from the chromatic coloring agent since the black substance is depleted or discolored (whitened or otherwise changed), and the chromatic coloring agent remains unchanged. Further, the portion by a high-energy laser beam irradiation (for example, laser beam at a wavelength of 532 nm) is in white or a color derived from the chromatic coloring agent at reduced concentration. At this portion, the black substance is vaporized or whitened, and a part of the chromatic coloring agent may remain, but almost none is present. This is because the chromatic coloring agent has been decomposed, scattered or otherwise affected by the laser beam.

The multicolor-marked molded article of the present invention is preferably marked in multiple colors including white and a chromatic color.

The multicolor marking may has a portion (type [II] in Fig. 1) that colored by laser beam irradiation onto different positions of the surface of the molded article, and a portion (as shown in Fig. 2) in which the color derived from the chromatic coloring agent is adjacent to white or to a color derived from the chromatic coloring agent at reduced concentration, as described above in the multicolor-marked molded article of the present invention.

In the multicolor-marked molded article of the present invention, the portion marked by laser beam (laser beam-received area) may sometimes be foamed according to the type of polymer. In the case of using a polyacetal resin, a styrene-based resin in which methyl methacrylate is used as a monomer component, a rubber-reinforced thermoplastic resin in which methyl methacrylate is used as a monomer component and the like in particular, a marked portion in foamed state can be obtained. As described above, when the difference of refractive index between the foamed marked portion (laser beam-received area) and the surrounding non-irradiated area increases, markings become clearer. Therefore, it is preferable that at least one place of the marked portion is foamed.

In the multicolor-marked molded article of the present invention, the portion marked by laser beam (laser beam-received area) may sometimes change in shape according to the type of polymer, the type of the black substance and the like. That is, when a laser beam is radiated, the laser beam-received area may be formed in convex due to an occurrence of foaming, expansion or the like, or in concave due to an occurrence of shrinkage.

In the case a molded article prior to laser beam irradiation comprises a polymer that is prone to foaming upon by reception of a laser beam, a laser beam-received area tends to be in convex due to foaming easily.

Additionally, in also the case a molded article prior to laser beam irradiation comprises a black substance such as titanium black, which is leading to a discoloration by a heat of a laser beam and an expansion of the polymer by a heat accumulation, and the like, a marked portion may be in convex.

When the marked portion is in convex, the height thereof is usually in the range from 1 to 200 μm, preferably from 1 to 100 μm and more preferably from 1 to 80 μm. On the other hand, when the marked portion is in concave, the depth thereof is usually in the range from 1 to 200 μm and preferably from 1 to 100 μm. If the height of the convex portion is too high, even though the visibility of the marking is enhanced, lettering can be rubbed off when the contact pressure is high in applications where the marked portion is touched (keyboards, Braille and the like), or when contact at low pressure is repeated. The degrees of these concavity and convexity can be adjusted by irradiation conditions of the laser beam and the like.

Further, in the case a molded article prior to laser beam irradiation comprises a thermoplastic polymer and a heat-curable polymer (which cures by a heat), when a laser beam is irradiated, the heat-curable polymer is instantly cured and the strength of the marked portion is therefore enhanced due to the polymer which was cured by a heat (heat-cured polymer) regardless of the presence of deformation in the marked portion. Particularly, when the marked portion is in convex, a deformation, a wear and the like are less prone to occur and a high visibility of the marking can be maintained for a long time. That is to say, the durability of the marking is improved.

Accordingly, even in the case a molded article comprising a polymer that is prone to foaming upon by reception of a laser beam and a heat-curable polymer (which cures by a heat) is irradiated with a laser beam, the heat-cured polymer present at the neighboring part (walls or the like) of the foamed portion acts as a reinforcing material, and adequate strength (impact resistance) and durability of the entire marked portion are maintained. In addition, the heat-cured polymer can also be present in the voids formed due to a foaming, depending on the type, content ratio and the like of the heat-curable polymer. In this case, when the irradiation conditions of the laser beam are controlled to minimize a foaming at a marked portion and to introduce the heat-cured polymer in these voids, the multicolor-marked molded article of the present invention will have clearly colorations, strength and durability. These effects are significant when the voids are filled by the heat-cured polymer. As mentioned above, the heat-cured polymer having in the marked portion may be present in consolidated form, in particulate form or in another form.

The multicolor-marked molded article of the present invention may be provided with a protective layer on the surface that has the marked portion. A material constituting this protective layer may be selected according to the purpose and the application, and is not particularly limited. It is preferably a material having transparency for protecting the marked portion, maintaining visibility of the marking and the like. The protective layer is preferably provided at least over the entire surface of the marked portion, and may be provided over the entire surface of the molded article.

Providing the protective layer leads to not only protection of the marked portion and the like, but improved smoothness of the surface of the molded article. The method for forming the protective layer is not particularly limited.

Fig. 3 is a schematic cross-sectional diagram of the multicolor-marked molded article 2b that has a protective layer 4 on the surface having multicolor marked portions 3a and 3b.

[Examples]

The present invention will be described in detail hereinafter using examples. The present invention is in no way limited by these examples. Also, "%" and "parts" in the examples are based on mass unless otherwise indicated.

[I] Chromatic coloring agent

[I-1] Type and exothermic peak temperature of chromatic coloring agents

The exothermic peak temperature was measured by differential thermal analysis for the coloring agents shown below. The measurement equipment was the "TG-DTA320 (horizontal oven)" manufactured by Seiko Instruments Inc. A 3-mg sample was uniformly and tightly filled into an aluminum dish-shaped vessel having a diameter of 5 mm and a height of 2.5 mm, and measurement was performed in air at a temperature increase rate of 10°C/minute and a flow rate of 200 mL/minute. Temperature calibration in the measurement equipment was performed using indium and tin. In addition, weight calibration was performed using a counterweight at room temperature, and using calcium oxalate. The exothermic peak temperature was determined by the peak top in the warming curve. The warming curves of each coloring agent are shown in Figs. 5 through 16. Results of the exothermic peak temperature are shown in Table 1.

(1) Copper phthalocyanine pigment

A β-type copper phthalocyanine pigment (formula (XXII) below) having an average secondary particle diameter of 7.1 μm as measured with a particle size analyzer according to a laser scattering method, was used.

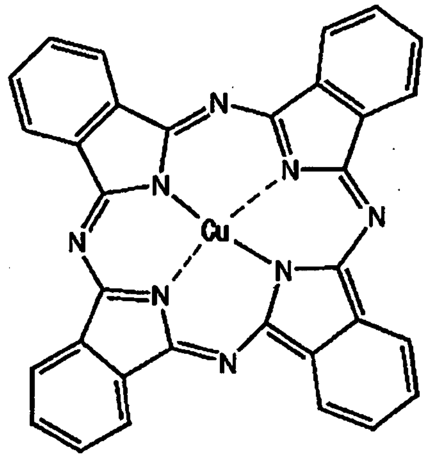

(XXII)

(2) Aluminum phthalocyanine pigment (formula (XXIII) below)

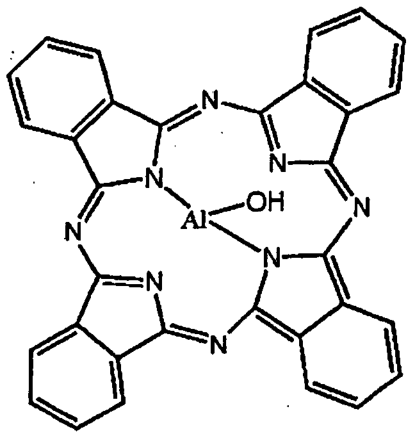

(XXIII)

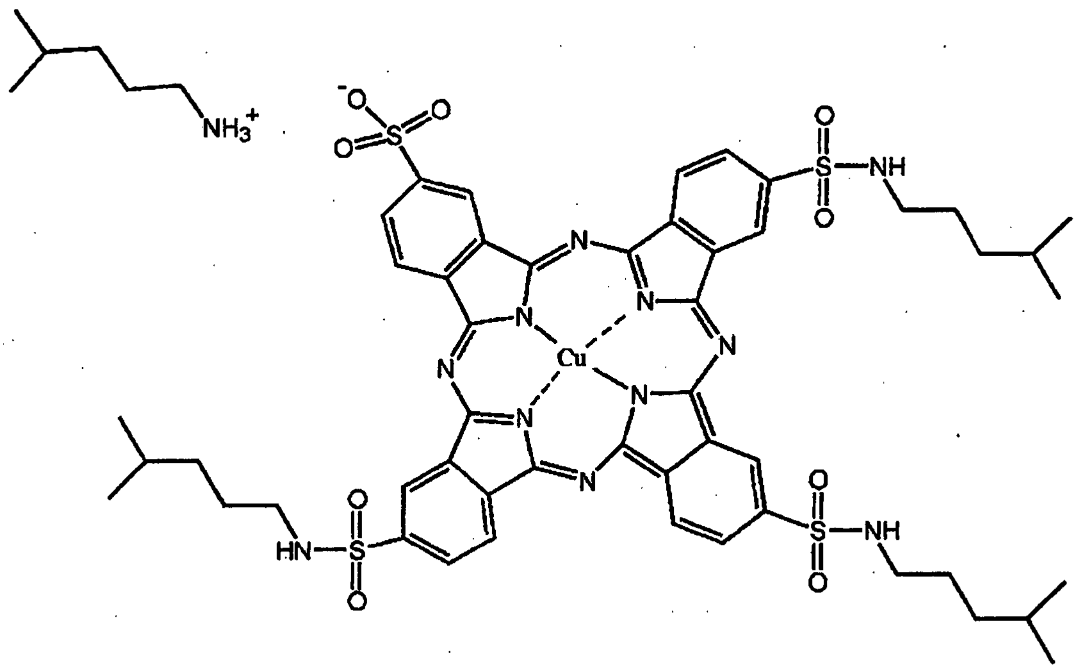

(XXIV)

(3) Solvent-soluble copper phthalocyanine dye (formula (XXIV) below)

(4) Diketopyrrolopyrrole-based pigment (formula (XXV) below)

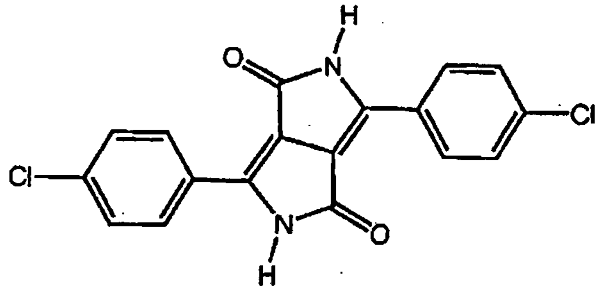

(XXV)

(5) Dioxazine-based pigment (formula (XXVI) below)

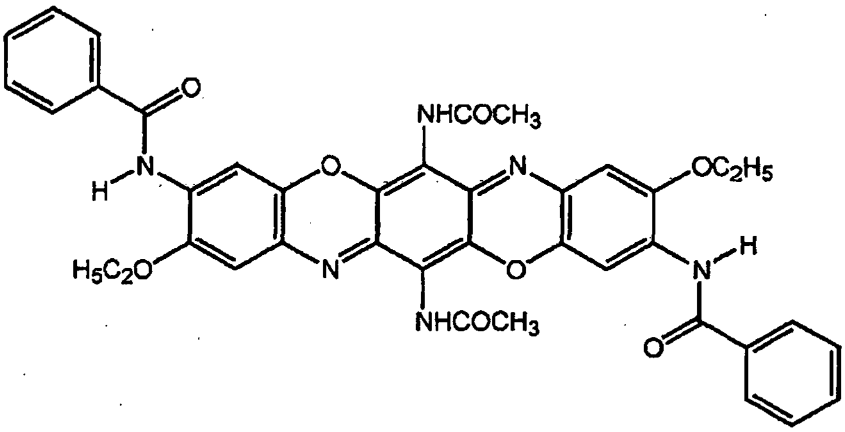

(XXVI)

(6) Quinacridone-based pigment (formula (XXVII) below)

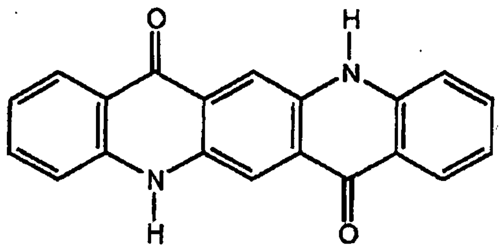

(XXVII)

(7) Quinophthalone-based pigment (formula (XXVIII) below)

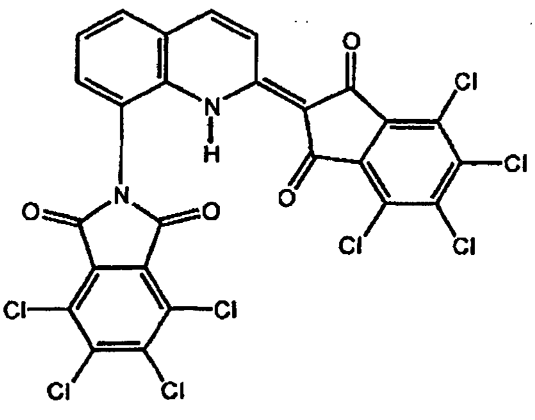

(XXVIII)

(8) Perylene-based pigment (formula (XXIX) below)

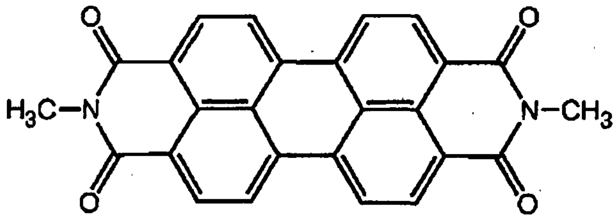

(XXIX)

(9) Metal complex-based pigment (formula (XXX) below)

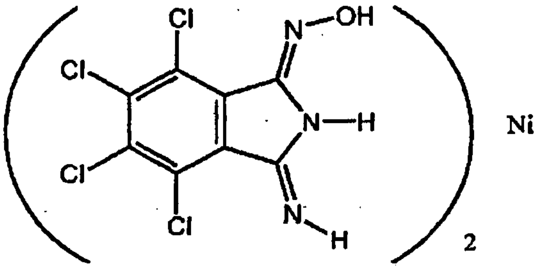

(XXX)

(10) Anthraquinone-based dye (formula (XXXI) below)

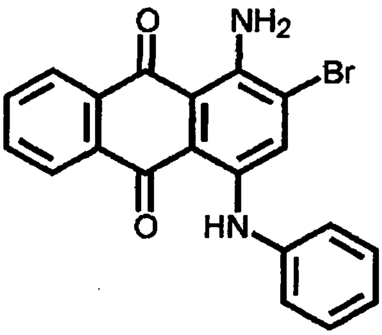

(XXXI)

(11) Perinone-based dye (formula (XXXII) below)

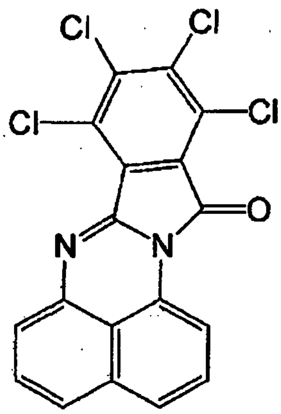

(XXXII)

(12) Iron phthalocyanine pigment (formula (XXXIII) below)

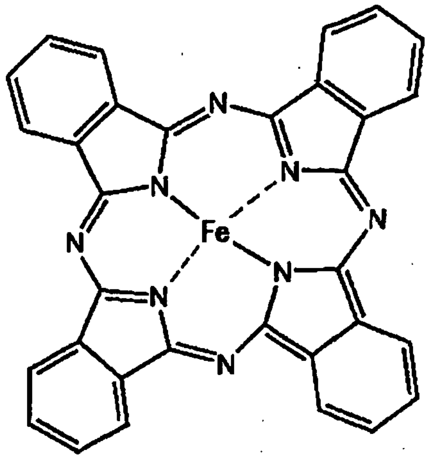

(XXXIII)

(13) Perylene black (formula (XXXIV) below)

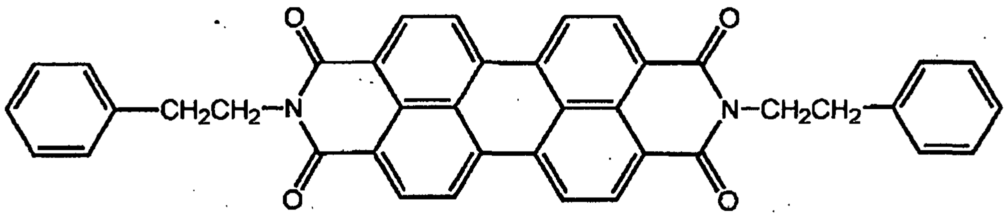

(XXXIV)

**Table 1**

| Chromatic coloring agent | | | Temperature of exothermic peak (°C) | Sample weight in differential thermal analysis (mg) |
|---|---|---|---|---|
| Type | | Color | | |
| (1) | β-type copper phthalocyanine pigment | blue | 487 | 2.906 |
| (2) | Aluminum phthalocyanine pigment | green | 581 | 2.946 |
| (3) | Solvent-soluble copper phthalocyanine dye | blue-green | 498 | 3.090 |
| (4) | Diketopyrrolopyrrole-based pigment | red | 550 | 3.299 |
| (5) | Dioxazine-based pigment | violet | 401 | 3.236 |
| (6) | Quinacridone-based pigment | violet | 559 | 2.819 |
| (7) | Quinophthalone-based pigment | yellow | 550 | 3.020 |
| (8) | Perylene-based pigment | red | 581 | 2.998 |
| (9) | Metal complex-based pigment | red | 510 | 3.171 |
| (10) | Anthraquinone-based dye | blue | none | 2.818 |
| (11) | Perinone-based dye | orange | none | 2.978 |
| (12) | Iron phthalocyanine pigment | blue | 357 | - |
| (13) | Perylene black | black | 602 | 3.016 |

[I-2] Composition for laser marking, and production and evaluation of molded article using the same

Example A-1

0.2 part of chromatic coloring agent (1), 0.1 part of a black substance (product name: "Mitsubishi Carbon #45," manufactured by Mitsubishi Chemical), and 100 parts of a rubber-reinforced copolymerized resin obtained by the method described below were mixed in a mixer for 5 minutes, thereafter the mixture was melt-extruded in a 50 mm diameter extruder at a cylinder temperature controlled from 180 to 220°C to obtain pellets. The pellets thus obtained were thoroughly dried, and a specimen for evaluation (length: 80 mm, width: 55 mm and thickness: 2.5 mm) was obtained using an injection molding machine ("EC-60," manufactured by Toshiba Machine Co.).

Laser marking was performed by radiating laser beams having wavelengths of 532 nm and 1,064 nm onto different positions on the surface of the specimen using a Rofin Power Line "E/SHG" and a laser marker "RSM30D" manufactured by Rofin Baasel Inc. When the wavelength of the laser beam was 532 nm, the output was 23 A, the frequency was 8 kHz, the scanning speed was 400 mm/second, and the beam diameter was 30 μm. When the wavelength of the laser beam was 1,064 nm, the output was 34 A, the frequency was 3 kHz, the scanning speed was 400 mm/second, and the aperture diameter was 2.0 mm.

Each color of the laser beam-irradiated portions was observed, and results thereof were shown in Table 2.

<Preparation of rubber-reinforced copolymerized resin>

100 parts of deionized water, 1.5 part of sodium dodecylbenzene sulfonate, 0.1 part of tert-dodecylmercaptan, 15 parts (solids equivalent) of polybutadiene particle having a weight-average particle diameter of 2,400 Å, 4 parts of styrene, 2 parts of acrylonitrile and 12 parts of methyl methacrylate were charged into a separable flask provided with a reflux condenser, a thermometer and a stirrer, and heated under stirring. When the temperature of the starting components reached 45°C, 0.1 part of diisopropylbenzene hydroperoxide and an activating aqueous solution composed of 0.1 part of sodium ethylenediamine tetraacetate, 0.003 part of iron (I) sulfate, 0.2 part of formaldehyde sodium sulfoxylate dehydrate and 15 parts of deionized water were added, and polymerization was performed for one hour.

After that, a component for polymerization, composed of 50 parts of deionized water, 1 part of sodium dodecylbenzene sulfonate, 0.1 part of tert-dodecylmercaptan, 0.2 part of diisopropyl hydroperoxide, 23 parts of styrene, 7 parts of acrylonitrile and 37 parts of methyl methacrylate was continuously added over the course of three hours, and polymerization was continued. After addition of the component for polymerization was completed, stirring was continued for another hour. Subsequently, 0.2 part of 2,2-methylene-bis-(4-ethylene-6-tert-butylphenol) was added, and a reacted product was obtained. Next, 2 parts of calcium chloride were added to the latex containing this reacted product, the polymer component was solidified, and the solid was thoroughly rinsed. Then, the product was dried at 75°C for 24 hours, and a rubber-reinforced copolymerized resin in the form of a white powder was obtained. The polymerization conversion rate was 98.5%, the graft ratio was 60%, and the limiting viscosity was 0.3 dl/g.

Example A-2

A specimen was produced and evaluated in the same manner as in Example A-1, except that chromatic coloring agent (2) was used instead of chromatic coloring agent (1) in an amount formulated of 0.1 part. The result thereof was shown in Table 2.

Example A-3

A specimen was produced and evaluated in the same manner as in Example A-1, except that chromatic coloring agent (3) was used instead of chromatic coloring agent (1). The result thereof was shown in Table 2.

Example A-4

A specimen was produced and evaluated in the same manner as in Example A-1, except that chromatic coloring agent (4) was used instead of chromatic coloring agent (1). The result thereof was shown in Table 2.

Example A-5

A specimen was produced and evaluated in the same manner as in Example A-1, except that chromatic coloring agent (5) was used instead of chromatic coloring agent (1). The result thereof was shown in Table 2.

Example A-6

A specimen was produced and evaluated in the same manner as in Example A-5, except that polyacetal resin (product name: "Iupital F20-03N", manufactured by Mitsubishi Engineering-Plastics Corp.) was used as the polymer for molding. The result thereof was shown in Table 2.

Example A-7

A specimen was produced and evaluated in the same manner as in Example A-5, except that poly methyl methacrylate resin (product name: "VH001" manufactured by Mitsubishi Rayon Co., Ltd.) was used as the polymer for molding. The result thereof was shown in Table 2.

Example A-8

A specimen was produced and evaluated in the same manner as in Example A-5, except that polyamide resin (product name: "NOVAMID 1010", manufactured by Mitsubishi Engineering-Plastics Corp.) was used as the polymer for molding. The result thereof was shown in Table 2.

Example A-9

A specimen was produced and evaluated in the same manner as in Example A-1, except that chromatic coloring agent (6) was used instead of chromatic coloring agent (1). The result thereof was shown in Table 2.

Example A-10

A specimen was produced and evaluated in the same manner as in Example A-1, except that chromatic coloring agent (7) was used instead of chromatic coloring agent (1). The result thereof was shown in Table 2.

Example A-11

A specimen was produced and evaluated in the same manner as in Example A-1, except that chromatic coloring agent (8) was used instead of chromatic coloring agent (1). The result thereof was shown in Table 2.

Example A-12

A specimen was produced and evaluated in the same manner as in Example A-1, except that chromatic coloring agent (9) was used instead of chromatic coloring agent (1). The result thereof was shown in Table 2.

Comparative Example A-1

A specimen was produced and evaluated in the same manner as in Example A-1, except that chromatic coloring agent (10) was used instead of chromatic coloring agent (1). The result thereof was shown in Table 2.

Comparative Example A-2

A specimen was produced and evaluated in the same manner as in Example A-1, except that chromatic coloring agent (11) was used instead of chromatic coloring agent (1). The result thereof was shown in Table 2.

Comparative Example A-3

A specimen was produced and evaluated in the same manner as in Example A-1, except that chromatic coloring agent (12) was used instead of chromatic coloring agent (1). The result thereof was shown in Table 2.

Comparative Example A-4

A specimen was produced and evaluated in the same manner as in Example A-1, except that chromatic coloring agent (13) was used instead of chromatic coloring agent (1). The result thereof was shown in Table 2.

Table 2

| | | Coloring agent used | Color of molded article | Color of laser-marked portion | |
|---|---|---|---|---|---|
| | | | | 532nm | 1064nm |
| Example | A-1 | (1) | black | white | blue |
| | A-2 | (2) | black | white | green |
| | A-3 | (3) | black | white | green |
| | A-4 | (4) | black | white | dark reddish-brown |
| | A-5 | (5) | black | white | violet |
| | A-6 | (5) | black | white | violet |
| | A-7 | (5) | black | white | violet |
| | A-8 | (5) | black | white | violet |
| | A-9 | (6) | black | white | violet |
| | A-10 | (7) | black | white | yellow |
| | A-11 | (8) | black | white | red |
| | A-12 | (9) | black | white | red |
| Comparative Example | A-1 | (10) | black | blue | blue |
| | A-2 | (11) | black | red | red |
| | A-3 | (12) | black | white | green-black |
| | A-4 | (13) | black | red | red |

From the result of Table 2, since there was no exothermic peak measured by differential thermal analysis in Comparative Examples A-1 and A-2, only vaporization of carbon black occurred, and markings having different color tones were not formed. In Comparative Example A-3, since the exothermic peak temperature was lower than 360°C, a marking derived from the coloring agent was not enough even when a low-energy laser beam is irradiated. Additionally, in Comparative Example A-4, since the exothermic peak temperature was over 590°C, markings having different color tones were not formed. On the other hand, in Examples A-1 through A-12, when a laser beam at a wavelength of 532 nm was irradiated, the energy was high and white markings in all Examples were formed. And when a laser beam at a wavelength of 1,064 nm was irradiated, markings in the color derived from the coloring agent were distinctly formed.

[II] Preparation and evaluation of polymer composition for multicolor laser marking

A polymer composition for multicolor laser marking was prepared using the components described below.

[II-1] Thermoplastic polymer

(1) Rubber-reinforced thermoplastic resin (rubber-reinforced resin)

40 parts (solids equivalent) of polybutadiene rubber latex, 65 parts of deionized water, 0.35 part of rosin soap, 15 parts of styrene and 5 parts of acrylonitrile as an initial polymerization component were charged into a separable flask provided with a reflux condenser, a thermometer and a stirrer. Thereafter a solution in which 0.2 part of sodium pyrophosphate, 0.01 part of iron (I) sulfate heptahydrate and 0.4 part of glucose were dissolved in 20 parts of deionized

water, was added. Subsequently, 0.07 part of cumene hydroperoxide was added to initiate polymerization and performed it for one hour. After that, 45 parts of deionized water, 0.7 part of rosin soap, 30 parts of styrene, 10 parts of acrylonitrile and 0.01 part of cumene hydroperoxide as an incremental component were continuously added over the course of two hours, and the reaction was continued over one hour to complete polymerization and obtain a copolymer latex. Sulfuric acid was added to this copolymer latex, and the polymer component was solidified, rinsed, and dried to obtain a rubber-reinforced copolymerized resin (P1).

On the other hand, 250 parts of deionized water, 3.0 parts of potassium rosinate, 40 parts of styrene, 15 parts of acrylonitrile, 45 parts of methyl methacrylate and 0.1 part of tert-dodecylmercaptan were charged into a separable flask provided with a reflux condenser, a thermometer and a stirrer. After that, a solution in which 0.05 part of sodium ethylene diamine tetraacetate, 0.002 part of iron(I) sulfate heptahydrate, and 0.1 part of sodium formaldehyde sulfoxylate were dissolved in 8 parts of deionized water, was added. Subsequently, 0.1 part of diisopropylbenzene hydroperoxide was added to initiate polymerization and performed it for approximately one hour to complete. Sulfuric acid was added to the copolymer latex obtained, and the polymer component was solidified, rinsed, and dried to obtain a copolymer (P2).

Then 40% of the rubber-reinforced copolymerized resin (P1) and 60% of the copolymer (P2) were mixed, the mixture was melt-extruded in a 50 mm diameter extruder at a cylinder temperature controlled from 180 to 220°C to obtain pellets of the resultant rubber-reinforced thermoplastic resin (rubber-reinforced resin).

(2) Polyacetal resin (POM resin)

"Iupital F20-03N" (product name) manufactured by Mitsubishi Engineering-Plastics Corp. was used.

(3) Poly methyl methacrylate resin (PMMA resin)

"Acrypet VH001" (product name) manufactured by Mitsubishi Rayon Co., Ltd. was used.

(4) Polyamide resin (PA resin)

"NOVAMID 1010" (product name) manufactured by Mitsubishi Engineering-Plastics Corp. was used.

(5) Polyurethane resin (PU resin)

"Resamine P2593" (product name) manufactured by Dainichiseika Color & Chemicals Mfg. Co., Ltd. was used.

[11-2] Heat-curable polymer

Epoxy group-containing acrylic-based polymer "Marproof G-1005SA" (product name) manufactured by NOF Corp. was used.

[II-3] Chromatic coloring agent

The coloring agents shown below were used. The exothermic peak temperatures of them as measured by differential thermal analysis under the same conditions as described above were also shown.

(1) Coloring agent (a)

The dioxazine-based pigment (violet) of (5) in [I-1] was used. The exothermic peak temperature thereof is 402°C.

(2) Coloring agent (b)

The diketopyrrolopyrrole-based pigment (red) of (4) in [1-1] was used. The exothermic peak temperature thereof is 550°C.

(3) Coloring agent (c)

The aluminum phthalocyanine-based pigment (green) of (2) in [I-1] was used. The exothermic peak temperature thereof is 581°C.

(4) Coloring agent (d)

The perinone-based dye (orange) of (11) in [I-1] was used. There was no exothermic peak temperature.

(5) Coloring agent (e)

The anthraquinone-based dye (blue) of (10) in [I-1] was used. There was no exothermic peak temperature.

[II-4] Black substance

Carbon black "Mitsubishi Carbon #45" (product name) manufactured by Mitsubishi Chemical Corp. was used.

[II-5] White substance

Titanium dioxide "CR-60-2" (product name) manufactured by Ishihara Sangyo KAISHA, Ltd. was used.

[II-6] Functionality-imparting agent

As a flame retardant, "FP500" (product name) manufactured by Asahi Denka Co., Ltd. was used.
In addition, as a metallic pigment, "Metashine" (product name) manufactured by Nippon Sheet Glass Co., Ltd. was used. This metallic pigment was covered with approximately 100 nm-thick electroless silver plating on the surface of a glass particle having an average particle diameter of 80 $\mu$m and an average aspect ratio of 1.3.
Examples B-1 through B-20 and Comparative Examples B-1 through B-6
Thermoplastic polymer compositions were prepared according to the formulations shown in Tables 3 through 9 using the above-mentioned starting components. Specifically, after the starting components were mixed in a mixer for 5 minutes, the mixture was melt-extruded in a 50 mm diameter extruder at a cylinder temperature controlled from 180 to 220°C to obtain pellets. The pellets thus obtained were thoroughly dried, and a specimen for evaluation (length: 80 mm, width: 55 mm and thickness: 2.5 mm) was obtained using an injection molding machine ("EC-60," manufactured by Toshiba Machine Co.).
Laser marking was performed by radiating laser beams having wavelengths of 532 nm and 1,064 nm onto different positions on the surface of the specimen using a Rofin Power Line "E/SHG" and a laser marker "RSM30D" manufactured by Rofin Baasel Inc. according to the irradiation conditions shown in Tables 3 through 9.
Each color of the laser beam-irradiated portions was observed, and results thereof were shown in Tables 3 through 9.
Subsequently, Lab values (L: brightness, a: redness, b: yellowness) of a white-marked portion formed when the above-mentioned specimen was irradiated with a laser beam having a wavelength of 532 nm, and a white-marked portion formed when a specimen formed from a coloring agent-free composition was irradiated with a laser beam having a wavelength of 1,064 nm were measured, and ΔE1s were calculated according to the equation below. The measurement apparatus of Lab is "Color-Eye 7000A" manufactured by Gretag Macbeth.

$$\Delta E1 = \sqrt{\{(L_1 - L_2)^2 + (a_1 - a_2)^2 + (b_1 - b_2)^2\}}$$

In the above equation, $L_1$, $a_1$ and $b_1$ are values for the white-marked portion formed by laser beam irradiation at a wavelength of 532 nm; and $L_2$, $a_2$ and $b_2$ are values for the white-marked portion formed when the specimen obtained from a coloring agent-free composition is irradiated with a laser beam at a wavelength of 1,064 nm. A smaller ΔE1 indicates a higher degree of whiteness.
Moreover, Lab values of a white-marked portion formed when the above-mentioned specimen was irradiated with a laser beam having a wavelength of 532 nm, and a chromatic-color-marked portion formed when the same specimen was irradiated in a different position by laser beam having a wavelength of 1,064 nm (the values in the latter case are $L_3$, $a_3$ and $b_3$) were measured, and ΔE2s were calculated according to the equation below. A larger ΔE2 indicates a more distinct difference between color tones.

$$\Delta E2 = \sqrt{\{(L_1 - L_3)^2 + (a_1 - a_3)^2 + (b_1 - b_3)^2\}}$$

Further, cross-sections of the chromatic color- and white-marked portions obtained in Example B-1 were observed using a transmission electron microscope, and the images were shown in Figs. 17 and 18.

# Table 3

| | | | | Example B-1 | Example B-2 | Example B-3 | Example B-4 |
|---|---|---|---|---|---|---|---|
| Starting component (parts by mass) | Polymer | Rubber-reinforced resin | | 100 | 100 | 100 | |
| | | POM resin | | | | | 100 |
| | Chromatic coloring agent | Coloring agent (a) | | 0.2 | | | 0.2 |
| | | Coloring agent (b) | | | 0.2 | | |
| | | Coloring agent (c) | | | | 0.1 | |
| | Black substance | Carbon black | | 0.1 | 0.1 | 0.1 | 0.1 |
| Evaluation | Color of specimen before laser beam irradiation | | | black | black | black | black |
| | Color of laser-marked portion | | 532nm | white | white | white | white |
| | | | 1064nm | violet | dark reddish-brown | green | violet |
| | ΔE1 | | | 1.0 | 1.0 | 1.0 | 1.0 |
| | ΔE2 | | | 25.0 | 25.0 | 15.0 | 20.0 |
| Condition of laser beam irradiation | 532nm | Output | (A) | 23 | 23 | 23 | 23 |
| | | Frequency | (kHz) | 8 | 8 | 8 | 8 |
| | | scanning speed | (mm/sec) | 400 | 400 | 400 | 400 |
| | | Beam diameter | (μm) | 30 | 30 | 30 | 30 |
| | 1064nm | Output | (A) | 31 | 31 | 31 | 31 |
| | | Frequency | (kHz) | 5.5 | 5.5 | 5.5 | 5.5 |
| | | scanning speed | (mm/sec) | 400 | 400 | 400 | 400 |
| | | Aperture φ | (mm) | 2.0 | 2.0 | 2.0 | 2.0 |

## Table 4

| | | | Example | | | |
|---|---|---|---|---|---|---|
| | | | B-5 | B-6 | B-7 | B-8 |
| Starting component (parts by mass) | Polymer | Rubber-reinforced resin | | | | 100 |
| | | PMMA resin | 100 | | | |
| | | PA resin | | 100 | | |
| | | PU resin | | | 100 | |
| | | Thermosetting polymer | | | | 1.5 |
| | Chromatic coloring agent | Coloring agent (a) | 0.2 | 0.2 | 0.2 | 0.2 |
| | Black substance | Carbon black | 0.1 | 0.1 | 0.1 | 0.1 |
| Evaluation | Color of specimen before laser beam irradiation | | black | black | black | black |
| | Color of laser-marked portion | 532nm | white | white | white | white |
| | | 1064nm | violet | violet | violet | violet |
| | ΔE1 | | 1.0 | 1.0 | 1.0 | 1.0 |
| | ΔE2 | | 20.0 | 20.0 | 20.0 | 20.0 |
| Condition of laser beam irradiation | 532nm | Output (A) | 23 | 23 | 23 | 23 |
| | | Frequency (kHz) | 8 | 8 | 8 | 8 |
| | | scanning speed (mm/sec) | 400 | 400 | 400 | 400 |
| | | Beam diameter (μm) | 30 | 30 | 30 | 30 |
| | 1064nm | Output (A) | 31 | 31 | 31 | 31 |
| | | Frequency (kHz) | 5.5 | 5.5 | 5.5 | 5.5 |
| | | scanning speed (mm/sec) | 400 | 400 | 400 | 400 |
| | | Aperture φ (mm) | 2.0 | 2.0 | 2.0 | 2.0 |

## Table 5

| | | | | Comparative Example | | |
|---|---|---|---|---|---|---|
| | | | | B-1 | B-2 | B-3 |
| Starting component (parts by mass) | Polymer | Rubber-reinforced resin | | 100 | 100 | 100 |
| | Chromatic coloring agent | Coloring agent (d) | | | 0.2 | |
| | | Coloring agent (e) | | | | 0.2 |
| | Black substance | Carbon black | | 0.1 | 0.1 | 0.1 |
| Evaluation | Color of specimen before laser beam irradiation | | | black | black | black |
| | Color of laser-marked portion | | 532nm | white | red | blue |
| | | | 1064nm | white | red | blue |
| | ΔE1 | | | 1.0 | 10.0 | 15.0 |
| | ΔE2 | | | 1.5 | 1.5 | 2.0 |
| Condition of laser beam irradiation | 532nm | Output | (A) | 23 | 23 | 23 |
| | | Frequency | (kHz) | 8 | 8 | 8 |
| | | scanning speed | (mm/sec) | 400 | 400 | 400 |
| | | Beam diameter | (μm) | 30 | 30 | 30 |
| | 1064nm | Output | (A) | 31 | 31 | 31 |
| | | Frequency | (kHz) | 5.5 | 5.5 | 5.5 |
| | | scanning speed | (mm/sec) | 400 | 400 | 400 |
| | | Aperture φ | (mm) | 2.0 | 2.0 | 2.0 |

## Table 6

| | | | | Example | | | |
|---|---|---|---|---|---|---|---|
| | | | | B-9 | B-10 | B-11 | B-12 |
| Starting component (parts by mass) | Polymer | Rubber-reinforced resin | | 100 | 100 | 100 | 100 |
| | Chromatic coloring agent | Coloring agent (a) | | | | 0.2 | 0.2 |
| | | Coloring agent (e) | | 0.2 | 0.2 | | |
| | Black substance | Carbon black | | - | - | 0.1 | 0.1 |
| | | Titan black | | 0.5 | - | - | - |
| | | Black iron oxide | | - | 0.15 | - | - |
| | Function-imparting agent | Flame retardant | | - | - | 10 | - |
| | | Metallic pigment | | - | - | - | 0.5 |
| Evaluation | Color of specimen before laser beam irradiation | | | black | black | black | black |
| | Color of laser-marked portion | | 532nm | white | white | white | white |
| | | | 1064nm | blue | blue | violet | violet |
| | ΔE1 | | | 1.0 | 1.0 | 1.0 | 1.0 |
| | ΔE2 | | | 18.0 | 18.5 | 20.0 | 21.0 |
| Condition of laser beam irradiation | 532nm | Output | (A) | 23 | 23 | 23 | 23 |
| | | Frequency | (kHz) | 8 | 8 | 8 | 8 |
| | | scanning speed | (mm/sec) | 400 | 400 | 400 | 400 |
| | | Beam diameter | (μm) | 30 | 30 | 30 | 30 |
| | 1064nm | Output | (A) | 31 | 31 | 31 | 31 |
| | | Frequency | (kHz) | 5.5 | 5.5 | 5.5 | 5.5 |
| | | scanning speed | (mm/sec) | 400 | 400 | 400 | 400 |
| | | Aperture φ | (mm) | 2.0 | 2.0 | 2.0 | 2.0 |

Table 7

| | | | | Example | | | |
|---|---|---|---|---|---|---|---|
| | | | | B-13 | B-14 | B-15 | B-16 |
| Starting component (parts by mass) | Polymer | Rubber-reinforced resin | | 100 | 100 | 100 | |
| | | POM resin | | | | | 100 |
| | Chromatic coloring agent | Coloring agent (a) | | 0.05 | | | 0.03 |
| | | Coloring agent (b) | | | 0.03 | | |
| | | Coloring agent (c) | | | | 0.01 | |
| | Black substance | Carbon black | | 0.1 | 0.1 | 0.1 | 0.1 |
| | White substance | Titanium dioxide | | 1 | 1 | 1 | 1 |
| Evaluation | Color of specimen before laser beam irradiation | | | grey | grey | grey | grey |
| | Color of laser-marked portion | | 532nm | white | white | white | white |
| | | | 1064nm | violet | dark reddish-brown | green | violet |
| | ΔE1 | | | 1.0 | 1.0 | 1.0 | 1.0 |
| | ΔE2 | | | 18.0 | 17.0 | 12.0 | 16.0 |
| Condition of laser beam irradiation | 532nm | Output | (A) | 23 | 23 | 23 | 23 |
| | | Frequency | (kHz) | 8 | 8 | 8 | 8 |
| | | scanning speed | (mm/sec) | 400 | 400 | 400 | 400 |
| | | Beam diameter | (μm) | 30 | 30 | 30 | 30 |
| | 1064nm | Output | (A) | 31 | 31 | 31 | 31 |
| | | Frequency | (kHz) | 5.5 | 5.5 | 5.5 | 5.5 |
| | | scanning speed | (mm/sec) | 400 | 400 | 400 | 400 |
| | | Aperture φ | (mm) | 2.0 | 2.0 | 2.0 | 2.0 |

## Table 8

| | | | | Example | | | |
|---|---|---|---|---|---|---|---|
| | | | | B-17 | B-18 | B-19 | B-20 |
| Starting component (parts by mass) | Polymer | Rubber-reinforced resin | | | | 100 | 100 |
| | | PMMA resin | | 100 | | | |
| | | PA resin | | | 100 | | |
| | | Thermosetting polymer | | | | 1.3 | |
| | Chromatic coloring agent | Coloring agent (a) | | 0.03 | 0.03 | 0.03 | |
| | | Coloring agent (d) | | | | | 0.05 |
| | Black substance | Carbon black | | 0.1 | 0.1 | 0.1 | 0.05 |
| | | Titan black | | | | | 0.1 |
| | White substance | Titanium dioxide | | 1 | 1 | 1 | 0.5 |
| Evaluation | Color of specimen before laser beam irradiation | | | grey | grey | grey | grey |
| | Color of laser-marked portion | | 532nm | white | white | white | white |
| | | | 1064nm | violet | violet | violet | green |
| | ΔE1 | | | 1.0 | 1.0 | 1.0 | 1.0 |
| | ΔE2 | | | 16.0 | 16.0 | 16.5 | 18.0 |
| Condition of laser beam irradiation | 532nm | Output | (A) | 23 | 23 | 23 | 23 |
| | | Frequency | (kHz) | 8 | 8 | 8 | 8 |
| | | scanning speed | (mm/sec) | 400 | 400 | 400 | 400 |
| | | Beam diameter | (μm) | 30 | 30 | 30 | 30 |
| | 1064nm | Output | (A) | 31 | 31 | 31 | 31 |
| | | Frequency | (kHz) | 5.5 | 5.5 | 5.5 | 5.5 |
| | | scanning speed | (mm/sec) | 400 | 400 | 400 | 400 |
| | | Aperture φ | (mm) | 2.0 | 2.0 | 2.0 | 2.0 |

## Table 9

| | | | Comparative Example B-4 | Comparative Example B-5 | Comparative Example B-6 |
|---|---|---|---|---|---|
| Starting component (parts by mass) | polymer | Rubber-reinforced resin | 100 | 100 | 100 |
| | Chromatic coloring agent | Coloring agent (d) | | 0.03 | |
| | | Coloring agent (e) | | | 0.03 |
| | Black substance | Carbon black | 0.1 | 0.1 | 0.1 |
| | White substance | Titanium dioxide | 1 | 1 | 1 |
| Evaluation | Color of specimen before laser beam irradiation | | grey | grey | grey |
| | Color of laser-marked portion | 532nm | white | red | blue |
| | | 1064nm | white | red | blue |
| | ΔE1 | | 1.0 | 7.0 | 6.0 |
| | ΔE2 | | 1.5 | 2.0 | 1.5 |
| Condition of laser beam irradiation | 532nm | Output (A) | 23 | 23 | 23 |
| | | Frequency (kHz) | 8 | 8 | 8 |
| | | scanning speed (mm/sec) | 400 | 400 | 400 |
| | | Beam diameter (μm) | 30 | 30 | 30 |
| | 1064nm | Output (A) | 31 | 31 | 31 |
| | | Frequency (kHz) | 5.5 | 5.5 | 5.5 |
| | | scanning speed (mm/sec) | 400 | 400 | 400 |
| | | Aperture φ (mm) | 2.0 | 2.0 | 2.0 |

As shown in Tables 5 and 9, Comparative Examples B-1 and B-4 are examples in which compositions containing no chromatic coloring agent were used, and only white marking was obtained. Comparative Examples B-2, B-3, B-5 and B-6 were examples in which coloring agents that had no exothermic peak as measured by differential thermal

analysis were used, and even though a laser beam was irradiated, only the colors derived from each coloring agent were obtained. In addition, ΔE1s were greater than 3, and ΔE2s were less than 3.

On the other hand, in Examples B-1 through B-23, ΔE1 was 3 or lower and ΔE2 was 3 or higher, and markings by laser beam irradiation were distinct in all these examples. In Examples B-8 and B-19, in which compositions comprising a heat-curable polymer were used, distinct markings not inferior to those of Examples B-1 and B-13 were obtained.

In Example B-11, in which a flame retardant was used as a functionality-imparting agent, the flame retardance according to UL94 was V-2, and a distinct marking was obtained. In Example B-12, in which a metallic pigment was used, the molded article had a metallic tone having excellent surface luster, and the marking thereof was also distinct.

[Industrial Applicability]

The polymer composition for multicolor laser marking of the present invention can easily be made into a molded article whose base color is black or dark-color based color, and is suitable for forming a distinct marking in two or more different color tones by irradiation of the molded article with laser beams having different energy levels. The present invention is therefore useful in molded articles including a thin product such as film and sheet (for construction, packaging, OA and the like); a housing for personal computers, keyboards, printers, facsimile machines, telephones, mobile telephones and the like; a household appliance such as refrigerator and washing machine; various types of vessels and lids; a covering member for electrical wiring and the like; a printed wiring board or a precision part such as electronic part which are mounted thereon; a part for automobile interior; various pipes; a card such as credit card and IC card; an exterior material such as advertising display and sign.

## Claims

1. A composition for multicolor laser marking, which is for forming markings having two or more different color tones by irradiation of two or more laser beams having different energy levels,
being **characterized in** comprising a chromatic coloring agent, a black substance which is itself depleted or discolored by receiving a laser beam, and a polymer
wherein said chromatic coloring agent comprises at least one type of backbone selected from the group consisting of a phthalocyanine backbone, a diketopyrrolopyrrole backbone, a dioxazine backbone, a quinacridone backbone, a quinophthalone backbone, a perylene backbone and a metal complex backbone and has an exothermic peak in the range of 360°C or higher and 590°C or lower, as measured by differential thermal analysis
wherein content of said chromatic coloring agent is from 0.001 to 3 parts by mass with respect to 100 parts by mass of said polymer; and
wherein content of said black substance is from 0.01 to 2 parts by mass with respect to 100 parts by mass of said polymer.

2. The composition for multicolor laser marking according to Claim 1, wherein said two or more different color tones are comprised of plurality of colors that comprise white and a chromatic color derived from said chromatic coloring agent.

3. The composition for multicolor laser marking according to Claim 2, wherein said white derived from foaming of said polymer.

4. The composition for multicolor laser marking according to Claim 1, wherein said polymer comprises a rubber-reinforced thermoplastic resin composed of a rubber-reinforced copolymerized resin obtained by polymerizing a vinyl-based monomer containing a (meth)acrylic acid ester in the presence of a rubbery polymer; or of a mixture of said rubber-reinforced copolymerized resin and a (co)polymer of a vinyl-based monomer.

5. The composition for multicolor laser marking according to Claim 1, wherein said polymer comprises a thermoplastic polymer and a thermosetting polymer, and wherein content of said thermosetting polymer is from 0.01 to 20 parts by mass with respect to 100 parts by mass of said thermoplastic polymer.

6. The composition for multicolor laser marking according to Claim 1, wherein said black substance is at least one type selected from the group consisting of carbon black, black titanium oxide and black iron oxide, and/or further comprising at least one type of functionality-imparting agent selected from the group consisting of a flame retardant, an antistatic agent, an antimicrobial agent, a filler and a metallic pigment, and
wherein content of said flame retardant is from 1 to 30 parts by mass, content of said antistatic agent is from 0.5 to

10 parts by mass, content of said antimicrobial agent is from 0.01 to 10 parts by mass, content of said filler is from 1 to 30 parts by mass and content of said metallic pigment is from 0.1 to 10 parts by mass, with respect to 100 parts by mass of said polymer.

**7.** A molded article being **characterized in** comprising said composition for multicolor laser marking according to Claim 1.

**8.** A laser marking method being **characterized in** comprising, irradiating the molded article according to Claim 7 with two or more laser beams having different energy levels to form markings having two or more different color tones.

**9.** The laser marking method according to Claim 8, wherein the difference between wavelength of low-energy laser beam and wavelength of high-energy laser beam is 100 nm or more.

**10.** The laser marking method according to Claim 9, wherein said wavelength of low-energy laser beam is 1,064 nm, and said wavelength of high-energy laser beam is 532 nm.

**11.** The laser marking method according to any one of Claims 8 to 10, wherein at least one place of the marked portion is foamed by irradiation.

**12.** The laser marking method according to any one of Claims 8 to 11, wherein said two or more different color tones are comprised of plurality of colors that comprise white and a chromatic color derived from said chromatic coloring agent.

**13.** The laser marking method according to Claim 12, wherein said white derived from foaming of said polymer.

**14.** The laser marking method according to any one of Claims 8 to 13, wherein said two laser beams having two different energy levels are radiated in different positions on said molded article.

**15.** A multicolor-marked molded article whereby two or more laser beams having different energy levels were irradiated onto the molded article to Claim 7 to form markings having two or more different color tones.

**16.** The multicolor-marked molded article according to Claim 15, wherein a plurality of colors that comprise white and a chromatic color derived from said chromatic coloring agent were developed by laser marking.

**17.** The multicolor-marked molded article according to Claim 16, wherein said white derived from foaming of said polymer.

**18.** The multicolor-marked molded article according to Claim 16, wherein at least one place of the marked portion is foamed.

**19.** The multicolor-marked molded article according to any one of Claims 15 to 18, wherein said two laser beams having to different energy levels are radiated in different positions on said molded article.

**Patentansprüche**

**1.** Zusammensetzung zum mehrfarbigen Lasermarkieren, welche zum Bilden von Markierungen mit zwei oder mehr unterschiedlichen Farbtönen durch Bestrahlen von zwei oder mehr Laserstrahlen mit unterschiedlichen Energieniveaus dient,
**gekennzeichnet durch** Umfassen eines chromatischen Färbemittels, einer schwarzen Substanz, welche **durch** Empfangen eines Laserstrahls selber abgereichert oder entfärbt wird, und eines Polymers;
wobei das chromatische Färbemittel zumindest eine Art eines Grundgerüsts umfasst, die aus der Gruppe ausgewählt ist, die aus einem Phthalocyaningrundgerüst, einem Diketopyrrolopyrrolgrundgerüst, einem Dioxazingrundgerüst, einem Chinacridongrundgerüst, einem Chinophthalongrundgerüst, einem Perylengrundgerüst und einem Metallkomplexgrundgerüst besteht, und einen exothermen Peak im Bereich von 360°C oder größer und 590°C oder weniger, wie **durch** differentialthermale Analyse gemessen, aufweist;
wobei der Gehalt des chromatischen Färbemittels von 0,001 bis 3 Masseteile bezüglich 100 Masseteilen des Polymers ist; und
wobei der Gehalt der schwarzen Substanz von 0,01 bis 2 Masseteile bezüglich 100 Masseteilen des Polymers ist.

2. Zusammensetzung zum mehrfarbigen Lasermarkieren nach Anspruch 1, wobei die zwei oder mehr unterschiedlichen Farbtöne von einer Mehrzahl an Farben umfasst sind, die Weiß und eine von dem chromatischen Färbemittel abgeleitete chromatische Farbe umfasst.

3. Zusammensetzung zum mehrfarbigen Lasermarkieren nach Anspruch 2, wobei das Weiß vom Schäumen des Polymers abgeleitet ist.

4. Zusammensetzung zum mehrfarbigen Lasermarkieren nach Anspruch 1, wobei das Polymer ein gummiverstärktes thermoplastisches Harz umfasst, das aus einem gummiverstärkten copolymerisierten Harz, das durch Polymerisieren eines einen (Meth)acrylsäureester enthaltenden vinylbasierten Monomers in der Gegenwart eines gummiartigen Polymers erhalten ist; oder aus einer Mischung des gummiverstärkten copolymerisierten Harzes und eines (Co)polymers eines vinylbasierten Monomers zusammengesetzt ist.

5. Zusammensetzung zum mehrfarbigen Lasermarkieren nach Anspruch 1, wobei das Polymer ein thermoplastisches Polymer und ein wärmehärtbares Polymer umfasst, und wobei der Gehalt des wärmehärtbaren Polymers von 0,01 bis 20 Masseteilen bezüglich 100 Masseteilen des thermoplastischen Polymers ist.

6. Zusammensetzung zum mehrfarbigen Lasermarkieren nach Anspruch 1, wobei die schwarze Substanz zumindest eine Art ist, die aus der Gruppe ausgewählt ist, die aus Kohlenstoffschwarz, schwarzem Titanoxid und schwarzem Eisenoxid besteht, und / oder ferner zumindest eine Art eines Funktionalität-verleihenden Mittels umfasst, das aus der Gruppe ausgewählt ist, die aus einem Flammhemmstoff, einem antistatischen Mittel, einem antimikrobillen Mittel, einem Füllstoff und einem metallischen Pigment besteht, und
wobei der Gehalt des Flammhemmstoffs von 1 bis 30 Masseteilen ist, der Gehalt des antistatischen Mittels von 0,5 bis 10 Masseteile ist, der Gehalt des antimikrobillen Mittels von 0,01 bis 10 Masseteile ist, der Gehalt des Füllstoffs von 1 bis 30 Masseteilen ist und der Gehalt des metallischen Pigments von 0,1 bis 10 Masseteile ist, bezüglich 100 Masseteilen des Polymers.

7. Geformter Gegenstand, **gekennzeichnet durch** Umfassen der Zusammensetzung zum mehrfarbigen Lasermarkieren nach Anspruch 1.

8. Lasermarkierungsverfahren, **gekennzeichnet durch** Umfassen des Bestrahlens des geformten Gegenstands nach Anspruch 7 mit zwei oder mehr Laserstrahlen mit unterschiedlichen Energieniveaus, um Markierungen mit zwei oder mehr unterschiedlichen Farbtönen zu bilden.

9. Lasermarkierungsverfahren nach Anspruch 8, wobei der Unterschied zwischen der Wellenlänge eines Niederenergielaserstrahls und der Wellenlänge eines Hochenergielaserstrahls 100 nm oder mehr ist.

10. Lasermarkierungsverfahren nach Anspruch 9, wobei die Wellenlänge des Niederenergielaserstrahls 1064 nm ist und die Wellenlänge des Hochenergielaserstrahls 532 nm ist.

11. Lasermarkierungsverfahren nach einem der Ansprüche 8 bis 10, wobei zumindest eine Stelle des markierten Anteils durch Bestrahlen geschäumt wird.

12. Lasermarkierungsverfahren nach einem der Ansprüche 8 bis 11, wobei die zwei oder mehr unterschiedlichen Farbtöne von einer Mehrzahl von Farben umfasst sind, die Weiß und eine von dem chromatischen Färbemittel abgeleitete chromatische Farbe umfasst.

13. Lasermarkierungsverfahren nach Anspruch 12, wobei das Weiß vom Schäumen des Polymers abgeleitet ist.

14. Lasermarkierungsverfahren nach einem der Ansprüche 8 bis 13, wobei die zwei Laserstrahlen mit zwei unterschiedlichen Energieniveaus an verschiedenen Positionen auf dem geformten Gegenstand bestrahlt werden.

15. Mehrfarbig markierter geformter Gegenstand, wobei zwei oder mehr Laserstrahlen mit unterschiedlichen Energieniveaus auf den geformten Gegenstand nach Anspruch 7 bestrahlt worden sind, um Markierungen mit zwei oder mehr unterschiedlichen Farbtönen zu bilden.

16. Mehrfarbig markierter geformter Gegenstand nach Anspruch 15, wobei eine Mehrzahl an Farben, die Weiß und eine von dem chromatischen Färbemittel abeleitete chromatische Farbe umfasst, durch Lasermarkierung entwickelt

worden sind.

**17.** Mehrfarbig markierter geformter Gegenstand nach Anspruch 16, wobei das Weiß vom Schäumen des Polymers abgeleitet ist.

**18.** Mehrfarbig markierter geformter Gegenstand nach Anspruch 16, wobei zumindest eine Stelle des markierten Anteils geschäumt ist.

**19.** Mehrfarbig markierter geformter Gegenstand nach einem der Ansprüche 15 bis 18, wobei die zwei Laserstrahlen mit unterschiedlichen Energieniveaus an verschiedenen Positionen auf dem geformten Artikel bestrahlt werden.

## Revendications

**1.** Composition pour marquage au laser multicolore, qui est destinée à former des marquages ayant deux ou plusieurs tons de différentes couleurs par l'irradiation de deux ou plusieurs faisceaux laser ayant différents niveaux d'énergie, étant **caractérisée en ce qu'**elle comprend un colorant chromatique, une substance noire qui est elle-même épuisée ou décolorée par la réception d'un faisceau laser, et un polymère ;
dans laquelle ledit colorant chromatique comprend au moins un type de squelette choisi dans le groupe constitué d'un squelette de phtalocyanine, d'un squelette de dicétopyrrolopyrrole, d'un squelette de dioxazine, d'un squelette de quinacridone, d'un squelette de quinophtalone, d'un squelette de pérylène et d'un squelette de complexe métallique et présente un pic exothermique dans la plage allant de 360°C à 590°C, tel que mesuré par une analyse thermique différentielle ;
dans laquelle la teneur dudit colorant chromatique varie de 0,001 à 3 parties en masse par rapport à 100 parties en masse dudit polymère ; et
dans laquelle la teneur de ladite substance noire varie de 0,01 à 2 parties en masse par rapport à 100 parties en masse dudit polymère.

**2.** Composition pour marquage au laser multicolore selon la revendication 1, dans laquelle lesdits deux ou plusieurs tons de différentes couleurs sont constitués d'une pluralité de couleurs qui comprennent le blanc et une couleur chromatique dérivée dudit colorant chromatique.

**3.** Composition pour marquage au laser multicolore selon la revendication 2, dans laquelle ledit blanc est dérivé du moussage dudit polymère.

**4.** Composition pour marquage au laser multicolore selon la revendication 1, dans laquelle ledit polymère comprend une résine thermoplastique renforcée par du caoutchouc composée d'une résine copolymérisée renforcée par du caoutchouc obtenue par la polymérisation d'un monomère à base de vinyle contenant un groupe d'ester d'acide (méth)acrylique en présence d'un polymère caoutchouteux ; ou d'un mélange de ladite résine copolymérisée renforcée par du caoutchouc et d'un (co)polymère d'un monomère à base de vinyle.

**5.** Composition pour marquage au laser multicolore selon la revendication 1, dans laquelle ledit polymère comprend un polymère thermoplastique et un polymère thermodurcissable, et dans laquelle la teneur dudit polymère thermodurcissable varie de 0,01 à 20 parties en masse par rapport à 100 parties en masse dudit polymère thermoplastique.

**6.** Composition pour marquage au laser multicolore selon la revendication 1, dans laquelle ladite substance noire est au moins un type choisi dans le groupe constitué du noir de carbone, de l'oxyde de titane noir et de l'oxyde de fer noir, et/ou comprenant en outre au moins un type d'agent conférant une fonctionnalité choisi dans le groupe constitué d'un agent ignifugeant, d'un agent antistatique, d'un agent antimicrobien, d'une charge et d'un pigment métallique, et dans laquelle la teneur dudit agent ignifugeant varie de 1 à 30 parties en masse, la teneur dudit agent antistatique varie de 0,5 à 10 parties en masse, la teneur dudit agent antimicrobien varie de 0,01 à 10 parties en masse, la teneur de ladite charge varie de 1 à 30 parties en masse et la teneur dudit pigment métallique varie de 0,1 à 10 parties en masse, par rapport à 100 parties en masse dudit polymère.

**7.** Article moulé étant **caractérisé en ce qu'**il comprend ladite composition pour marquage au laser multicolore selon la revendication 1.

**8.** Procédé de marquage au laser étant **caractérisé en ce qu'**il comprend le fait : d'irradier l'article moulé selon la

revendication 7 avec deux ou plusieurs faisceaux laser ayant différents niveaux d'énergie pour former des marquages ayant deux ou plusieurs tons de différentes couleurs.

**9.** Procédé de marquage au laser selon la revendication 8, dans lequel la différence entre la longueur d'onde d'un faisceau laser de faible énergie et la longueur d'onde d'un faisceau laser de haute énergie est supérieure ou égale à 100 nm.

**10.** Procédé de marquage au laser selon la revendication 9, dans lequel ladite longueur d'onde d'un faisceau laser de faible énergie est de 1064 nm, et ladite longueur d'onde d'un faisceau laser de haute énergie est de 532 nm.

**11.** Procédé de marquage au laser selon l'une quelconque des revendications 8 à 10, dans lequel au moins un endroit de la partie marquée est moussé par irradiation.

**12.** Procédé de marquage au laser selon l'une quelconque des revendications 8 à 11, dans lequel lesdits deux ou plusieurs tons de différentes couleurs sont constitués d'une pluralité de couleurs qui comprennent le blanc et une couleur chromatique dérivée dudit colorant chromatique.

**13.** Procédé de marquage au laser selon la revendication 12, dans lequel ledit blanc est dérivé du moussage dudit polymère.

**14.** Procédé de marquage au laser selon l'une quelconque des revendications 8 à 13, dans lequel lesdits deux faisceaux laser ayant deux différents niveaux d'énergie sont rayonnés dans différentes positions sur ledit article moulé.

**15.** Article moulé à marquage multicolore par lequel deux ou plusieurs faisceaux laser ayant différents niveaux d'énergie ont été rayonnés sur l'article moulé de la revendication 7 pour former des marquages ayant deux ou plusieurs tons de différentes couleurs.

**16.** Article moulé à marquage multicolore selon la revendication 15, dans lequel une pluralité de couleurs qui comprennent le blanc et une couleur chromatique dérivée dudit colorant chromatique ont été développées par marquage au laser.

**17.** Article moulé à marquage multicolore selon la revendication 16, dans lequel ledit blanc est dérivé du moussage dudit polymère.

**18.** Article moulé à marquage multicolore selon la revendication 16, dans lequel au moins un endroit de la partie marquée est moussé.

**19.** Article moulé à marquage multicolore selon l'une quelconque des revendications 15 à 18, dans lequel lesdits deux faisceaux laser ayant deux différents niveaux d'énergie sont rayonnés dans différentes positions sur ledit article moulé.

Fig. 1

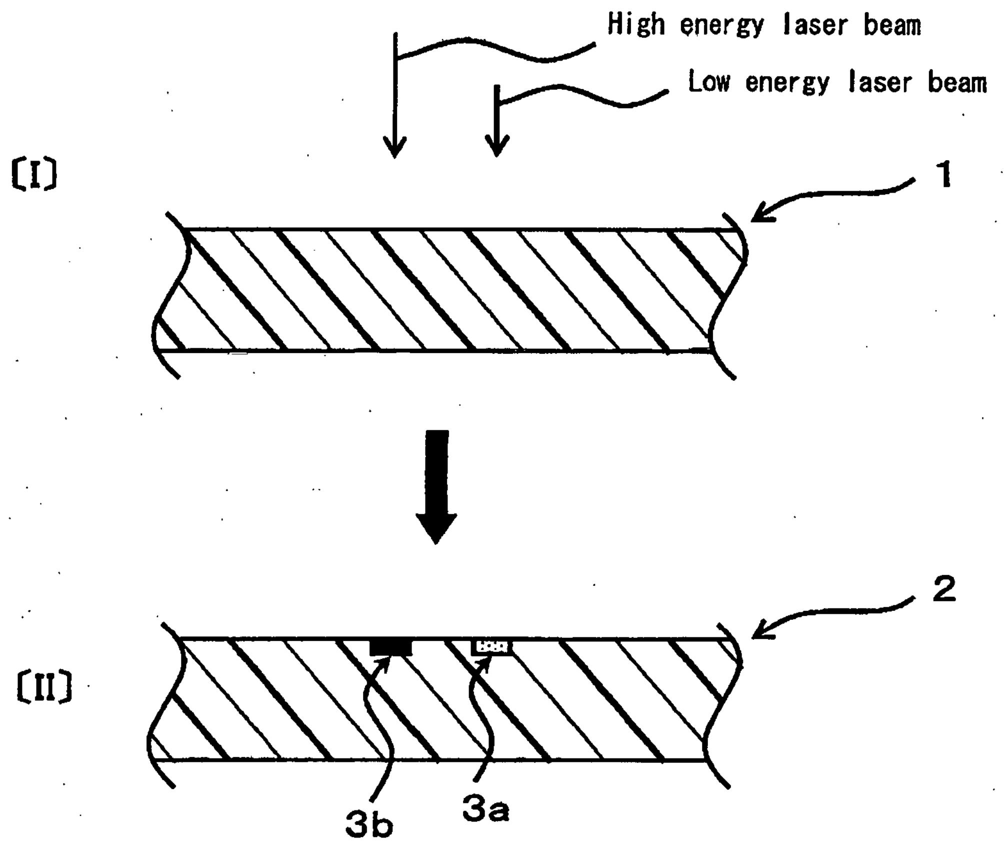
High energy laser beam
Low energy laser beam
〔I〕
1
〔II〕
2
3b
3a

Fig. 2

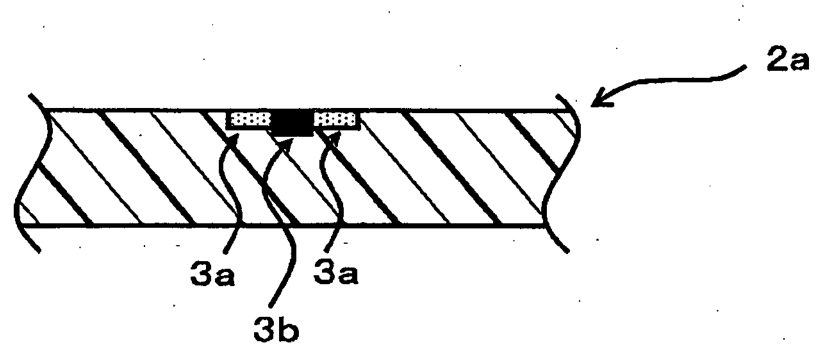
2a
3a
3a
3b

Fig. 3

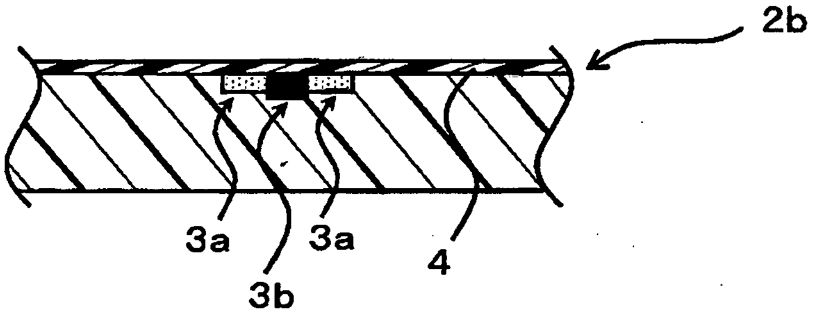
2b
3a
3a
3b
4

Fig. 4

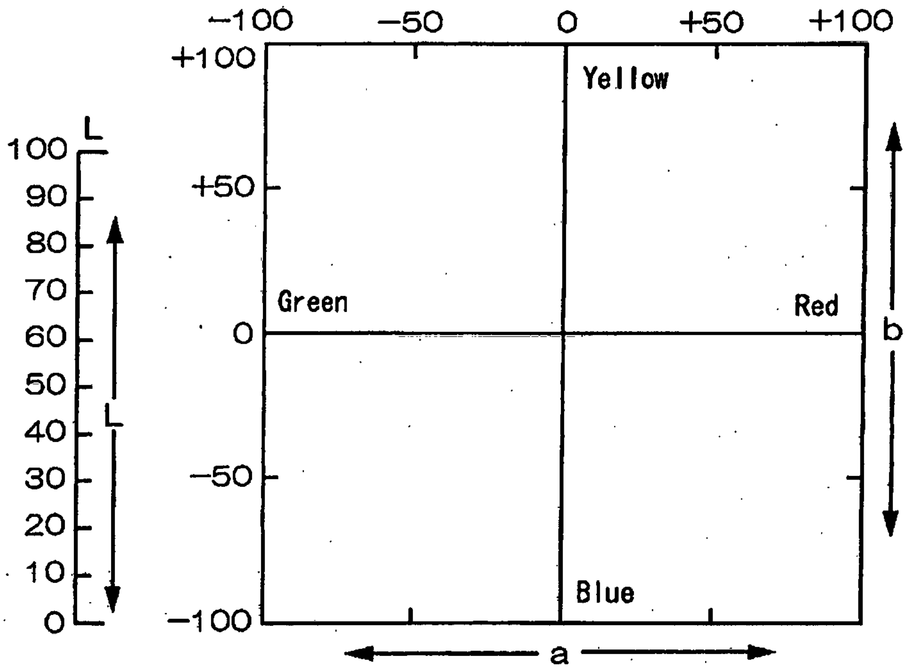
-100
-50
0
+50
+100
+100
+50
0
-50
-100
Yellow
Green
Red
Blue
L
100
90
80
70
60
50
40
30
20
10
0
L
b
a

**Fig. 5**

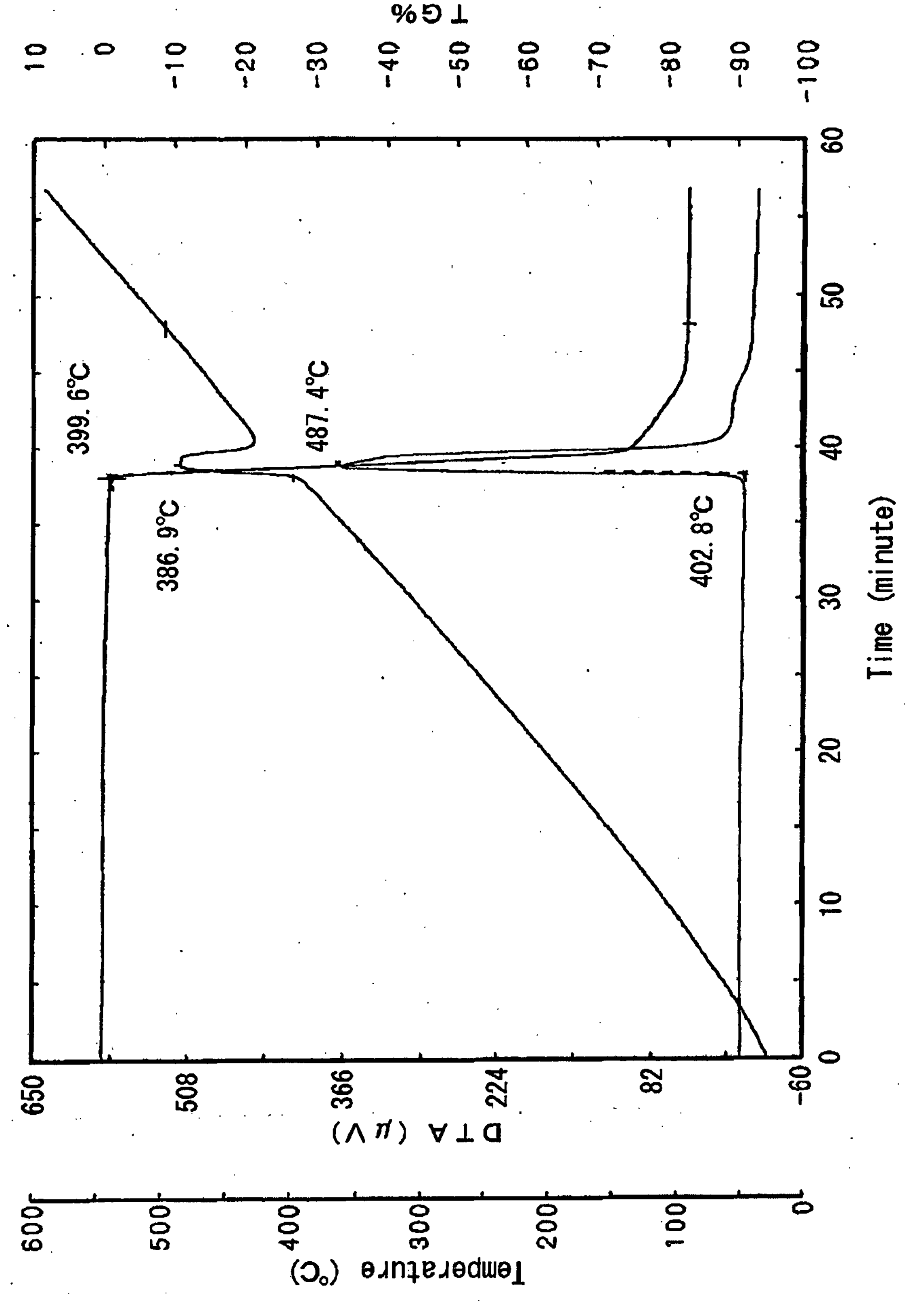
TG%
10
0
-10
-20
-30
-40
-50
-60
-70
-80
-90
-100
399.6°C
487.4°C
386.9°C
402.8°C
650
508
366
224
82
-60
DTA (μV)
600
500
400
300
200
100
0
Temperature (°C)
0
10
20
30
40
50
60
Time (minute)

Fig. 6

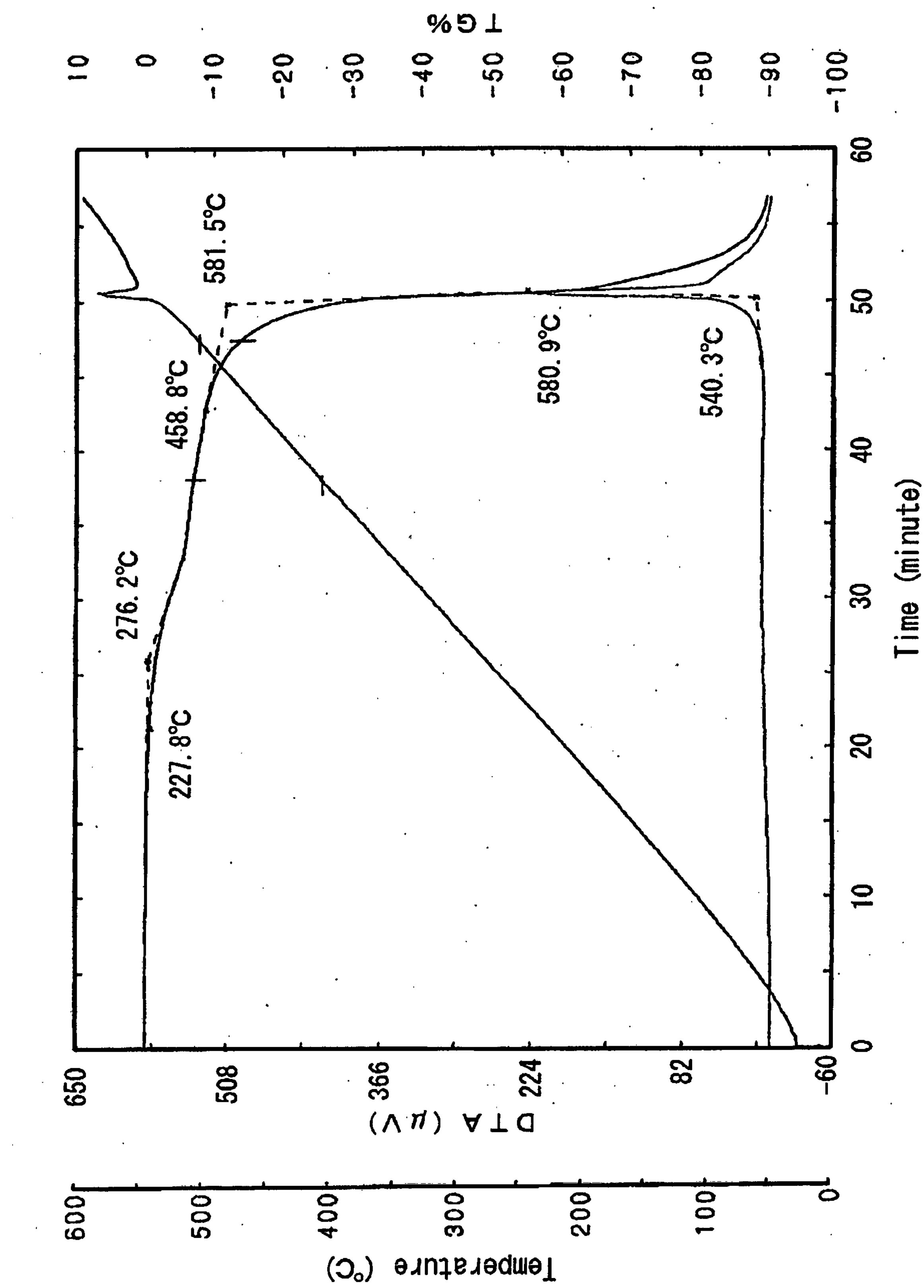
TG%
10
0
-10
-20
-30
-40
-50
-60
-70
-80
-90
-100
581.5°C
458.8°C
276.2°C
227.8°C
580.9°C
540.3°C
0
10
20
30
40
50
60
Time (minute)
DTA (μV)
650
508
366
224
82
-60
Temperature (°C)
600
500
400
300
200
100
0

Fig. 7

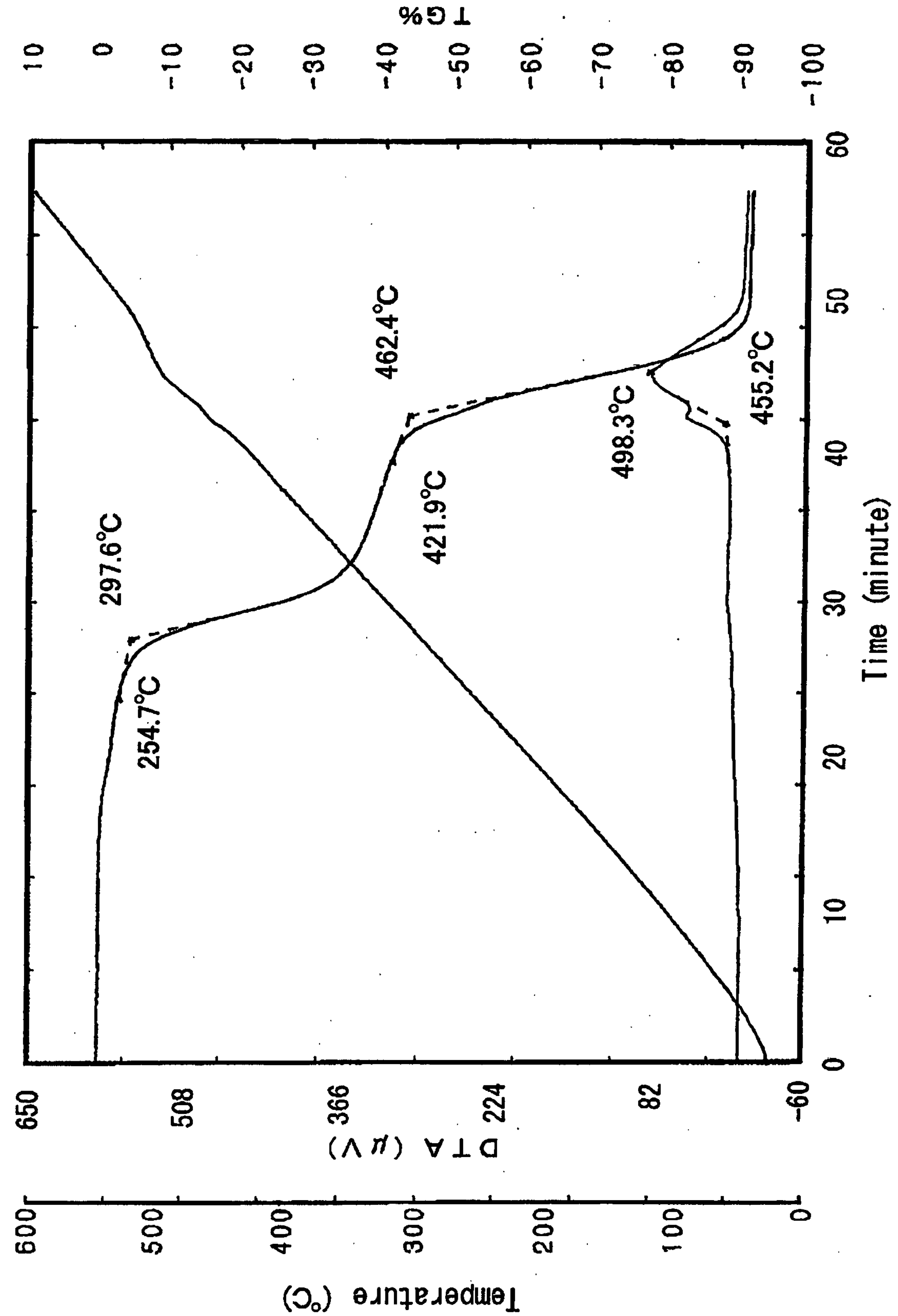
TG%
10
0
-10
-20
-30
-40
-50
-60
-70
-80
-90
-100
DTA (μV)
650
508
366
224
82
-60
Temperature (°C)
600
500
400
300
200
100
0
Time (minute)
0
10
20
30
40
50
60
297.6°C
254.7°C
462.4°C
421.9°C
498.3°C
455.2°C

Fig. 8

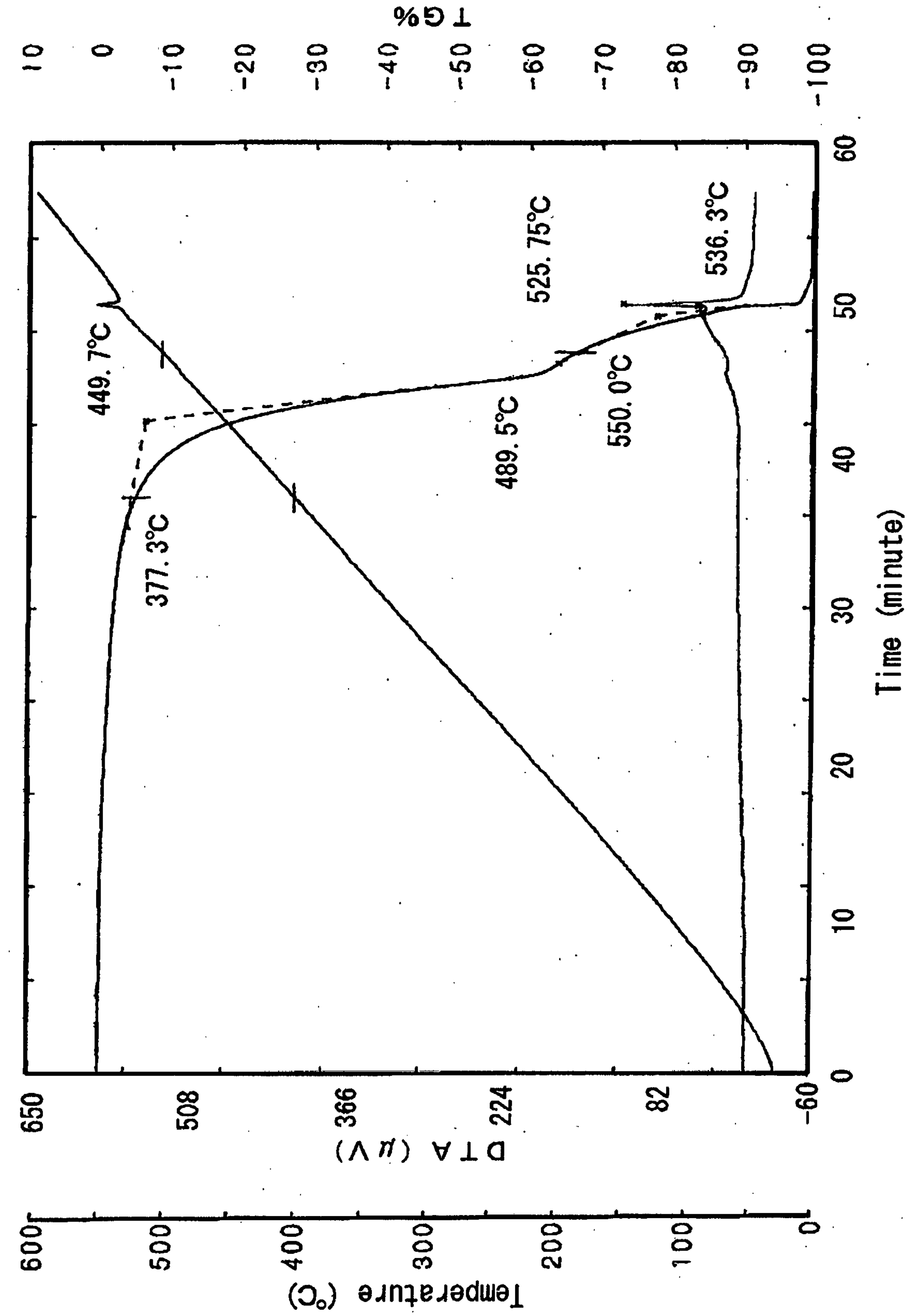
TG%
10
0
-10
-20
-30
-40
-50
-60
-70
-80
-90
-100
449. 7°C
525. 75°C
536. 3°C
489. 5°C
550. 0°C
377. 3°C
650
508
366
224
82
-60
DTA (μV)
600
500
400
300
200
100
0
Temperature (°C)
0
10
20
30
40
50
60
Time (minute)

**Fig. 9**

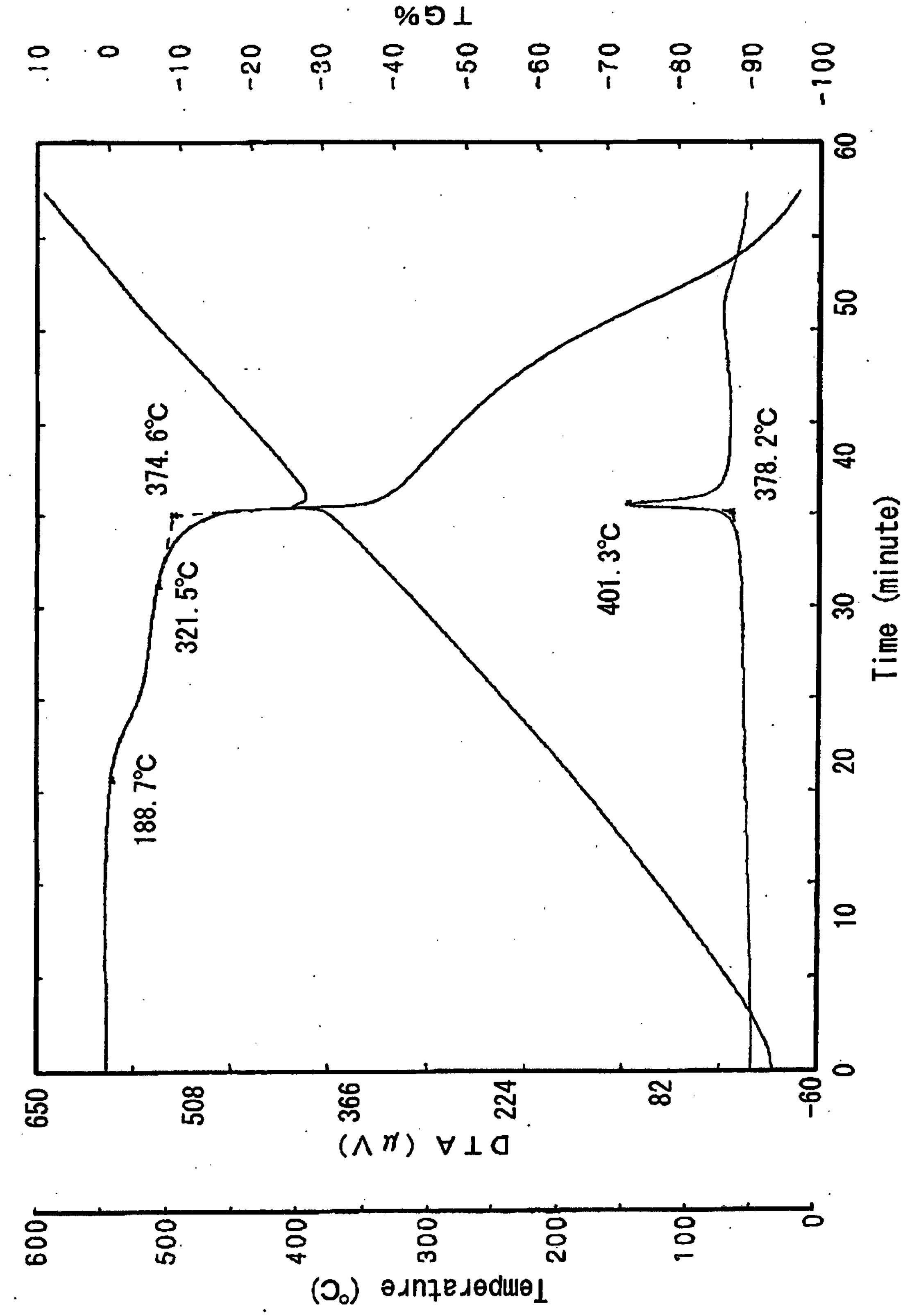
TG%
10
0
-10
-20
-30
-40
-50
-60
-70
-80
-90
-100
DTA (μV)
650
508
366
224
82
-60
Temperature (°C)
600
500
400
300
200
100
0
Time (minute)
0
10
20
30
40
50
60
188.7°C
321.5°C
374.6°C
401.3°C
378.2°C

**Fig. 10**

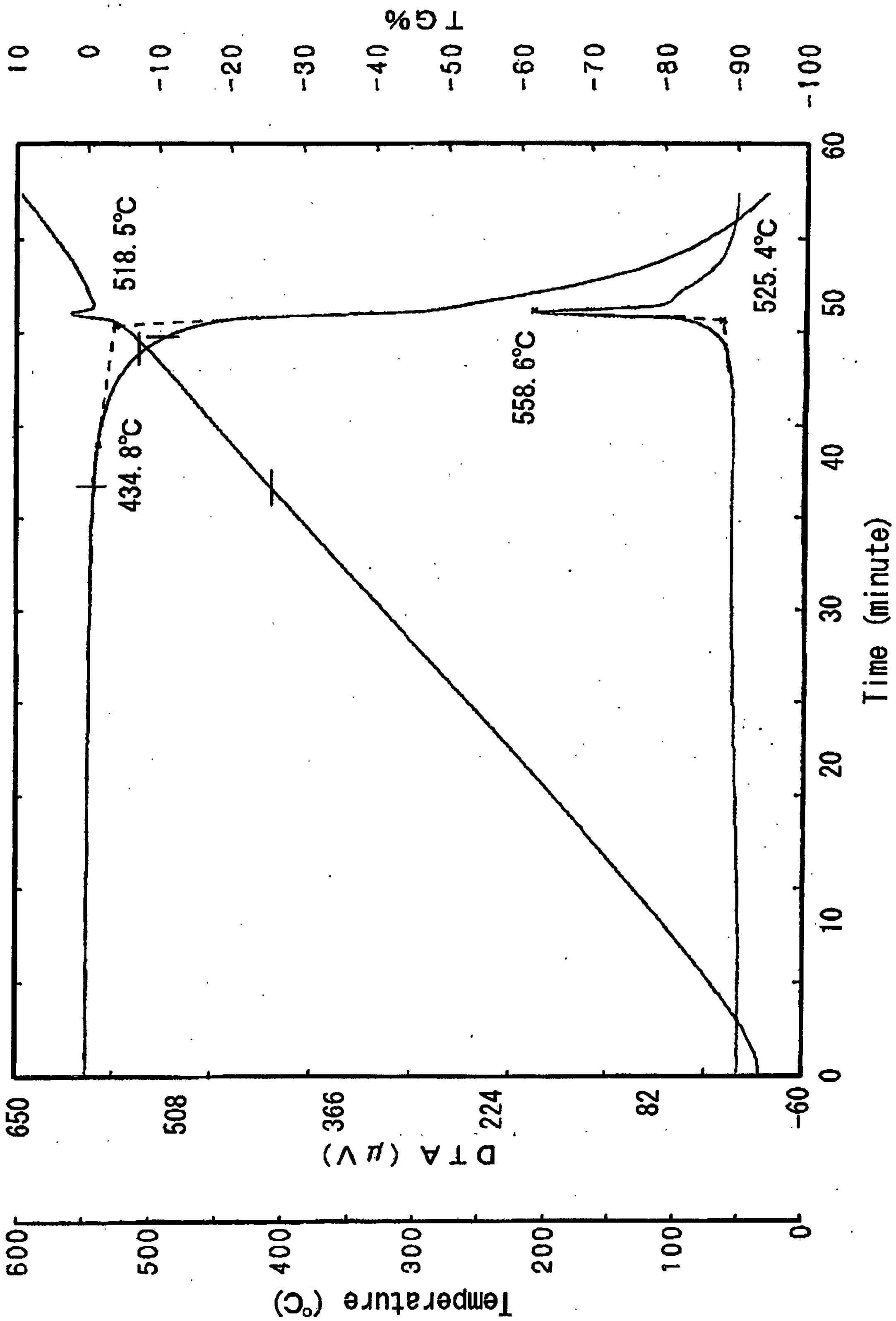
TG%
10
0
-10
-20
-30
-40
-50
-60
-70
-80
-90
-100
518.5°C
434.8°C
558.6°C
525.4°C
Time (minute)
0
10
20
30
40
50
60
DTA (μV)
650
508
366
224
82
-60
Temperature (°C)
600
500
400
300
200
100
0

Fig. 11

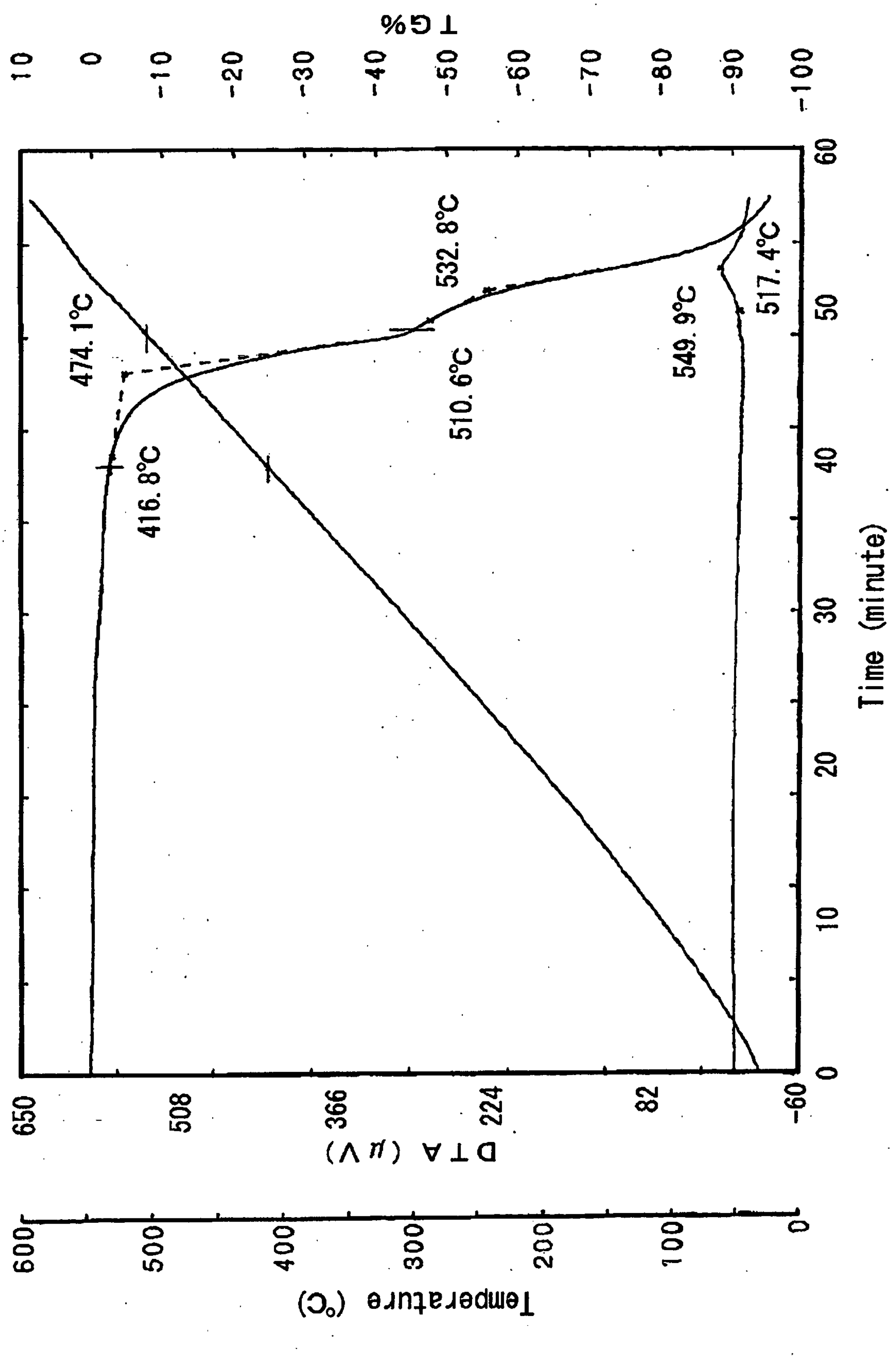

TG%
10
0
-10
-20
-30
-40
-50
-60
-70
-80
-90
-100
474.1°C
416.8°C
510.6°C
532.8°C
549.9°C
517.4°C
Time (minute)
0
10
20
30
40
50
60
DTA (μV)
650
508
366
224
82
-60
Temperature (°C)
600
500
400
300
200
100
0

Fig. 12

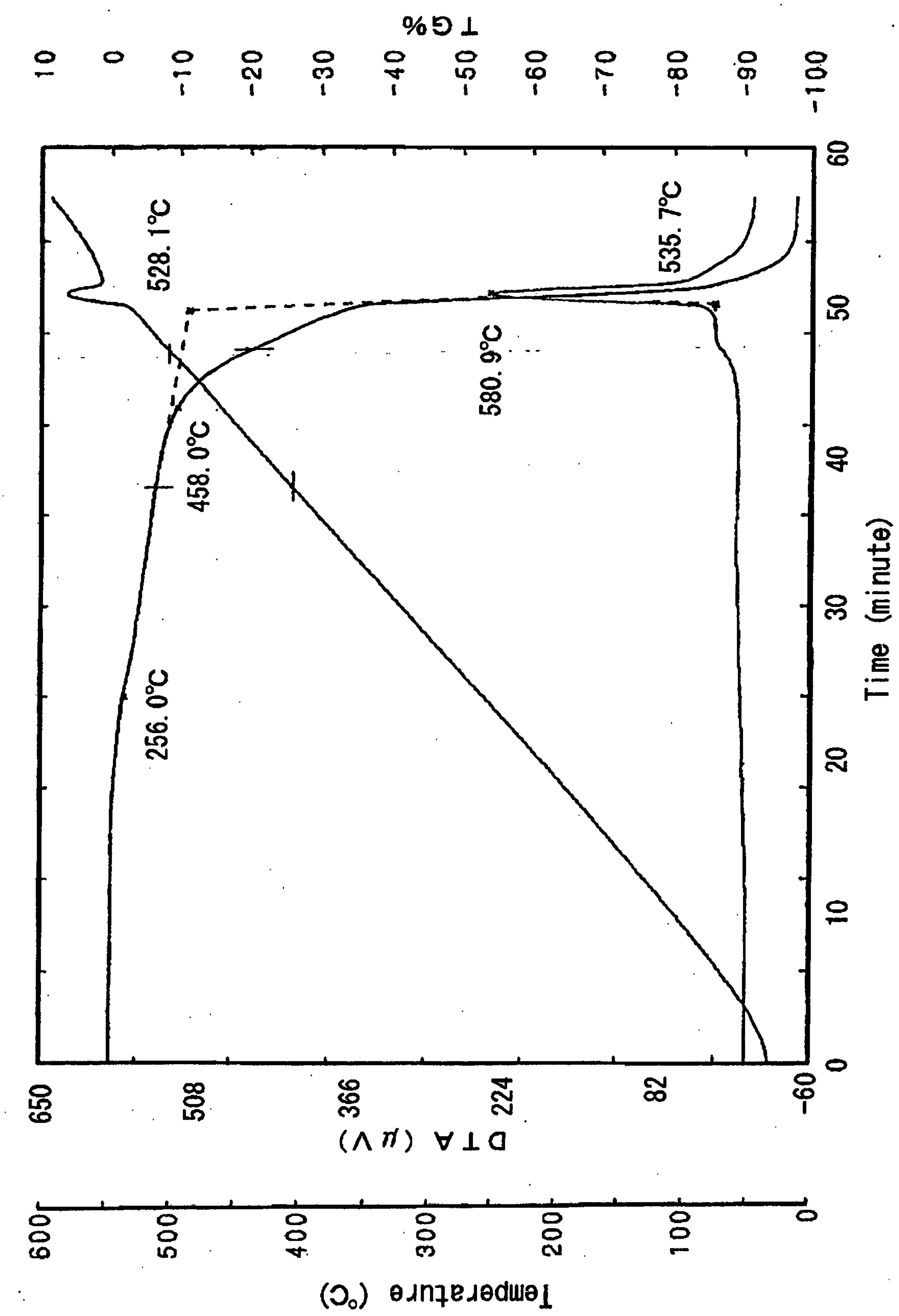
TG%
10
0
-10
-20
-30
-40
-50
-60
-70
-80
-90
-100
528.1°C
535.7°C
580.9°C
458.0°C
256.0°C
Time (minute)
0
10
20
30
40
50
60
DTA (μV)
650
508
366
224
82
-60
Temperature (°C)
600
500
400
300
200
100
0

**Fig. 13**

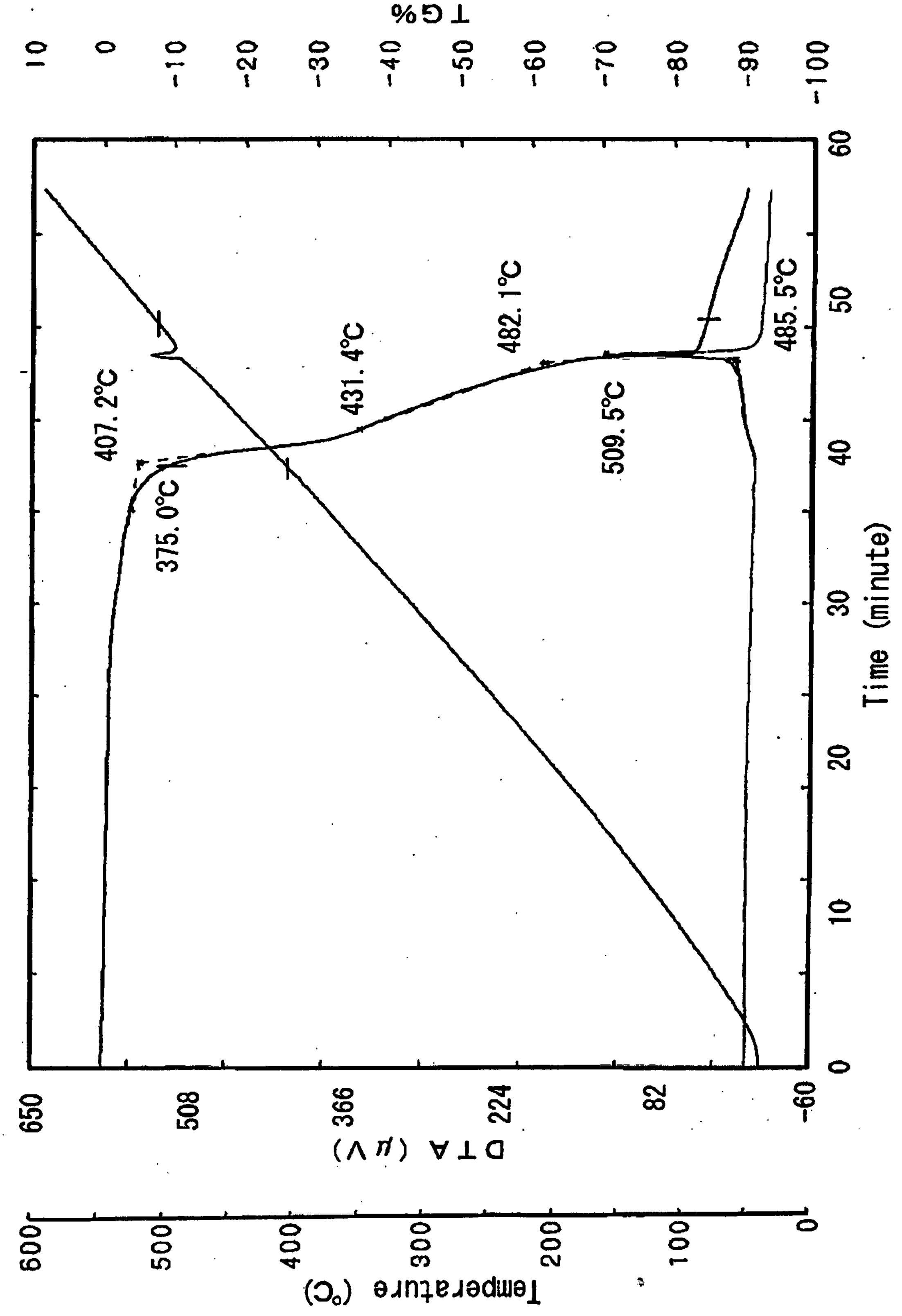
TG%
DTA (μV)
Temperature (°C)
Time (minute)
407.2°C
375.0°C
431.4°C
482.1°C
509.5°C
485.5°C

Fig. 14

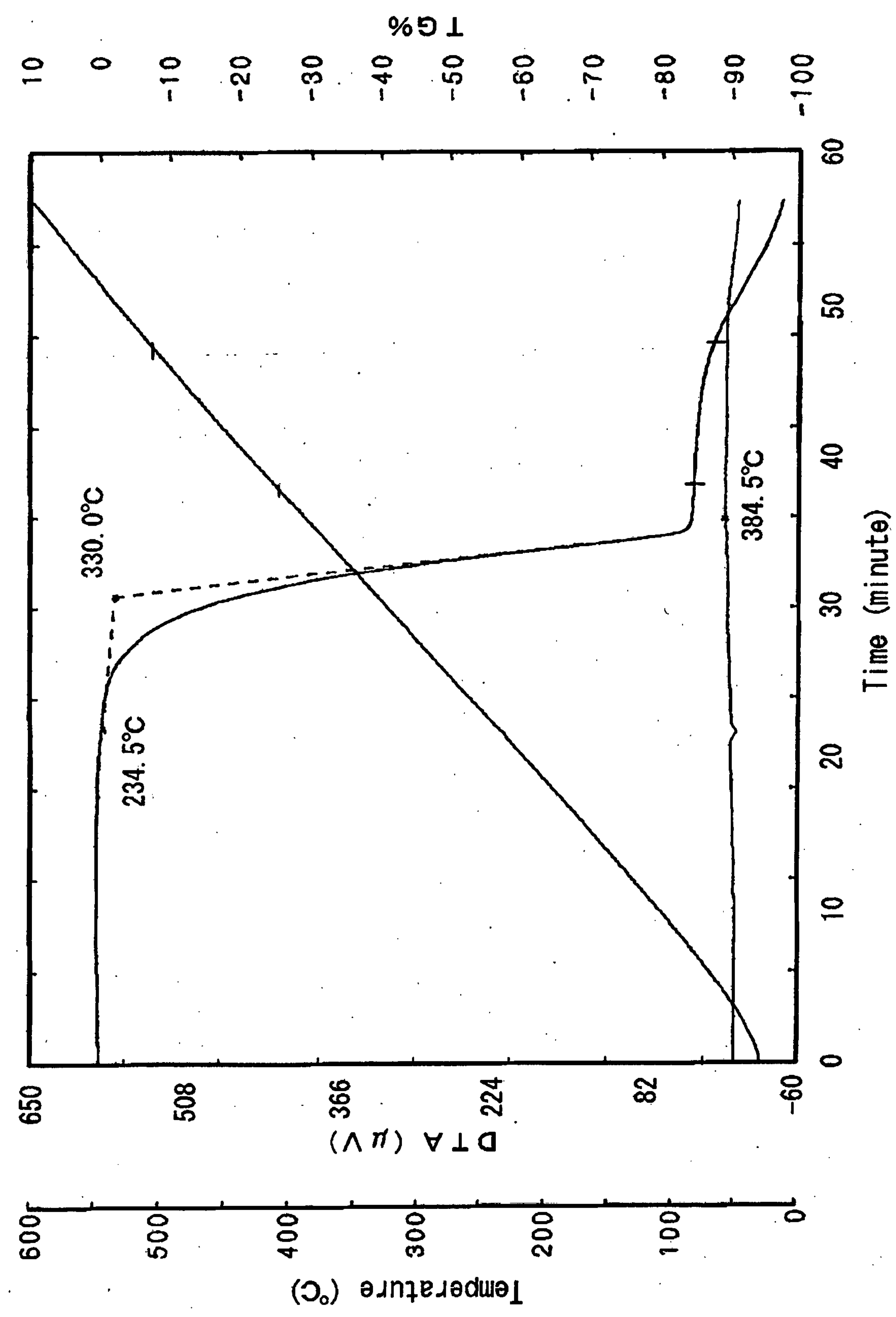

**F i g. 1 5**

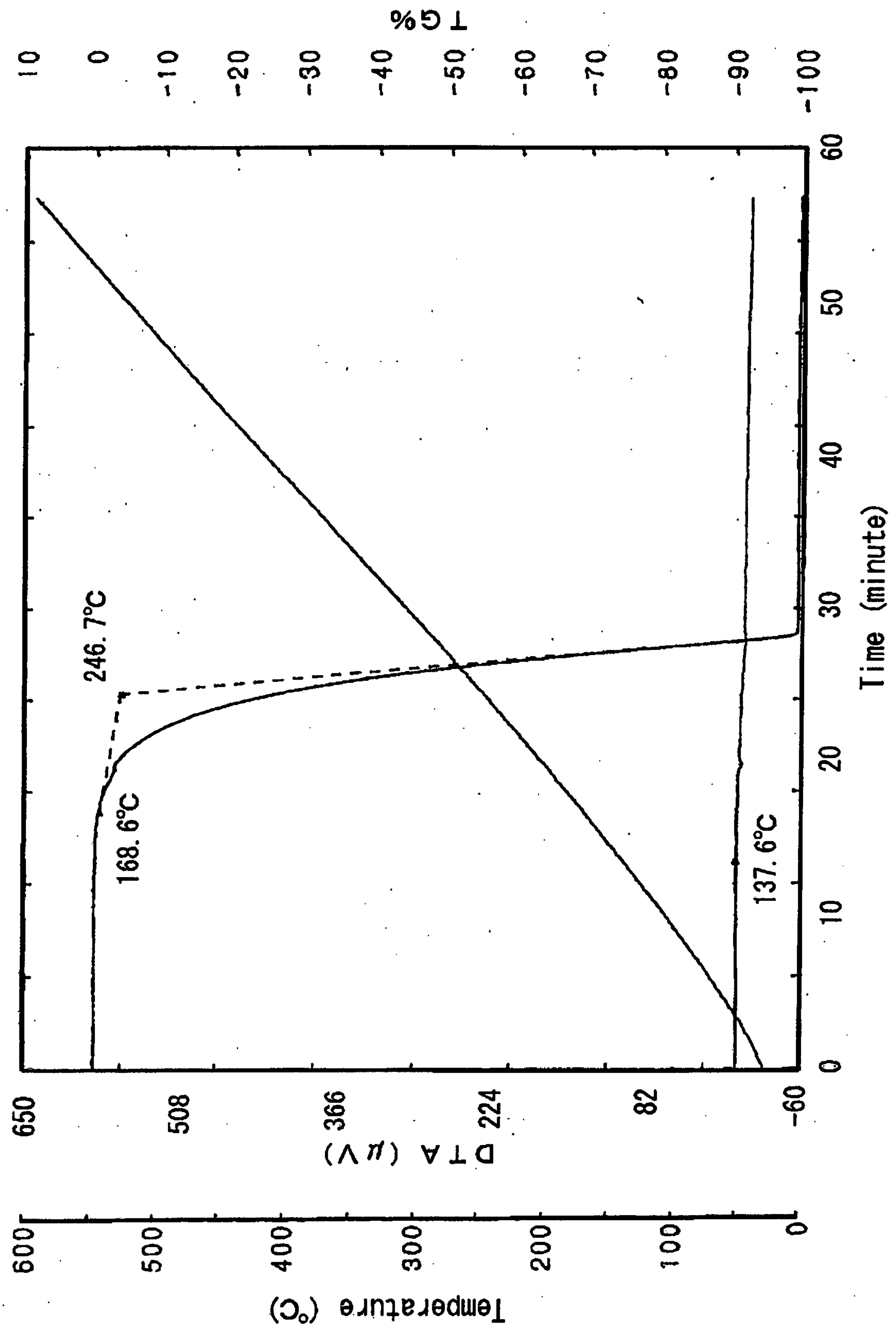
T G %
10
0
-10
-20
-30
-40
-50
-60
-70
-80
-90
-100
246. 7°C
168. 6°C
137. 6°C
0
10
20
30
40
50
60
Time (minute)
650
508
366
224
82
-60
D T A (μV)
600
500
400
300
200
100
0
Temperature (°C)

**Fig. 16**

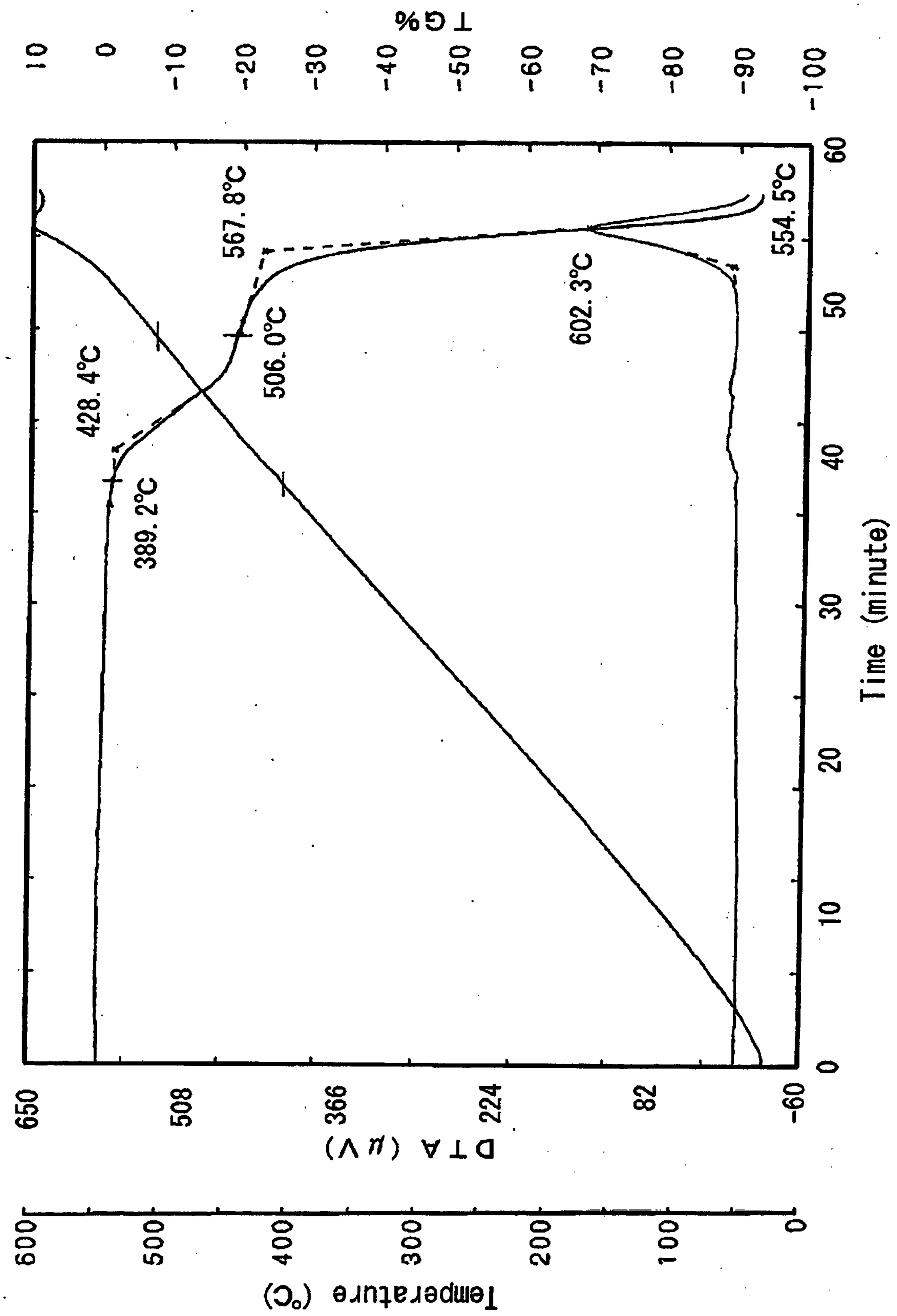
TG%
10
0
-10
-20
-30
-40
-50
-60
-70
-80
-90
-100
567.8°C
554.5°C
602.3°C
506.0°C
428.4°C
389.2°C
0
10
20
30
40
50
60
Time (minute)
650
508
366
224
82
-60
DTA (μV)
600
500
400
300
200
100
0
Temperature (°C)

Fig. 17

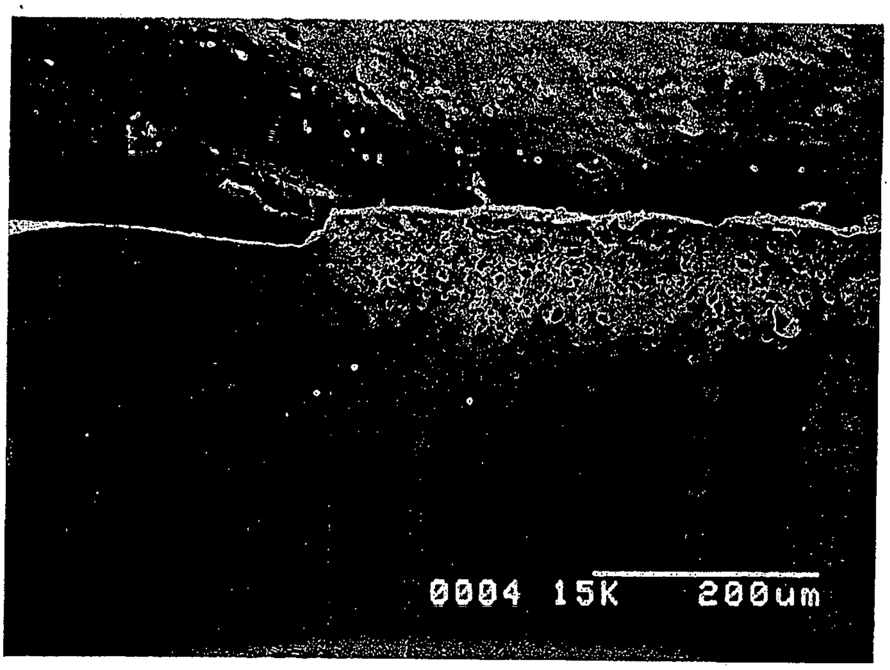


Fig. 18

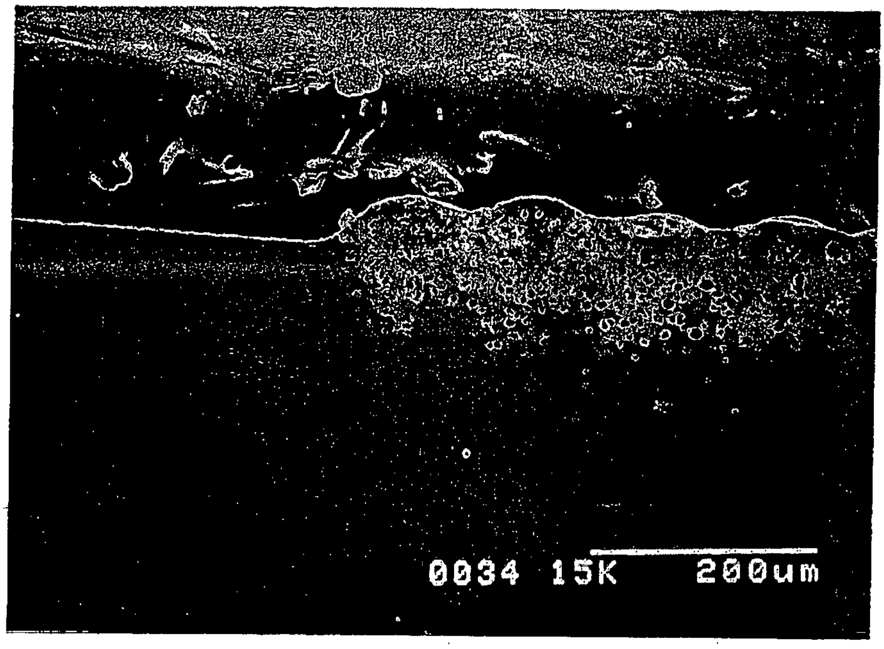

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0190997 A
- JP H0592657 A
- JP H06297828 A
- JP H08127175 A
- JP H07165979 A